# EUROPEAN PATENT SPECIFICATION

(11) **EP 4 327 706 B1**
(45) Date of publication and mention of the grant of the patent: **24.12.2025**
(21) Application number: 23192262.6
(22) Date of filing: 18.08.2023
(51) Int. Cl.: A47J 41/00, B65D 47/08, B65D 39/08, B65D 51/24, B65D 53/02, B65D 81/38

(54) **CAP UNIT AND BEVERAGE CONTAINER**
KAPPE UND GETRÄNKEBEHÄLTER
CAPUCHON ET RÉCIPIENT DE BOISSON

(30) Priority: 25.08.2022 JP 2022134115
(43) Date of publication of application: 28.02.2024
(73) Proprietor: Thermos K.K., Tsubame-shi Niigata (JP); Thermos L.L.C., Schaumburg, IL 60173 (US)
(72) Inventor: KIKUCHI, Shogo, Tsubame-shi (JP); MURATA, Takeshi, Tsubame-shi (JP)
(74) Representative: Barker Brettell LLP

(56) References cited:
- JP-A- 2020 083 331
- JP-B2- 6 509 783
- US-A1- 2022 002 036

## Description

### TECHINICAL FIELD

The present invention relates to a cap unit and beverage container.

### CONVENTIONAL TECHNOLOGY

Conventionally, a cap unit is known as a plug body that is detachably attached by screwing to a mouth/neck part of a container main body having an open top part. An annular ring member (handle part) that can be hung on a hand or the like is rotatably attached to the cap unit via a hinge (see Patent Document 1, for example). Furthermore, a configuration in which a ring member is erected in a fixed state (integrated) to the lid body of the cap unit is also known (see, for example, Non-patent Document 1).
The beverage container can be carried without gripping the container main body, by providing such a ring member, and passing a finger through the ring member or by hanging the ring member on a carabiner.

### PRIOR ART DOCUMENTS

### [Patent Documents]

Patent Document 1: Japanese Unexamined Patent Application 2020-83331 A discloses a portable beverage bottle which can open a cap member while having a double locked structure capable of performing a first lock and a second lock. The portable beverage bottle includes: a first lock member that holds a cap member for covering a bottle body in a closed state and performs a first lock; and a gate-shaped second lock member that engages the cap member held in the closed state by the first lock member in a standing attitude and performs a second lock. The portable beverage bottle is configured to swing the second lock member downward from the standing attitude to release the second lock, and press the first lock member by the second lock member being a drooping attitude by swinging downward to release the first lock. Patent Document 2: US 2022/002036 A1 discloses a rotary lid for a water container, which comprises a lid body, a rotary handle, and a suction nozzle, when the rotary handle and the suction nozzle are rested on the lid body, the sucking water inlet is not in communication with the connecting water inlet on the lid body; and when the suction nozzle rotates up by the rotary handle, the sucking water inlet on the suction nozzle is in communication with the connecting water inlet on the lid body. When the rotary handle is rotated up with only one hand, the sucking water inlet can be communicated with the connecting water inlet, then the sucking water inlet is opened, so that it is convenient for drinking; and, when the rotary handle is rotated down, the suction nozzle rotates together, then the sucking water inlet is not communicated with the connecting water inlet, so that the sucking water inlet is closed.. Patent Document 3: JP 6509783 B2 discloses a cap unit intended to prevent a lid body from being opened by improper operation. The cap unit comprises: a cap body which seals an upper opening section of a container body and has a faucet or a pour spout at an upper portion thereof; a lid body which is rotatably fixed to the cap body through a hinge section and opens or closes the faucet or the pour spout with the same energized by an energizing member installed on the hinge section in a direction to throw open the faucet or the pour spout; and a lid lock mechanism which locks up the lid body at a position to seal the faucet or the pour spout against energizing force of the energizing member. The lid lock mechanism has an operation button positioned above the lid body. A lock state of the lid body can be released by pushing down the operation button after sliding the operation button toward the hinge section. Then, the lid body can be rotated in a direction to open the same with the energization by the energizing member.

### [Non-Patent Documents]

[Non-patent Document 1] "[Press Release] Tiger Custom Bottle New Lineup MCZ Type Released on Tuesday, July 6, 2021", [online], July 6, 2021, Tiger Thermos Co., Ltd., [Searched on July 6, 2021], Internet <URL : https://www.tiger.jp/news/press_release/pr_210706_01.html> SUMMARY OF THE INVENTION PROBLEM TO BE SOLVED BY THE INVENTION

As in Non-patent Document 1, with a structure in which a ring member is fixed to the lid body and rises upward, the vertical dimension is bulky, so there is tendency to be obstructive when carrying the beverage container in a bag. In this regard, if the ring member is rotatable around the hinge as in Patent Document 1, the bulkiness of the vertical dimension can be suppressed when the ring member is folded (stored state), and thus compactness is easily achieved and convenience is enhanced.

However, for example, when the beverage container is placed in an inverted position or when centrifugal force acts on the beverage container, the ring member in the stored state unintentionally rotates around the hinge and becomes an open condition (open state). In this case, there is an effect when the beverage container is stored in a bag or the like, or when the opening/closing operation is performed, which is inconvenient.

The present invention has been made in view of the above circumstances, and an object of the present invention is to provide a cap unit and a beverage container that can suppress the ring member in a stored state from being unintentionally placed in an open state, while enhancing convenience by making the ring member rotatable around the hinge.

### MEANS FOR SOLVING THE PROBLEM

Therefore, the present invention relates to a cap unit as defined in claim 1.

According to a second aspect of the present invention, a beverage container as defined in claim 7 is provided.

### EFFECT OF THE INVENTION

The present invention provides a cap unit and a beverage container that enhances convenience by making the ring member rotatable around the hinge, and suppressing problems where the ring member in the stored state is unintentionally placed in an open state, or where the lid body is unintentionally closed and made to contact with the face or the like.

### BRIEF DESCRIPTION OF THE DRAWINGS

FIG. 1 is a perspective view depicting a beverage container according to a first embodiment which is not part of the present invention;
FIG. 2 is a cross-sectional view depicting a beverage container which is not part of the present invention;
FIG. 3 is a cross-sectional view depicting a portion of the beverage container which is not part of the present invention, in a state in which the ring member is in a stored state;
FIG. 4 is a cross-sectional view depicting a portion of the beverage container which is not part of the present invention, in a state in which the ring member is in an open state;
FIG. 5 is a perspective view depicting a portion of the beverage container which is not part of the present invention;
FIG. 6 is a partial cross-sectional view depicting a portion of the beverage container which is not part of the present invention;
FIG. 7 is an exploded perspective view depicting a cap unit which is not part of the present invention;
FIG. 8 is an exploded perspective view depicting a cap unit which is not part of the present invention;
FIG. 9 is a perspective view depicting a portion of the cap main body and the cap bearing which do not constitute part of the present invention;
FIG. 10 is a perspective view depicting the beverage container according to a second embodiment which is part of the present invention;
FIG. 11 is a cross-sectional view depicting a portion of the beverage container with the lid body in a closed state (closed position) and the ring member in a stored state;
FIG. 12 is a cross-sectional view depicting a portion of the beverage container with the lid body in an open state (open position) and the ring member in an open state;
FIG. 13 is a side surface view depicting a portion of the beverage container with the lid body in a closed state (closed position) and the ring member in an open state;
FIG. 14 is a perspective view depicting a portion of a beverage container;
FIG. 15 is a partial cross-sectional view (vertical cross-sectional view) depicting a portion of the beverage container;
FIG. 16 is a partial cross-sectional view (horizontal cross-sectional view) depicting a portion of the beverage container.
FIG. 17 is an exploded perspective view depicting the cap unit;
FIG. 18 is an exploded perspective view depicting the cap unit;
FIG. 19 is a perspective view depicting a shaft cover of a first hinge (hinge);
FIG. 20 is a perspective view depicting a portion of the cap main body and the cap bearing part;
FIG. 21 is a perspective view depicting a portion of the cap main body and the cap bearing part;
FIG. 22 is a perspective view depicting a portion of the ring member and the ring bearing part;
FIG. 23 is a perspective view depicting the beverage container according to a third embodiment which is part of the present invention;
FIG. 24 is a cross-sectional view depicting a portion of the beverage container with the lid body in a closed state (closed position) and the ring member in a stored state;
FIG. 25 is a perspective view depicting the cap unit with the lid body in a closed state (closed position) and the ring member in an open state;
FIG. 26 is a perspective view depicting the cap unit with the lid body in a open state (open position) and the ring member in a stored state;
FIG. 27 is a partial cross-sectional view (vertical cross-sectional view) depicting a cap unit;
FIG. 28 is a perspective view depicting a portion of the lid body of the cap unit according to a variation of the third embodiment which constitutes part of the present invention;
FIG. 29 is a perspective view depicting the cap unit of a variation of the third embodiment which constitutes part of the present invention, with the lid body in a closed state (closed position) and the ring member in an open state;
FIG. 30 is a perspective view depicting a portion of the beverage container according to a fourth embodiment which constitutes part of the present invention;
FIG. 31 is a cross-sectional view depicting a portion of the beverage container with the lid body in a closed state (closed position) and the ring member in a stored state;
FIG. 32 is a perspective view depicting a portion of the beverage container with the lid body in a closed state (closed position) and the ring member in an open state;
FIG. 33 is a perspective view depicting a portion of the beverage container with the lid body in a open state (open position) and the ring member in a stored state;
FIG. 34 is a partial cross-sectional view (vertical cross-sectional view) depicting a portion of the beverage container;
FIG. 35 is a perspective view depicting a portion of the beverage container according to a fifth embodiment which constitutes part of the present invention;
FIG. 36 is a cross-sectional view depicting a portion of the beverage container with the lid body in a closed state (closed position) and the ring member in a stored state;
FIG. 37 is a perspective view depicting a portion of the beverage container with the lid body in a closed state (closed position) and the ring member in a stored state.

### DESCRIPTION OF THE PREFERRED EMBODIMENTS

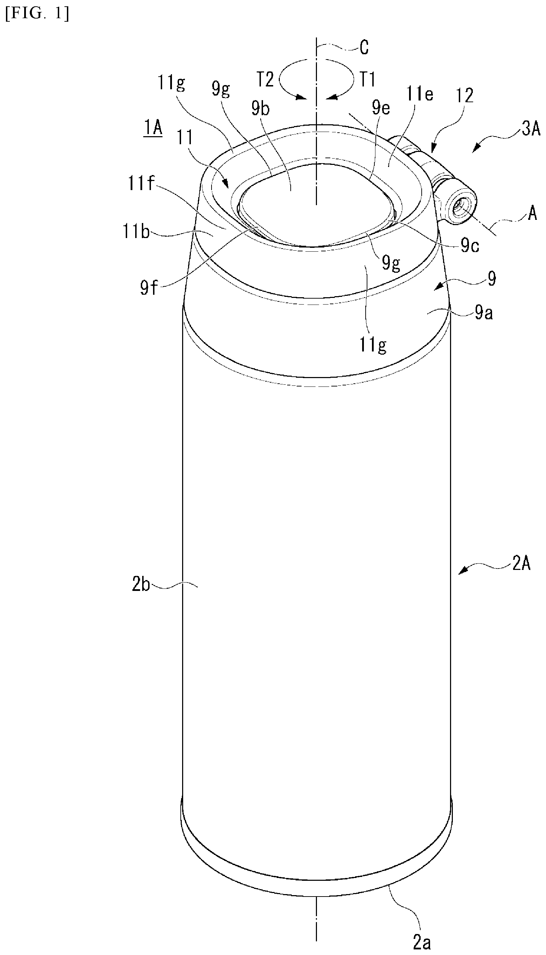

<First Embodiment> A cap unit 3A according to a first embodiment which is not part of the present invention and a beverage container 1A including the cap unit will be described with reference to FIG. 1 to FIG. 9. Note that in the following description, the cap unit 3A may be simply referred to as a cap, and the beverage container 1A may be simply referred to as a container.

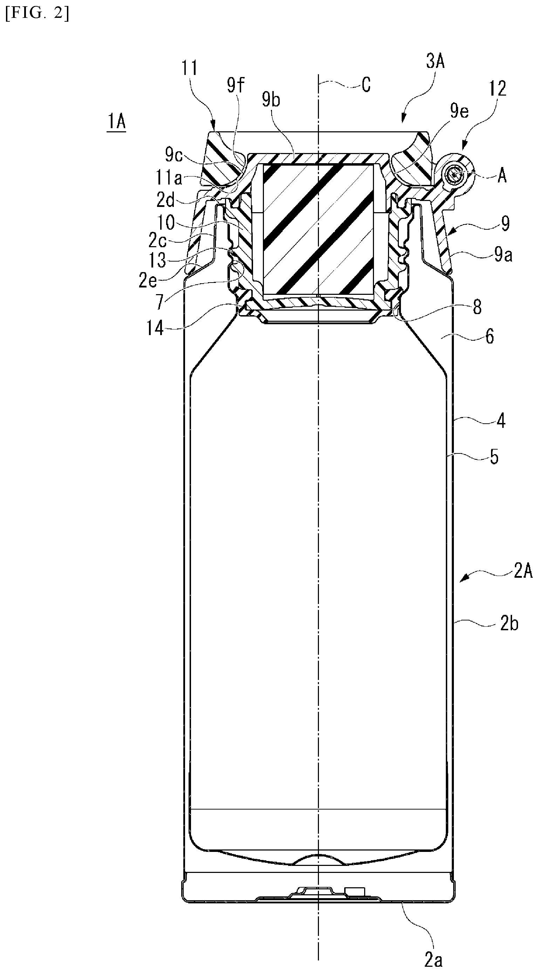

As depicted in FIG. 1 and FIG. 2, the beverage container 1A of the present embodiment includes a cap unit 3A and a cylindrical container main body with bottom 2A to which the cap unit 3A is attached. The cap unit 3A is detachably attached by screwing to a mouth/neck part 2c, which is the opening of the container main body 2A.

The cap unit 3A includes a cylindrical cap main body having a top wall (top wall), or in other words, a capped cylindrical cap main body 9, an inner plug part 10 fixed to the cap main body 9, a water blocking packing 14 for sealing a space between the container main body 2A and the cap main body 9, an annular ring member 11, and a hinge 12 for connecting the ring member 11 to the cap main body 9 so as to be rotatable around the hinge central axis A.

The cap unit 3A and the container main body 2A are arranged to be mutually coaxial around the central axis C of the cap unit 3A.

With the present embodiment, the direction in which the central axis C extends is referred to as the vertical direction. In the vertical direction, the direction from the bottom surface part 2a of the container main body 2A to the top wall part 9b of the cap main body 9 is referred to as the upper side, and the direction from the top wall part 9b to the bottom surface part 2a is referred to as the lower side.

A direction perpendicular to the central axis C is referred to as the radial direction. In the radial directions, the direction toward the central axis C is referred to as the radial inner side or simply the inner side, and the direction away from the central axis C is referred to as the radial outer side or simply the outer side.

Furthermore, in the radial direction, the direction passing through the hinge 12 and the central axis C is referred to as the front-rear direction. In the front-rear direction, the direction from the hinge 12 toward the central axis C is referred to as the front side, and the direction from the central axis C to the hinge 12 is referred to as the rear side.

In addition, in the radial direction, the direction orthogonal to the front-rear direction is referred to as the left-right direction. As depicted in FIG. 2, when the beverage container 1A is in an upright orientation in which the top wall part 9b of the cap main body 9 faces upward in the vertical direction, the direction toward the left in the left-right direction is referred to as the left side, and the direction toward the right is referred to as the right side. The orientation in which the top wall part 9b of the cap main body 9 faces downward in the vertical direction is referred to as an inverted orientation.

The direction of rotation around the central axis C is referred to as the circumferential direction. The circumferential direction corresponds to the direction (thread direction) in which the cap unit 3A and the container main body 2A are screwed together. As depicted in FIG. 1, a first side T1 in the circumferential direction corresponds to the tightening side in the screwing direction, and a second side T2 in the circumferential direction corresponds to the loosening side in the screwing direction (unscrewing direction). Therefore, in the present embodiment, the first side T1 in the circumferential direction may be referred to as the tightening side T1 in the circumferential direction, and the second side T2 in the circumferential direction may be referred to as the loosening side T2 in the circumferential direction.

More specifically, in a top view of the beverage container 1A as seen from above, the first side (tightening side) T1 in the circumferential direction is the clockwise direction around the central axis C, and the second side (loosening side) T2 in the circumferential direction is the counterclockwise direction around the central axis C.

Note that the central axis C is the central axis of the cap unit 3A and the central axis of the mouth/neck part 2C of the beverage container 1A. The central axis C may be referred to as a cap central axis C or the container central axis C in order to distinguish it from the hinge central axis A.

The hinge central axis A of the hinge 12 is provided on the rear side of the central axis C. The central axis C and the hinge central axis A are twisted relative to each other.

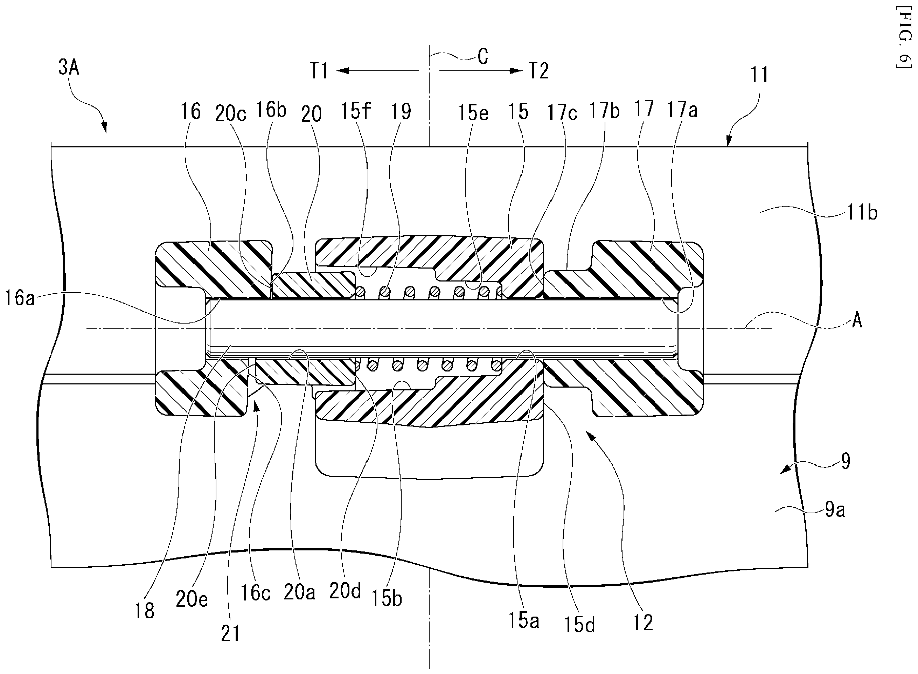

The direction in which the hinge central axis A extends is referred to as the hinge axial direction. The hinge axial direction corresponds to the left-right direction. A first side of the hinge axial direction corresponds to the right side, and a second side corresponds to the left side. The hinge central axis A extends in a tangential direction of a virtual circle (not depicted) centered on the central axis C. Therefore, the first side in the hinge axial direction corresponds to the tightening side T1 in the circumferential direction, and the second side in the hinge axial direction corresponds to the loosening side T2 in the circumferential direction (see FIG. 6).

A direction orthogonal to the hinge central axis A is referred to as a hinge radial direction. In the hinge radial direction, the direction toward the hinge central axis A is referred to as the inner side in the hinge radial direction, and the direction away from the hinge central axis A is referred to as the outer side in the hinge radial direction.

The direction of rotation around the hinge central axis A is referred to as the hinge circumferential direction.

As depicted in FIG. 2, the beverage container 1A can keep the beverage (liquid content, liquid) contained in the container main body 2A warm or cold if the container main body 2A has a vacuum insulating structure. The container main body 2A has a cylindrical shape with bottom that is open on an upper part. Contents other than beverages may be stored in the container main body 2A.

Specifically, the container main body 2A is configured as a double structure having a cylindrical outer container with bottom 4 and an inner container 5 made of, for example, stainless steel, that are mutually joined at an opening base part in a state where the inner container 5 is stored inside the outer container 4.

Furthermore, a vacuum heat insulating layer 6 is provided between the outer container 4 and the inner container 5. The vacuum heat insulating layer 6 can be formed, for example, by plugging a degassing hole provided in the center part of the bottom surface of the outer container 4 in a chamber evacuated (drawn vacuum) to a high degree of vacuum.

The container main body 2A includes a substantially disk-shaped bottom surface 2a, a substantially cylindrical trunk part 2b having a bottom end part connected to the outer peripheral part of the bottom surface part 2a, and a mouth/neck part 2c having a smaller diameter than the trunk part 2b, provided above the trunk body 2b.

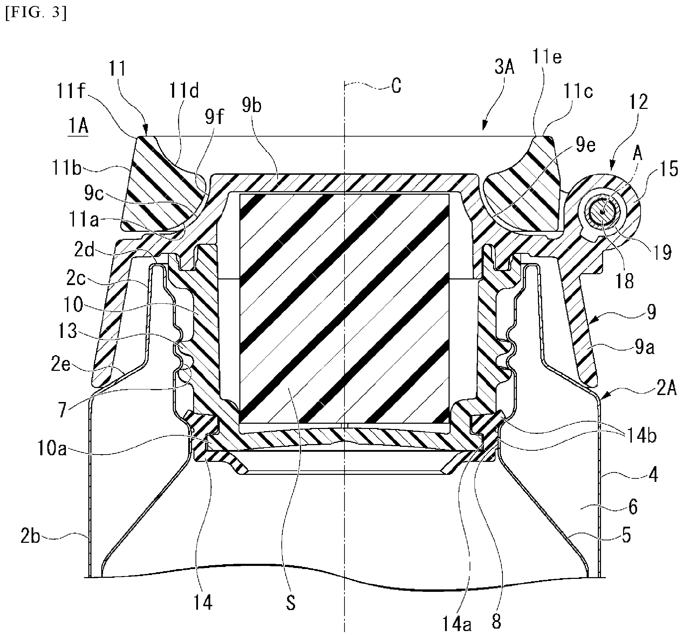

The inner peripheral part of the mouth/neck part 2c has a smaller diameter than the inner peripheral surface of the trunk part 2b. An upper end part of the mouth/neck part 2c is opened in a circular shape as an upper opening part 2d of the container main body 2A. As depicted in FIG. 3, the mouth/neck part 2c has a female screw part 7, a protruding part 8, and a shoulder part 2e.

The female screw part 7 is provided on the inner peripheral part of the mouth/neck part 2c.

The protruding part 8 is provided on the inner peripheral part of the mouth/neck part 2c and positioned below the female screw part 7. The protruding part 8 protrudes radially inward from the inner peripheral surface of the mouth/neck part 2c and extends over the entire circumference in the circumferential direction. The protruding part 8 has an annular shape centered around the central axis C and protrudes most inwardly in the mouth/neck part 2c.

The shoulder part 2e is provided on the outer peripheral part of the mouth/neck part 2c. The shoulder part 2e has a tapered shape with a diameter that decreases toward the upper side. a portion of the mouth/neck part 2c located above the shoulder part 2e has a substantially cylindrical shape extending in the vertical direction.

Note that as depicted in FIG. 1, the beverage container 1A of the present embodiment has a substantially cylindrical external shape as a whole, but the external shape of the beverage container 1A is not particularly limited, and it is possible to make appropriate changes in accordance with the size, design, and the like. Furthermore, the outer surface (top surface) of the container main body 2A, cap main body 9, and ring member 11 may be painted, printed, or the like.

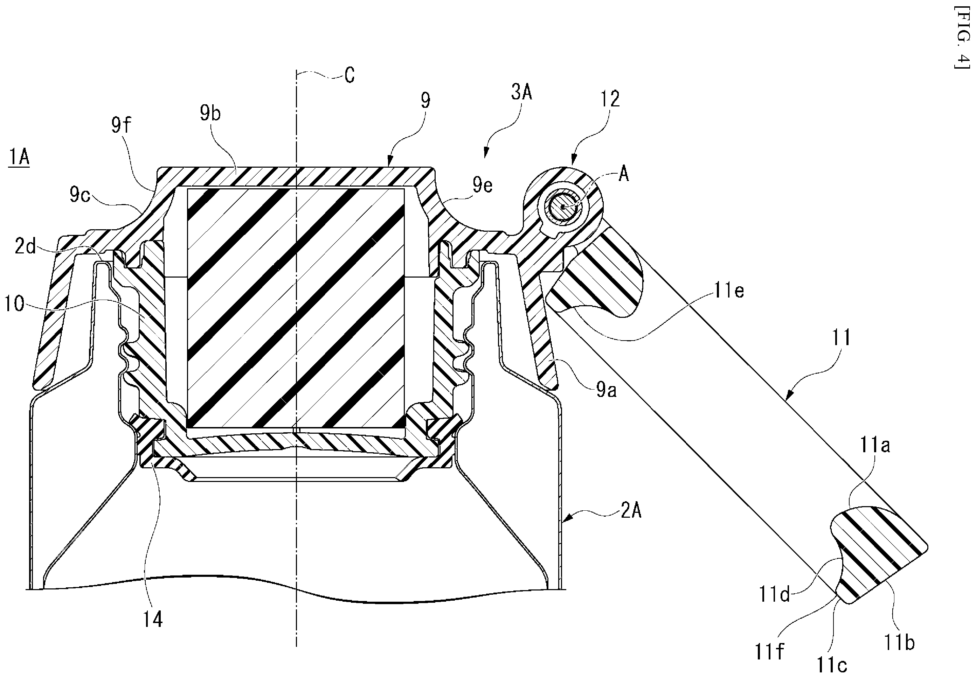

As depicted in FIGS. 3 and 4, the cap unit 3A is attached to the mouth/neck part 2c of the container main body 2A and constitutes a plug body that closes an upper opening part 2d of the container main body 2A. Note that FIG. 3 is a cross-sectional view depicting the stored state of the ring member 11 of the cap unit 3A, and FIG. 4 is a cross-sectional view depicting the open state of the ring member 11 of the cap unit 3A. FIG. 3 and FIG. 4 are vertical cross-sectional views parallel to the central axis C (including the central axis C).

In the present embodiment, the stored state of the ring member 11 depicted in FIG. 3 represents a first orientation of the ring member 11 in which the lower surface 11a of the ring member 11 and the top wall part 9b which will be described later of the cap main body 9 face each other. Furthermore, the open state of the ring member 11 depicted in FIG. 4 indicates that the ring member 11 in the stored state is rotated and opened (released) around the hinge central axis A, and indicates other orientations of the ring member 11 such that the ring member 11 can be gripped by a user (in other words, the orientation in which the ring member 11 functions as a handle). In the open state of the ring member 11, the lower surface 11a of the ring member 11 and the top wall part 9b of the cap main body 9 do not face each other.

The cap main body 9 is a member that closes the upper opening part 2d of the container main body 2A, and is made of heat-resistant resin such as polypropylene (PP), for example. The cap main body 9 has a peripheral wall part 9a and a top wall part 9b.

The peripheral wall part 9a has a cylindrical shape extending vertically so as to be contiguous with the trunk part 2b of the container main body 2A. Specifically, with this embodiment, the peripheral wall part 9a has a tapered cylindrical shape with a diameter that decreases toward the upper side. The peripheral wall part 9a surrounds the outer peripheral part of the mouth/neck part 2c from the outer side in the radial direction to the entire circumference in the circumferential direction. The lower end of the peripheral wall part 9a covers the shoulder part 2e from above.

The top wall part 9b is connected to the upper end part of the peripheral wall part 9a and covers the upper opening part 2d of the container main body 2A from above. The top wall part 9b has a substantially plate shape extending in a direction perpendicular to the central axis C. A gap is provided in the vertical direction between the top wall part 9b and the upper opening part 2d.

The top wall part 9b has an outer peripheral groove (storage concave part) 9c. The outer peripheral groove 9c is provided on the outer peripheral part of the top wall part 9b. The outer peripheral groove 9c is recessed below a portion of the top wall part 9b other than the outer peripheral groove 9c and extends in the circumferential direction. The outer peripheral groove 9c has an annular shape centered around the central axis C. The outer peripheral groove 9c has a substantially polygonal shape when viewed from above, and has a substantially quadrangular shape in the present embodiment. However, there is no limitation to this, and although not depicted, the outer peripheral groove 9c may have a substantially circular shape when viewed from above. The outer peripheral groove 9c is located at the outer peripheral part of the upper end of the cap main body 9 and opens upward and radially outward.

In other words, the cap main body 9 has a concave or groove-shaped storage concave part that is recessed from the top wall part 9b of the cap main body 9, and in this embodiment, this storage concave part is the outer peripheral groove 9c.

As depicted in FIGS. 3 and 4, in a vertical cross-sectional view parallel to the central axis C, the wall surface of the outer peripheral groove 9c (inner wall of the groove) extends downward and radially outward. Specifically, in this embodiment, the outer peripheral groove 9c has a concave curved shape in the vertical cross-sectional view. In other words, the wall surface of the outer peripheral groove 9c is concavely curved. However, although not particularly depicted, the outer peripheral groove 9c (wall surface thereof) may have a substantially cylindrical side wall facing radially outward and a substantially planar bottom wall facing upward.

The inner plug part 10 is made of a heat resistant resin such as polypropylene (PP) or the like. The inner plug part 10 is integrated with the cap main body 9 to close the upper opening part 2d. As depicted in FIG. 3, the inner plug part 10 has a cylindrical shape with bottom and is integrally attached to the lower surface of the top wall part 9b of the cap main body 9 by welding or the like. The inner plug part 10 is provided in the mouth/neck part 2c of the container main body 2A. A heat insulating material S is provided inside the inner plug part 10. Note that it is also possible to replace the heat insulating material S with an air layer inside the inner plug part 10.

The inner plug part 10 has a male screw part 13 and a flange part 10a.

The male screw part 13 is provided on the outer peripheral surface of the inner plug part 10. With the beverage container 1A of this embodiment, the inner plug part 10 (cap unit 3A) is detachably attached to the container main body 2A by screwing a male screw part 13 and a female screw part 7 together.

The flange part 10a protrudes radially outward from the lower end part of the inner plug part 10 and extends along the entire circumference in the circumferential direction. The flange part 10a is provided to the inside of the protruding part 8 and faces the protruding part 8 in the radial direction.

Water blocking packing 14 is attached to the outer peripheral part of the inner plug part 10. The water blocking packing 14 is a ring-shaped sealing member that seals between the container main body 2A and the inner plug part 10, and is made of, for example, a heat resistant rubber such as silicone rubber or an elastic member such as an elastomer, or the like. An inner peripheral recessed part 14a that is recessed outward in the radial direction is provided on the inner peripheral part of the water blocking packing 14 over the entire circumference in the circumferential direction. The water blocking packing 14 is attached to the inner plug part 10 by fitting the inner circumferential recessed part 14a to the flange part 10a.

An elastic flange part 14b is provided on the outer peripheral surface of the water blocking packing 14 so as to protrude outward in the radial direction. The elastic flange part 14b is provided on the outer peripheral part of the water blocking packing 14, and extends over the entire circumference in the circumferential direction. Two elastic flange parts 14b are provided side by side in the vertical direction. When the cap unit 3A is attached to the container main body 2A, the elastic flange part 14b is elastically deformed and comes into close contact with the protruding part 8 of the container main body 2A over the entire circumference. As a result, the water blocking packing 14 can liquid-tight seal the space between the protruding part 8 (container main body 2A) and the inner plug part 10 (cap unit 3A).

The water blocking packing 14 can be elastically deformed by being stretched and removed from the flange part 10a. Thereby, the cap unit 3A and the water blocking packing 14 can be washed separately, and the space between the water blocking packing 14 and the inner plug part 10 can be kept sanitary.

Note that the water blocking packing 14 is not limited to the shape described above. For example, the number of elastic flange parts 14b is not limited to two, and may be one or a plurality of three or more. Moreover, the water blocking packing 14 is not limited to the configuration in which the elastic flange part 14b is provided as described above, and the shape and the like thereof can be appropriately changed.

It can be said that the inner plug part 10, the heat insulating material S, and the water blocking packing 14 are each one of the structural elements of the cap main body 9. In this case, the cap main body 9 also has the inner plug part 10, the heat insulating material S, and the water blocking packing 14.

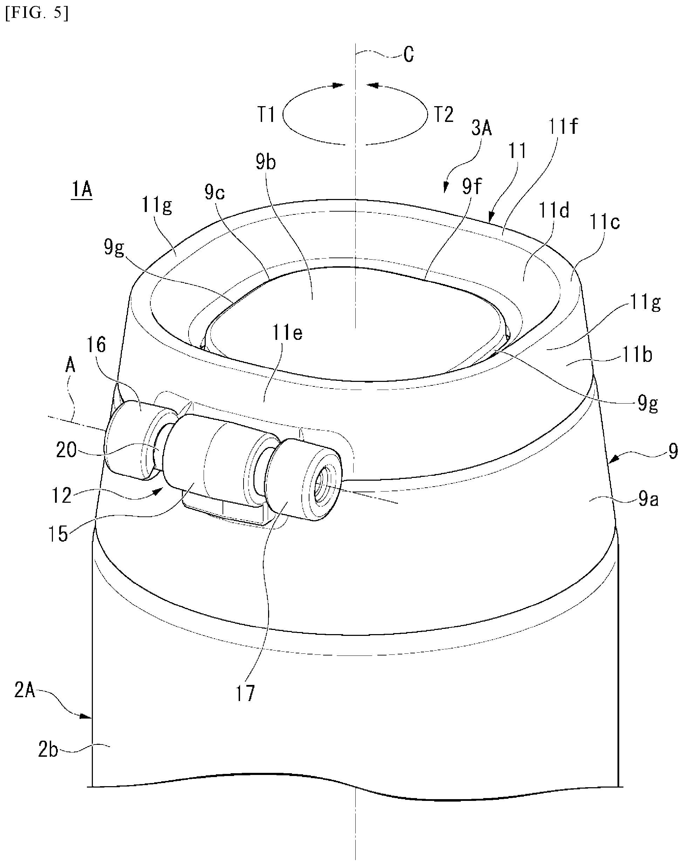

In the beverage container 1A of the present embodiment, the cap unit 3A can be attached to the container main body 2A by screwing the female threaded part 7 and male threaded part 13 together by rotating the cap main body 9 (cap unit 3A) to the first side in the circumferential direction (tightening side) T1 with regard to the container main body 2A as depicted in FIG. 1 and FIG. 5, from a state in which the inner plug part 10 is fitted inside the container main body 2A from the upper opening part 2d. Furthermore, the cap unit 3A can be removed from the container main body 2A by unscrewing the female threaded part 7 and the male threaded part 13 by rotating the cap main body 9 (cap unit 3A) to the second side in the circumferential direction (loosening side) T2 with regard to the container main body 2A, from the state in which the cap unit 3A is attached to the container main body 2A.

The ring member 11 is made of a heat resistant resin such as polypropylene (PP) or the like. The ring member 11 has an annular shape centered around the central axis C. The ring member 11 has a substantially polygonal shape, and has a substantially square shape in this embodiment. However, there is no limitation to this, and although not depicted, the ring member 11 may have a substantially circular shape. Furthermore, the ring member 11 may be referred to as a handle or the like.

As depicted in FIG. 3, the ring member 11 is provided above the cap main body 9. Specifically, in the stored state of the ring member 11 depicted in FIG. 3, the ring member 11 is provided on the top wall part 9b, and more specifically, is provided on the outer peripheral part of the top wall part 9b, or in other words, on the outer peripheral groove 9c. At least the lower part of the ring member 11 is stored in the outer peripheral groove 9c. In other words, when the ring member 11 is stored, at least a portion of the ring member 11 is stored in the outer peripheral groove (storage concave part) 9c.

The lower surface 11a of the ring member 11 has an annular shape centered around the central axis C. The lower surface 11a of the ring member 11 has a shape that conforms to the shape of the top wall part 9b of the cap main body 9 that faces the lower surface 11a. In other words, the lower surface 11a of the ring member 11 has a shape that conforms to the groove shape of the outer peripheral groove 9c that faces the lower surface 11a. Specifically, in the vertical cross-sectional view depicted in FIG. 3, the lower surface 11a of the ring member 11 extends upward moving inward in the radial direction. With this embodiment, the lower surface 11a of the ring member 11 has a convex curved shape when viewed on the vertical cross section. In other words, the lower surface 11a of the ring member 11 is convexly curved. However, there is no limitation to this, and although not depicted, the ring member 11 may have a substantially planar lower surface facing downward and a substantially cylindrical inner peripheral surface facing inward in the radial direction.

In this embodiment, the inner peripheral part of the lower surface 11a of the ring member 11 faces the radially outward facing wall surface of the outer peripheral groove 9c. The inner peripheral part of the ring member 11 and the wall surface of the outer peripheral groove 9c are fitted to each other. In this embodiment, the ring member 11 and the outer peripheral groove 9c are both polygonal, and therefore the engagement of these members makes the ring member 11 and the outer peripheral groove 9c relatively non-rotatable in the circumferential direction.

The outer peripheral surface 11b of the ring member 11 extends inward in the radial direction toward the upper side. In other words, the outer peripheral surface 11b of the ring member 11 has a tapered surface with a diameter that decreases toward the upper side. In this embodiment, if the ring member 11 is in the stored state depicted in FIG. 3, the outer peripheral surface 11b of the ring member 11 is provided to be substantially flush with the peripheral wall part 9a, so as to form a contiguous surface with the peripheral wall part 9a of the cap main body 9 (so as to form one contiguous surface). In other words, the outer peripheral surface 11b of the ring member 11 is provided so as to be contiguous with the peripheral wall part 9a of the cap main body 9.

The ring member 11 has a flat part 11c and a concave surface part 11d on the upper surface.

The flat part 11c is provided on the outer peripheral part of the upper surface of the ring member 11. The flat part 11c has an annular shape centered around the central axis C. The planar part 11c has a substantially planar shape extending in a direction perpendicular to the central axis C.

The concave surface part 11d is provided in a portion of the upper surface of the ring member 11 other than the outer peripheral part, or in other words, a portion located to the inside of the flat part 11c. The concave surface part 11d is recessed downward from the flat part 11c. The concave surface part 11d has an annular shape centered around the central axis C. In the vertical cross-sectional view depicted in FIG. 3, the concave surface part 11d extends upward toward the outside in the radial direction. Concretely, the concave surface part 11d has a concave curved shape in the vertical cross-sectional view. In other words, the concave surface part 11d has a concave curved shape. The inner peripheral part of the concave surface part 11d is formed so as to be smoothly connected to the part of the top wall part 9b located to the inside of the outer peripheral groove 9c.

In this embodiment, the lower part of the ring member 11 is provided in the outer peripheral groove 9c, the outer peripheral surface 11b is formed so as to be contiguous with the peripheral wall part 9a, and the concave surface part 11d is contiguous with the inner part of the top wall part 9b, and therefore even if the ring member 11 is provided, the external appearance will be improved.

Furthermore, the outer surface (top surface) of the ring member 11 is provided with unevenness, and therefore, when the ring member 11 is in an open state as depicted in FIG. 4 such that the user can grasp by passing a finger through the ring member 11, slipping will not readily occur and stable grasping is facilitated.

Note that although not depicted, when the ring member 11 is in the stored state, the upper surface of the ring member 11 may be provided so as to be contiguous with the top wall part 9b of the cap main body 9. In other words, the upper surface of the ring member 11 and the upper surface of the top wall part 9b of the cap main body 9 may be provided to be substantially flush so as to form one contiguous surface. In this case, the ring member 11 does not protrude from the upper surface or the outer peripheral surface of the cap unit 3A when the ring member 11 is in the stored state. Therefore, the ring member 11 in the stored state can be more integrated with the outer shape of the cap unit 3A. The appearance design of the cap unit 3A is further enhanced.

Furthermore, in this embodiment, as depicted in FIGS. 1, 5, 7, and 8, the ring member 11 has a ring rear end part 11e connected to the hinge 12, a ring front end part 11f located to the frontmost side when the ring member 11 is in the stored state, and a pair of ring side end parts 11g that connect the ring rear end part 11e and the ring front end part 11f.

Furthermore, at least one or more of the ring rear end part 11e, ring front end part 11f, and the pair of ring side end parts 11g are provided in the outer peripheral groove (storage concave part) 9c. Specifically, the outer peripheral groove 9c has a rear end placement part 9e where the ring rear end part 11e is provided, a front end placement part 9f where the ring front end part 11f is provided, and a pair of side end placement parts 9g where the pair of ring side end parts 11g are provided. In other words, in the present embodiment, the ring rear end part 11e, the ring front end part 11f, and the pair of ring side end parts 11g are all provided in the outer peripheral groove (storage concave part) 9c.

The hinge 12 connects the rear part of the cap main body 9 and the rear part of the ring member 11, so as to be relatively rotatable in the hinge circumferential direction. The hinge 12 has a spring mechanism including a biasing part 19 and an enclosure part 20, which will be described later. The hinge 12 is configured around the hinge central axis A and extends in the hinge axial direction.

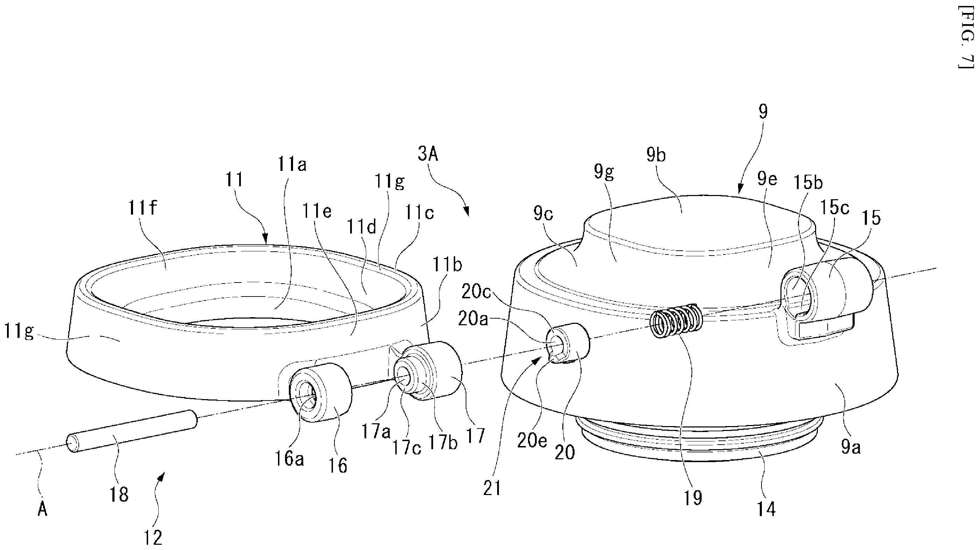

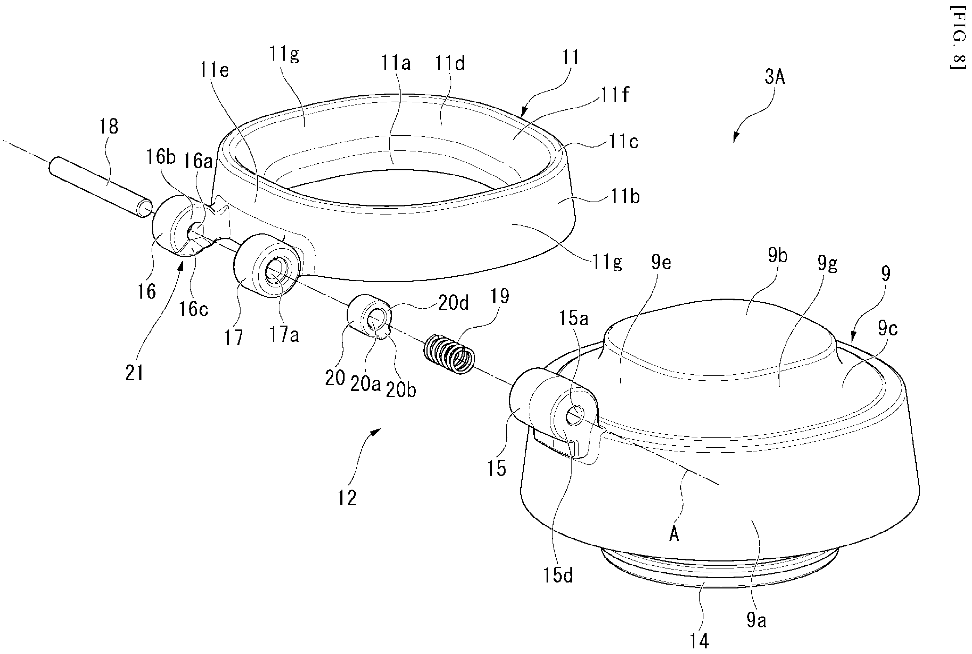

As depicted in FIGS. 5 to 9, the hinge 12 has a cap bearing part 15, ring bearing parts 16 and 17, a biasing part 19, the enclosure part 20, and a hinge shaft 18. Note that FIG. 6 shows a cross-section (vertical cross-section) of the hinge 12 parallel to the central axis C of the cap unit 3A. Furthermore, in the exploded perspective view of the cap unit 3A depicted in FIGS. 7 and 8, the arrangement order of the constituent members is partly different from the arrangement relationship of the constituent members after assembly (assembled state).

Two of either one of the cap bearing part 15 or the ring bearing parts 16, 17 are provided with an interval in the hinge axial direction, and one of the other of the cap bearing part 15 or the ring bearing parts 16, 17 are provided between the aforementioned two parts. In the present embodiment, of the cap bearing part 15 and the ring bearing parts 16, 17, the ring bearing parts 16, 17 are provided with a mutual interval in the hinge axial direction, and one cap bearing part 15 is provided between the two ring bearing parts 16, 17.

The cap bearing part 15 protrudes toward the rear and upward from the upper end part of the peripheral wall part 9a of the cap main body 9. In other words, the cap bearing part 15 is provided on the cap main body 9. The cap bearing part 15 is integrally formed with the cap main body 9 as a single member. The cap bearing part 15 has a substantially cylindrical shape extending in the hinge axial direction. The cap bearing part 15 is positioned at the center of the rear part of the cap main body 9 in the left-right direction. The cap bearing part 15 is positioned at the center part of the hinge 12 in the hinge axial direction.

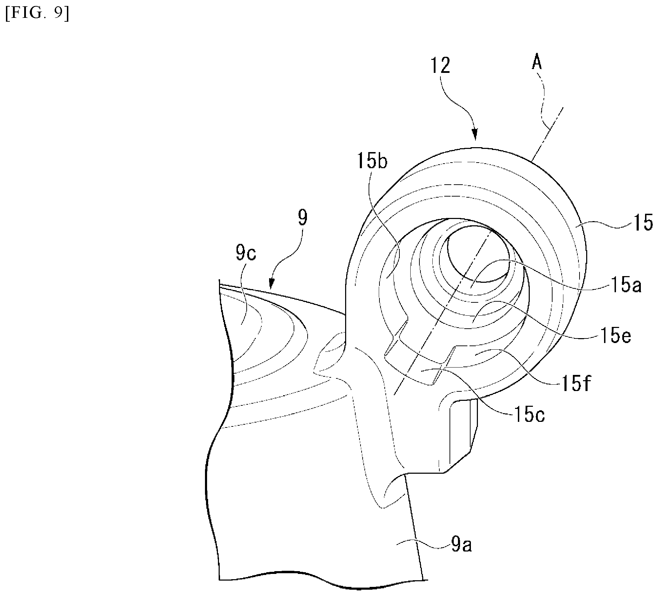

As depicted in FIGS. 6 and 9, the cap bearing part 15 has a storage concave part 15b, an arm receiving part 15c, a sliding contact surface 15d, and a shaft hole 15a. In other words, the hinge 12 has a storage concave part 15b.

In this embodiment, the storage concave part 15b is recessed in the cap bearing part 15, and extends in the hinge axial direction. Specifically, the storage concave part 15b has a multistage circular hole shape centered on the hinge central axis A, is opened at the end surface of the cap bearing part 15 facing a first side in the hinge axial direction, and extends from the end surface toward the second side in the hinge axial direction.

The storage concave part 15b has a large diameter hole part 15f and a small diameter hole part 15e. The large diameter hole part 15f has a circular hole shape and opens to the end surface of the cap bearing part 15 facing a first side in the hinge axial direction. The large diameter hole part 15f is provided in a portion on a first side of the storage concave part 15b in the hinge axial direction.

The small diameter hole part 15e is provided in a portion on the second side of the storage concave part 15b in the hinge axial direction. The small diameter hole part 15e has a circular hole shape with an inner diameter that is smaller than that of the large diameter hole part 15f, and opens at the bottom surface of the large diameter hole part 15f.

The arm receiving part 15c is provided in the storage concave part 15b and has a groove shape extending in the hinge axial direction. Specifically, the arm receiving part 15c is recessed outward in the hinge radial direction from the inner peripheral surface of the large diameter hole part 15f, and extends in the hinge axial direction.

The sliding contact surface 15d is provided on the end surface of the cap bearing part 15 facing the second side in the hinge axial direction. The sliding contact surface 15d has a planar shape extending in a direction perpendicular to the central axis A of the hinge.

The shaft hole 15a has a circular hole shape extending in the hinge axial direction. The shaft hole 15a has an inner diameter that is smaller than that of the storage concave part 15b, and more specifically, an inner diameter smaller than that of the small diameter hole part 15e. A first side end part of the shaft hole 15a in the hinge axial direction opens to the bottom surface of the small diameter hole part 15e. A second side end part of the shaft hole 15a in the hinge axial direction opens to the sliding contact surface 15d.

As depicted in FIGS. 6 to 8, the ring bearing parts 16 and 17 are provided on the ring member 11, and arranged adjacent to the cap bearing part 15 in the hinge axial direction. The ring bearing parts 16 and 17 are formed integrally with the ring member 11 as a single member. The present embodiment has two ring bearing parts 16 and 17.

The two ring bearing parts 16, 17 include a first ring bearing 16 and a second ring bearing 17. The first ring bearing part 16 is provided on a first side of the two ring bearing parts 16 and 17 in the hinge axial direction. The second ring bearing part 17 is provided on a second side of the two ring bearing parts 16 and 17 in the hinge axial direction.

The first ring bearing part 16 protrudes in the rearward direction from the rear lower end part of the outer peripheral surface 11b of the ring member 11. The first ring bearing part 16 is provided adjacent to the first side of the cap bearing part 15 in the hinge axial direction. The first ring bearing part 16 has a substantially cylindrical shape extending in the hinge axial direction.

The first ring bearing part 16 has a bearing sliding surface 16b and a shaft hole 16a. In other words, the hinge 12 has a bearing sliding surface 16b, and in this embodiment, the bearing sliding surface 16b is provided on the first ring bearing part (ring bearing part) 16.

The bearing sliding surface 16b is provided on the end surface facing the end surface on the second side in the hinge axial direction of the first ring bearing part 16. The bearing sliding surface 16b has a planar shape extending in a direction perpendicular to the central axis A of the hinge.

In this embodiment, the bearing sliding surface 16b has a stepped part 16c. The stepped part 16c has a concave shape recessed from the bearing sliding surface 16b toward the first side in the hinge axial direction. The stepped part 16c is provided on a portion of the bearing sliding surface 16b in the hinge circumferential direction. Specifically, in this embodiment, when the ring member 11 is in the stored state, the stepped part 16c is provided at the lower end part of the bearing sliding surface 16b.

The shaft hole 16a penetrates the first ring bearing part 16 in the hinge axial direction. A second side end part of the shaft hole 16a in the hinge axial direction opens to the bearing sliding surface 16b. The shaft hole 16a has a multistage circular hole shape extending in the hinge axial direction. A portion of the shaft hole 16a other than the end part to the first side in the hinge axial direction has a smaller inner diameter than the end part to the first side in the hinge axial direction.

The second ring bearing part 17 protrudes in the rearward direction from the rear lower end part of the outer peripheral surface 11b of the ring member 11. The second ring bearing part 17 is provided adjacent to the second side of the cap bearing part 15 in the hinge axial direction. The second ring bearing part 17 has a substantially cylindrical shape extending in the hinge axial direction.

The second ring bearing part 17 has a sliding contact convex part 17b, a contact surface 17c, and a shaft hole 17a.

The sliding contact convex part 17b is located at an end part on the first side in the hinge axial direction of the second ring bearing part 17. The sliding contact convex part 17b protrudes toward a first side in the hinge axial direction from a portion of the second ring bearing part 17 other than the end part to the first side in the hinge axial direction, or in other words, a portion other than the sliding contact convex part 17b. The sliding contact convex part 17b has a cylindrical shape extending in the hinge axial direction. The sliding contact convex part 17b has a smaller outer diameter than the part of the second ring bearing part 17 other than the sliding contact convex part 17b.

The contact surface 17c is provided on the end surface facing the first side in the hinge axial direction of the second ring bearing part 17. With this embodiment, the contact surface 17c is provided on the end surface of the sliding contact convex part 17b facing the first side in the hinge axial direction. The contact surface 17c has a planar shape extending in a direction perpendicular to the central axis A of the hinge. The contact surface 17c contacts the sliding contact surface 15d of the cap bearing part 15 in a slidable manner.

The shaft hole 17a penetrates the second ring bearing part 17 in the hinge axial direction. A first side end part of the shaft hole 17a in the hinge axial direction opens to the contact surface 17c. The shaft hole 17a has a multistage circular hole shape extending in the hinge axial direction. A portion of the shaft hole 17a other than the end part to the second side in the hinge axial direction has a smaller inner diameter than the end part to the second side in the hinge axial direction.

The biasing part 19 is elastically deformable. Specifically, in the present embodiment, the biasing part 19 is a metal compression coil spring that has a helical shape around the hinge central axis A and is elastically deformable in the hinge axial direction. The biasing part 19 is stored in the storage concave part 15b. The biasing part 19 is provided across the small diameter hole part 15e and the large diameter hole part 15f of the storage concave part 15b. The end part to the second side in the hinge axial direction of the biasing part 19 in the hinge axial direction contacts the bottom surface of the small diameter hole part 15e. The end part to the first side in the hinge axial direction of the biasing part 19 contacts an end surface (a biasing part contacting surface 20d described later) facing the second side in the hinge axial direction of an enclosure part 20.

The biasing part 19 biases the first ring bearing part 16 toward the first side in the hinge axial direction via the enclosure part 20 with respect to the cap bearing part 15. In other words, the biasing part 19 biases the ring member 11 toward the first side in the hinge axial direction with respect to the cap main body 9. Furthermore, the biasing part 19 allows the ring member 11 to be displaced to the second side in the hinge axial direction with respect to the cap main body 9 by elastic deformation.

The enclosure part 20 has a substantially cylindrical shape extending in the hinge axial direction. The enclosure part 20 is provided on the second side of the first ring bearing part 16 in the hinge axial direction, and is provided on the first side of the biasing part 19 in the hinge axial direction. The enclosure part 20 is interposed between the first ring bearing part 16 and the biasing part 19 in the hinge axial direction. At least a portion of the enclosure part 20 is inserted into the large diameter hole part 15f of the storage concave part 15b. As a result, the enclosure part 20 encloses the biasing part 19 in the storage concave part 15b. A portion of the enclosure part 20 other than the part inserted into the storage concave part 15b is exposed to the outside between the first ring bearing part 16 and the cap bearing part 15.

In the present embodiment, at least part of the enclosure part 20 (end part on the second side in the hinge axial direction) is inserted into the storage concave part 15b, such that the enclosure part 20 is not completely separated from the storage concave part 15b, and therefore the biasing part 19 sealed inside the storage concave part 15b is not exposed to the outside. Therefore, the biasing part 19 is not visible from the outside, and a favorable appearance can be obtained.

The enclosure part 20 is made of a material different from that of the first ring bearing part 16, such as polyacetal (POM) or acrylonitrile-butadiene-styrene (ABS), or the like, and a material with superior wear resistance over the first ring bearing part 16 is preferably used.

In the cap unit 3A of the present embodiment, the durability of the hinge 12 can be improved by constructing the enclosure part 20 having excellent wear resistance separately from the first ring bearing part 16.

The enclosure part 20 has an arm part 20b, an enclosure sliding surface 20c, a biasing part contact surface 20d, and a shaft hole 20a.

As depicted in FIG. 8, the arm part 20b has a rib shape that protrudes outward in the hinge radial direction from the outer peripheral surface of the enclosure part 20, and extends in the hinge axial direction. The arm part 20b is inserted into the arm receiving part 15c of the cap bearing part 15 depicted in FIGS. 7 and 9. The arm part 20b is fitted to the arm receiving part 15c so as to be slidable in the hinge axial direction. By inserting the arm part 20b into the arm receiving part 15c, the enclosure part 20 is restricted from rotating in the hinge circumferential direction with respect to the cap bearing part 15, and is allowed to slide in the hinge axial direction.

As depicted in FIGS. 6 and 7, the enclosure sliding surface 20c is provided on the end surface of the enclosure part 20 facing the first side in the hinge axial direction. The enclosure sliding surface 20c has a planar shape extending in a direction perpendicular to the central axis A of the hinge. The enclosure sliding surface 20c slidably contacts the bearing sliding surface 16b of the first ring bearing part 16.

In this embodiment, the enclosure sliding surface 20c has a convex part 20e. The convex part 20e has a convex shape that protrudes from the enclosure sliding surface 20c to the first side in the hinge axial direction. The convex part 20e is provided on a portion of the enclosure sliding surface 20c in the hinge circumferential direction. In this embodiment, the convex part 20e is provided on the lower end part of the enclosure sliding surface 20c. When the ring member 11 is in the stored state, the convex part 20e faces the stepped part 16c in the hinge axial direction, and is detachably locked in the stepped part 16c.

The cap unit 3A of the present embodiment includes a storage state holding mechanism 21 that holds the orientation of the ring member 11 when the ring member 11 is in the stored state. The storage state holding mechanism 21 includes a stepped part (locked part) 16c provided on the ring member 11, and a convex part (locking part) 20e locked to the stepped part 16c of the ring member 11 in the stored state. In this embodiment, the storage state holding mechanism 21 is provided on the hinge 12 side (or in other words, on the rear side) of the cap central axis C in the front-rear direction.

When the ring member 11 is rotated toward the opening direction around the hinge central axis A by a torque exceeding a prescribed value by an operation of a user, the stepped part 16c rides up on the convex part 20e in the hinge circumferential direction.

More specifically, in the process of shifting from the stored state of the ring member 11 to the open state of the ring member 11, the stepped part 16c rotates about the hinge central axis A together with the ring member 11, and the enclosure part 20 is pressed to the second side in the hinge axial direction against the biasing force of the biasing part 19 by rotating the ring member 11 by a torque that exceeds a prescribed value while the convex part 20e is able to ride up around the hinge central axis A.

In other words, in the process of shifting from the stored state of the ring member 11 to the open state of the ring member 11, the convex part 20e moves the stepped part 16c to ride up around the hinge central axis A against the biasing force of the biasing part 19. Specifically, in the above process, the convex part 20e is brought into contact with the wall part of the stepped part 16c located at the end part in the hinge circumferential direction, generating a force that displaces the enclosure part 20 toward the second side in the hinge axial direction, and thus the biasing part 19 is elastically deformed. The elastic deformation of the biasing part 19 displaces the enclosure part 20 to the second side in the hinge axial direction, and the convex part 20e rides on the wall part of the stepped part 16c in the hinge circumferential direction, and is separated from the stepped part 16c. At this time, the convex part 20e slidably contacts a portion of the bearing sliding surface 16b other than the stepped part 16c.

Furthermore, contrary to the above, in the process of returning the ring member 11 from the open state to the stored state, the stepped part 16c moves (rotates) in the hinge circumferential direction with respect to the convex part 20e, and when these move together in the hinge axial direction, the biasing part 19 is restored and deformed, the enclosure part 20 is displaced toward the first side in the hinge axial direction, and the convex part 20e is reinserted (locked) into the stepped part 16c. As a result, the storage state holding mechanism 21 again holds the ring member 11 in the orientation of the stored state.

In other words, in this embodiment, the hinge 12 has a click mechanism (storage state holding mechanism 21) including the stepped part 16c and the convex part 20e, and the click mechanism provides a sudden feeling of resistance when the ring member 11 is moved in the direction of opening around the hinge central axis or in the closing direction. It should be noted that in the present embodiment and subsequent embodiments to be described later, the "sudden feeling of resistance" may be replaced with a "click feel".

As depicted in FIGS. 6 and 8, a biasing part contacting surface 20d is provided on the end surface of the enclosure part 20 facing the second side in the hinge axial direction. The biasing part contacting surface 20d has a planar shape extending in a direction perpendicular to the central axis A of the hinge. The biasing part contact surface 20d contacts the end part of the biasing part 19 on the first side in the hinge axial direction.

The shaft hole 20a penetrates the enclosure part 20 in the hinge axial direction. A first side end part of the shaft hole 20a in the hinge axial direction opens to the enclosure sliding surface 20c. A second side end part of the shaft hole 20a in the hinge axial direction opens to the biasing part contacting surface 20d. The shaft hole 20a has a circular hole shape extending in the hinge axial direction.

The hinge shaft 18 has a pillar shape centered on the hinge central axis A and extends in the hinge axial direction. The hinge shaft 18 is made of metal and is inserted into the cap bearing part 15, the pair of ring bearing parts 16 and 17, the biasing part 19, and the enclosure part 20. The hinge shaft 18 axially supports the cap bearing part 15 and the ring bearing parts 16 and 17 in a manner that is relatively rotatable about the central axis A of the hinge.

With the cap unit 3A and the beverage container 1A of this embodiment described above, the ring member 11 is connected to the cap main body 9 via the hinge 12, or in other words, the ring member 11 freely rotates around the hinge central axis A. Therefore, the ring member 11 can be placed in an open state or a stored state based on the conditions of use, or the like, and thus the orientation of the ring member 11 can be suitably selected, which is highly convenient. In particular, when the ring member 11 is in the open state, the user can easily carry the container by inserting a finger through the ring member 11, and when the ring member 11 is in the stored state, the cap upper part (upper part of the container) is less bulky and can be easily stored in a bag or the like.

Furthermore, in this embodiment, the storage state holding mechanism 21 is provided in order to hold the ring member 11 in the stored state. Therefore, for example, when the beverage container 1A is in an inverted orientation or when a centrifugal force acts on the beverage container 1A, the ring member 11 in the stored state can be prevented from being unintentionally moved to the open state. Therefore, the bulkiness of the ring member 11 is suppressed more stably, and the ring member 11 is less likely to get in the way when the beverage container 1A is stored in a bag or the like, or when the cap is opened and closed, which improves usability.

Furthermore, in the present embodiment, the storage state holding mechanism 21 includes a stepped part (locked part) 16c provided on the ring member 11 and a convex part (locked part) 20e locked to the stepped part 16c of the ring member 11 in the stored state, and the stepped part 16c rides on the convex part 20e when the ring member 11 is rotated toward the opening direction about the hinge central axis A using a torque that exceeds a prescribed value.

In this case, by locking the stepped part (locked part) 16c and the convex part (locking part) 20e, the ring member 11 in the stored state is stably prevented from being unintentionally moved to the open state. Furthermore, when the ring member 11 is used, the user rotates the ring member 11 in the opening direction using a torque that exceeds a prescribed value, and thereby the ring member 11 can easily be placed in the open state without requiring a difficult operation. Therefore, the operability is good.

Furthermore, when the user rotates the ring member 11 in the stored state in the opening direction around the hinge central axis A, the stepped part (locked part) 16c rides up on the convex part (locking part) 20e, and thus the user can receive a sudden feel of resistance. The sudden feel of resistance allows the user to intuitively recognize that the ring member 11 has been released from the stored state.

When returning the ring member 11 from the open state to the stored state, the stepped part (locked part) 16c engages the convex part (locking part) 20e in the opposite direction to the above, and as a result, the user can still get a sudden feel of resistance. The sudden feel of resistance allows the user to intuitively recognize that the ring member 11 has again been returned to the stored state.

Furthermore, in this embodiment, the storage state holding mechanism 21 is provided on the hinge 12 side of the cap central axis C in the front-rear direction.

In this case, the distance between the storage state holding mechanism 21 and the hinge central axis A is kept small, and thus the turning radius of the storage state holding mechanism 21 is kept small. As a result, the storage state holding mechanism 21 is less likely to be affected by molding errors, component deformation, and the like during manufacturing, and thus the function of the storage state holding mechanism 21 is maintained satisfactorily. In addition, the storage state holding mechanism 21 is provided at a position that is difficult to see from the front side, and thus the exterior design is favorable.

Furthermore, in the cap unit 3A and the beverage container 1A of the present embodiment, an outer peripheral groove (storage concave part) 9c is provided for storing at least a portion of the ring member 11 in the stored state. For this reason, when the ring member 11 is in the stored state, the amount of protrusion of the ring member 11 above the cap unit 3A is reduced, and the bulkiness is suppressed due to providing the ring member 11. Accordingly, the ring member 11 can be prevented from affecting the external design of the cap unit 3A. As in this embodiment, it is also possible to substantially integrate the ring member 11 in the stored state with the outer shape of the cap unit 3A.

Specifically, at least one or more of the ring rear end part 11e, ring front end part 11f, and pair of ring side end parts 11g, which are structural elements of the ring member 11, are provided in the outer peripheral groove (storage concave part) 9c, and in this embodiment, all these structural elements are provided in the outer peripheral groove 9c. It is possible to more stably suppress the ring member 11 from protruding from the cap unit 3A.

Furthermore, in this embodiment, the biasing part 19 of the hinge 12 biases the ring member 11 toward the first side in the hinge axial direction. Therefore, for example, when a user inserts a finger through the ring member 11 or when the beverage container 1A is dropped, even if a force directed toward the second side in the hinge axial direction is applied to the ring member 11, the force can be absorbed by the elastic deformation of the biasing part 19 and will not easily be transmitted to the cap main body 9. As a result, the cap unit 3A can be prevented from rotating in the circumferential direction (unscrew direction) due to the above force, and thus the screwed state between the cap unit 3A and the container main body 2A can be maintained satisfactorily.

Specifically, in this embodiment, the first side in the hinge axial direction corresponds to the tightening side T1 in the circumferential direction where the cap unit 3A and the container main body 2A are screwed together, and the second side in the hinge axial direction corresponds to the loosening side T2 in the circumferential direction.

In this case, when a force (rotational force) directed toward the loosening side T2 (the second side in the hinge axial direction) in the circumferential direction in which the cap unit 3A and the container main body 2A are screwed together acts on the ring member 11, the force can be absorbed by the biasing part 19 to suppress loosening of the screwed engagement. Therefore, the beverage in the container main body 2A is prevented from leaking out of the container due to loosening by unscrewing.

Furthermore, in the present embodiment, of the cap bearing parts 15 and the ring bearing parts 16, 17, two of the ring bearing parts 16, 17 are provided with a mutual interval in the hinge axial direction, and one cap bearing part 15 is provided between the two ring bearing parts 16,17. In other words, two of either one of the cap bearing part 15 or the ring bearing parts 16, 17 are provided with an interval in the hinge axial direction, and one of the other of the cap bearing part 15 or the ring bearing parts 16, 17 are provided between the aforementioned two parts.

In this case, the strength of the hinge 12 can be stably increased while the above-described effects are achieved by the biasing part 19 of the hinge 12.

Furthermore, in this embodiment, the hinge 12 has the storage concave part 15b and the enclosure part 20 that encloses the biasing part 19 in the storage concave part 15b.

In this case, the biasing part 19 can be enclosed in the storage concave part 15b by the enclosure part 20, and thus the biasing part 19 is prevented from being exposed to the outside, and the appearance design of the cap unit 3A and the beverage container 1A can have an attractive appearance. In addition, by enclosing the biasing part 19, it is possible to prevent the function of the biasing part 19 from deteriorating or becoming unstable due to adhesion of grime, for example.

Furthermore, in the present embodiment, the storage state holding mechanism 21 is provided as a click mechanism for the hinge 12. Specifically, the bearing sliding surface 16b has a stepped part 16c, and the enclosure sliding surface 20c has a convex part 20e that can ride up on the stepped part 16c around the hinge central axis A against the biasing force of the biasing part 19.

In this case, when the user rotates the ring member 11 around the hinge central axis A, the convex part 20e rides up on the stepped part 16c against the biasing force of the biasing part 19, so that the user can receive a sudden feel of resistance. By obtaining a sudden feel of resistance, the user can recognize by feel the state in which the ring member 11 is rotated.

Specifically, in this embodiment, when the ring member 11 is rotated in the opening direction when the ring member 11 is in the stored state, the convex part 20e rides up relatively on the stepped part 16c in the hinge circumferential direction, and therefore a sudden sense of resistance can be obtained, and thus the start of the rotating operation can be intuitively recognized. When the ring member 11 in the stored state rotates in the opening direction, resistance due to the biasing force is generated when the convex part 20e rides up on the stepped part 16c, and therefore unintentional rotation of the ring member 11 in the opening direction can be prevented.

Note that in this embodiment, just before the ring member 11 is placed in the stored state, the convex part 20e functions as a mechanism that is inserted again into the stepped part 16c (in other words, the stepped part 16c and the convex part 20e are locked together). However, by adjusting the positions of the stepped part 16c and the convex part 20e, the riding position (locking position) can be freely set. For example, in the reference example of the present embodiment, the convex part 20e can be inserted again into the stepped part 16c immediately before the ring member 11 is rotated from the open state to the limit to the rearward side. In this case, the ring member 11 is held in the open state by locking the stepped part 16c and the convex part 20e. Therefore, the stepped part 16c and the convex part 20e function as an open state holding mechanism that holds the orientation of the ring member 11 when the ring member 11 is in the open state. Note that even when the convex part 20e is reinserted into the stepped part 16c immediately before the ring member 11 enters the stored state, the user can receive a sudden feel of resistance, and can recognize that the rotation operation of the ring member 11 is completed.

Furthermore, as another example, the convex part 20e may be reinserted into the stepped part 16c at a position where the ring member 11 stands vertically in the open state. In this case, the ring member 11 is held in the vertically standing state by locking the stepped part 16c and the convex part 20e. Therefore, by providing the beverage container 1A in a state in which the ring member 11 stands vertically, the user can promptly hook the ring member 11 by a finger to carry the container. Furthermore, when the convex part 20e is reinserted into the stepped part 16c, the user can receive a feel of sudden resistance, and can intuitively recognize the state in which the ring member 11 is rotated.

Note that in this embodiment, the biasing part 19 of the hinge 12 biases the ring member 11 toward the hinge axial direction. Therefore, resistance to sliding is generated when the ring member 11 is rotated, and thus sliding resistance can be adjusted by the elastic force of the biasing member 19, for example. As a result, it is not necessary to lock the stepped part 16c and the convex part 20e. The ring member 11 can be stopped (made stationary) at an arbitrary position midway through being rotated around the hinge central axis A, by the sliding resistance caused by the aforementioned bias. In this case, the user can stop smoothly without receiving the feel of sudden resistance.

Furthermore, with the embodiment, the lower surface 11a of the ring member 11 has a shape that conforms to the shape of the top wall part 9b of the cap main body 9 that faces the lower surface 11a.

Specifically, in the present embodiment, the outer peripheral groove 9c of the top wall part 9b facing the lower surface 11a of the ring member 11 has a concave surface shape, and the lower surface 11a of the ring member 11 has a convex curved shape that corresponds to the concave curved surface of the outer peripheral groove 9c.

In this case, the lower surface 11a of the ring member 11 can be provided in close contact with the outer peripheral groove 9c of the top wall part 9b of the cap main body 9. In other words, when the ring member 11 is in the stored state, the ring member fits well within the outer peripheral groove 9c. Therefore, the orientation of the ring member 11 in the stored state can easily be stabilized. Furthermore, by bringing the ring member 11 into close contact with the outer peripheral groove 9c of the top wall part 9b, the bulkiness in the vertical dimension of the cap unit 3A can be suppressed as a whole, and the size can be easily reduced.

Furthermore, in this embodiment, the outer peripheral groove 9c of the cap main body 9 is polygonal, the ring member 11 is polygonal, and the inner peripheral part of the ring member 11 fits into the inner peripheral part of the outer peripheral groove 9c.

In this case, when the ring member 11 is in the stored state, the ring member 11 is restricted from rotating in the circumferential direction with respect to the cap main body 9. Therefore, when the user rotates the cap unit 3A to the loosening side T2 in the circumferential direction and removes the cap unit from the container main body 2A while the ring member 11 is in the stored state for example, even if the user holds the ring member 11 in the palm and rotates the member, the application of excessive force on the biasing part 19 of the hinge 12 will be suppressed. Therefore, the function of the hinge 12 described above is maintained satisfactorily over a long period of time.

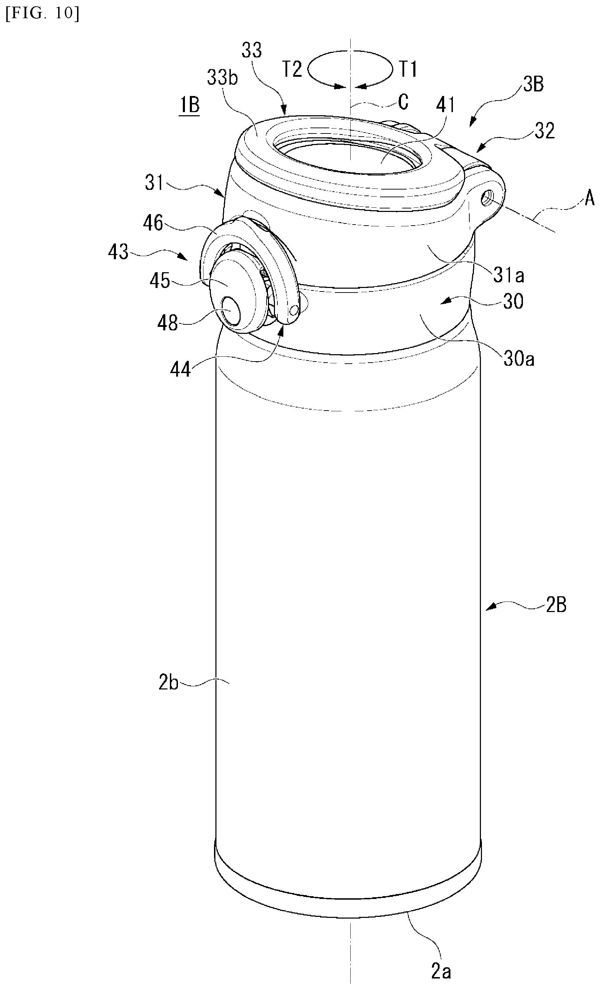

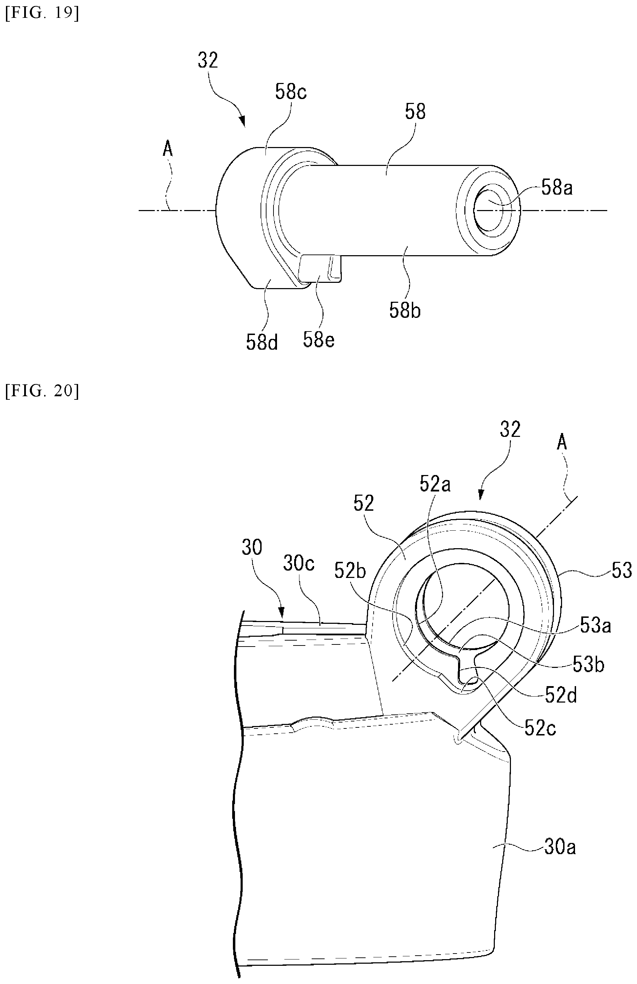

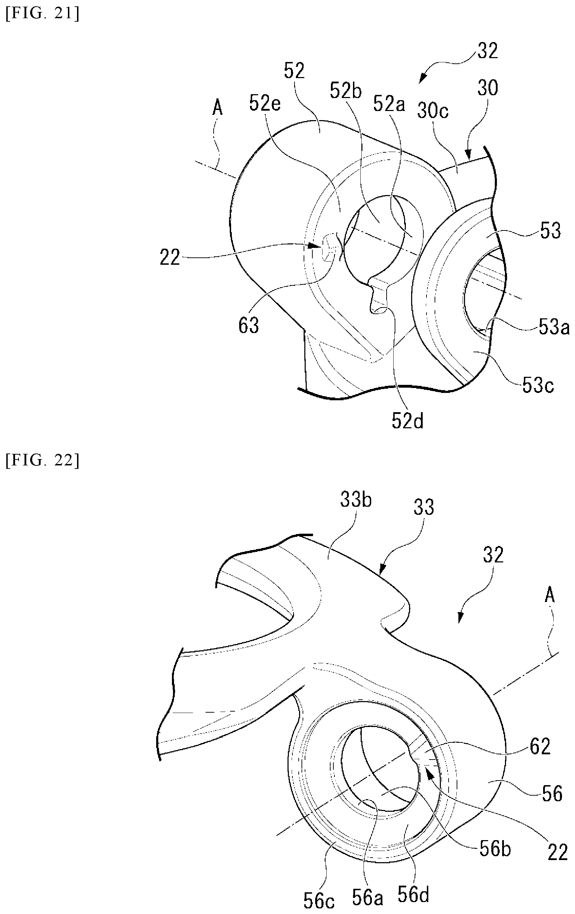

<Second embodiment> Next, a cap unit 3B according to a second embodiment of the present invention and a beverage container 1B including the cap unit will be described with reference to FIG. 10 to FIG. 22. Note that, in this embodiment, the same configurations as those in the above-described embodiment may be assigned the same names and symbols, and a description thereof may be omitted.

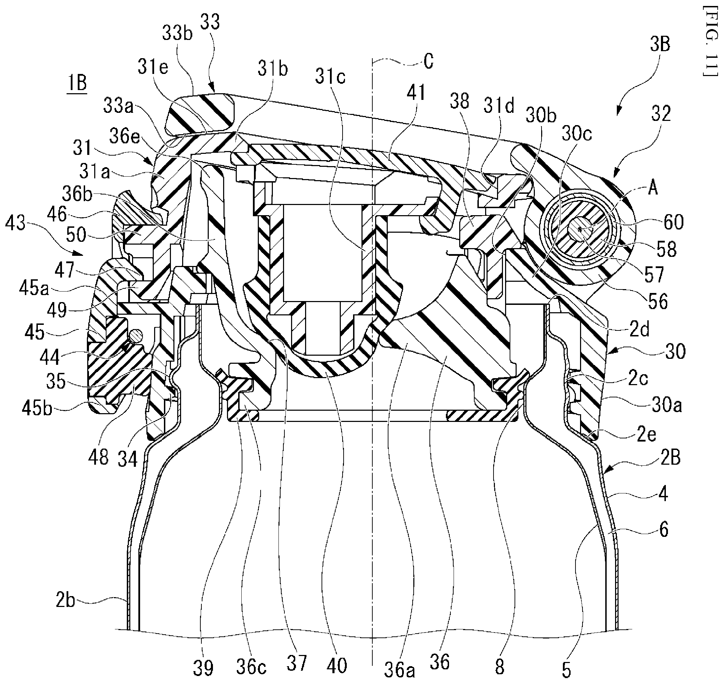

As depicted in FIG. 10 and FIG. 11, the beverage container 1B of the present embodiment includes a cap unit 3B and a cylindrical container main body with bottom 2B to which the cap unit 3B is attached. The cap unit 3B is detachably attached by screwing to the mouth/neck part 2c of the container main body 2B having an open upper part. The cap unit 3B constitutes a plug body that plugs the upper opening part 2d of the container main body 2B.

The container main body 2B of this embodiment has a male threaded part 35 at the mouth/neck part 2c. The male threaded part 35 is provided on the outer peripheral part of the mouth/neck part 2c.

The cap unit 3B includes: a cap main body 30 having a cylindrical shape with top that closes the upper opening part 2d of the container main body 2B; an opening forming member 36 attached to the cap main body 30 and having a liquid passage opening 37 communicating with the inside of the container main body 2B; an opening detaching mechanism 38 for detachably attaching the opening forming member 36 to the cap main body 30; water blocking packing 39 that seals between the container main body 2B and the opening forming member 36; a lid body 31 having a cylindrical shape with top that covers the liquid passage opening 37, provided above the cap main body 30 and the opening forming member 36; an annular ring member 33 provided above the lid body 31; a first hinge (hinge) 32 that connects the lid body 31 and the ring member 33 to the cap main body 30 so as to be rotatable around the hinge central axis A; and a lid locking mechanism 43 for fixing the lid body 31 to the cap main body 30 at the closed position.

Note that it can be said that the opening forming member 36, the opening attaching/detaching mechanism 38, and the water blocking packing 39 are all structural elements of the cap main body 30. Therefore, the cap main body 30 has an opening forming member 36 in which the liquid passage opening 37 is provided, an opening attaching/detaching mechanism 38, and the water blocking packing 39. In other words, the cap main body 30 includes the liquid passage opening 37. Furthermore, the opening forming member 36 may be formed integrally with the cap main body 30 in a non-detachable state without having the mouth attaching/detaching mechanism 38.

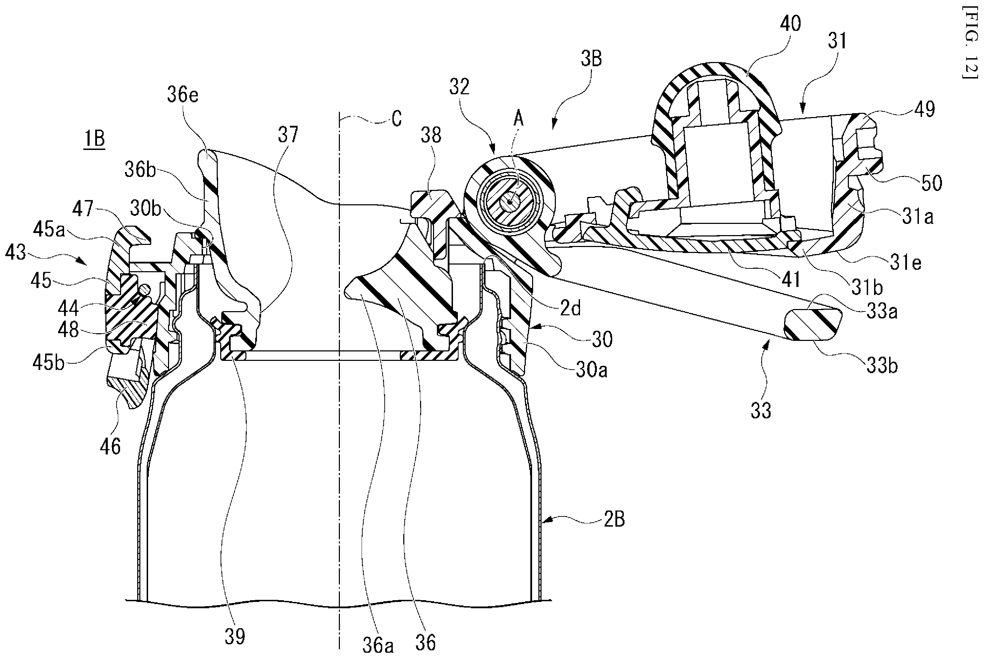

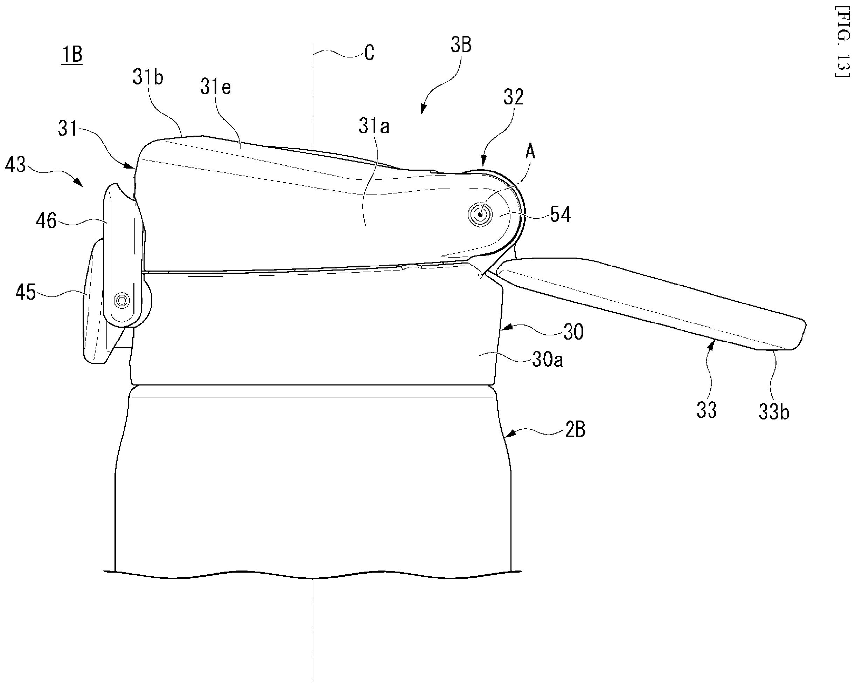

In this embodiment, the longitudinal cross-sectional view of the cap unit 3B depicted in FIG. 11 shows the closed state (closed position) of the lid body 31 and the stored state of the ring member 33, the longitudinal cross-sectional view of the cap unit 3B depicted in FIG. 12 shows the open state (open position) of the lid body 31 and the open state of the ring member 33, and the side surface view of the cap unit 3B depicted in FIG. 13 shows the closed state (closed position) of the lid body 31 and the open state of the ring member 33.

In the present embodiment, the closed state (closed position) of the lid body 31 depicted in FIG. 11 represents a first orientation of the lid body 31 in which the lower end opening part of the lid body 31 and the upper end outer peripheral part of the cap main body 30 face each other. Furthermore, the open state (open position) of the lid body 31 depicted in FIG. 12 indicates a second orientation on the lid body 31 where the lid body 31 in the closed position is rotated around the hinge central axis A and opened such that a user can drink or pour out the beverage in the container main body 2B through the liquid passage opening 37. In the open position of the lid body 31, the lower and opening part of the lid body 31 and the upper end outer peripheral part of the cap main body 30 do not face each other.

Furthermore, in the present embodiment, the stored state of the ring member 33 depicted in FIG. 11 indicates a first orientation of the ring member 33 in which the lower surface 33a of the ring member 33 and the lid top wall part 31b, which will be described later, of the lid body 31 face each other. Furthermore, the open state of the ring member 33 depicted in FIG. 13 indicates that the ring member 33 in the stored state is rotated and opened (released) around the hinge central axis A, and indicates other orientations of the ring member 33 such that the ring member 33 can be gripped by a user (in other words, the orientation in which the ring member 33 functions as a handle). In the open state of the ring member 33, the lower surface 33a of the ring member 33 and the lid top wall part 31b of the lid body 31 do not face each other.

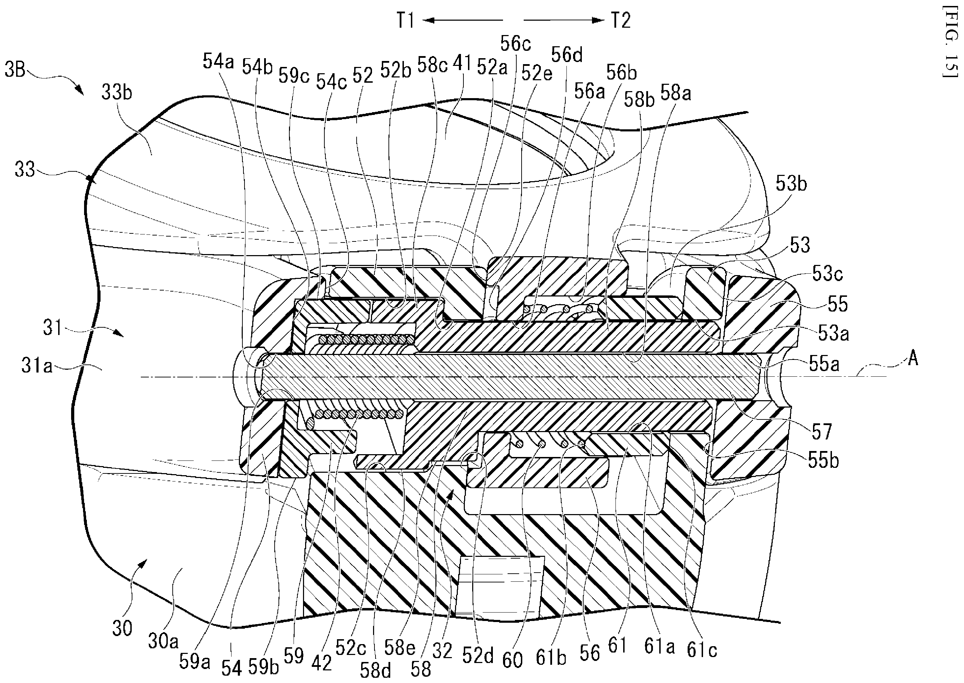

As depicted in FIG. 10 and FIG. 15, in this embodiment, the first side in the hinge axial direction corresponds to the tightening side T1 in the circumferential direction where the cap unit 3B and the container main body 2B are screwed together, and the second side in the hinge axial direction corresponds to the loosening side T2 in the circumferential direction.

The cap main body 30 is made of a heat resistant resin such as polypropylene (PP) or the like. As depicted in FIG. 11, the cap main body 30 includes a peripheral wall part 30a formed in a substantially cylindrical shape so as to be contiguous with the trunk part 2b of the container main body 2B, and a top wall part 30c connected to the upper end part of the peripheral wall part 30a. Furthermore, the top wall part 30c has an opening part 30b that penetrates the top wall part 30c in the vertical direction.

A female threaded part 34 is provided on the inner peripheral surface of the peripheral wall part 30a. The female threaded part 34 is screwed to the male threaded part 35 of the mouth/neck part 2c. Thus, the cap main body 30 is detachably attached to the mouth/neck part 2c of the container main body 2B by screwing.

As depicted in FIGS. 11 and 12, the opening part 30b of the cap main body 30 is detachably attached to an opening forming member 36 that forms a drinking spout or a pouring spout (drinking spout in this embodiment). In other words, the cap main body 30 is provided with the opening forming member 36. The opening forming member 36 is made of a heat resistant resin such as polypropylene (PP) or the like.

The opening forming member 36 includes: a bottom wall part 36a in which a liquid passage opening 37 is formed; a cylindrical peripheral wall part 36b that rises upward from the periphery of the bottom wall part 36a; a lower side flange part 36c extending outward in the radial direction from the lower end part of the bottom wall part 36a; a pair of upper side flange parts (not depicted) protruding leftward and rightward from the outer peripheral surface of the peripheral wall part 36b and extending in the front-rear direction; and an angle-cut drinking spout part 36e provided at the upper end opening edge of the peripheral wall part 36b and extends downward toward the rear side from the front end part of the upper end opening edge. By providing such a drinking spout part 36e, the front end part of the peripheral wall part 36b protrudes upward above the other parts.

An opening attaching/detaching mechanism 38 for detachably attaching the opening forming member 36 to the opening part 30b of the cap main body 30 is provided between the cap main body 30 and the opening forming member 36. For example, the configuration described in Japanese Patent No. 5312542 can be used as the mouth attach/detach mechanism 38, and a detailed description thereof will be omitted in this embodiment. Note that the opening forming member 36 may be detachable from the cap main body 30 or may be integrated with the cap main body 30.

The water blocking packing 39 is detachably attached to the lower flange part 36c of the opening forming member 36. The water blocking packing 39 is a ring-shaped sealing member for sealing between the protruding part 8 (container main body 2B) and the opening forming member 36. The water blocking packing 39 is made of an elastic member such as a heat-resistant rubber, such as silicone rubber, or an elastomer. The water blocking packing 39 is fitted to the outer peripheral part of the lower flange part 36c.

When the water blocking packing 39 is fitted inside the upper opening part 2d of the container main body 2B, the water blocking packing is elastically deformed and comes into close contact with the protruding part 8 of the container main body 2B over the entire circumference. Thereby, it is possible to seal the space between the protruding part 8 and the opening forming member 36.

The lid body 31 is made of a heat resistant resin such as polypropylene (PP) or the like. The lid body 31 opens and closes the liquid passage opening 37 which is a drinking spout or a pouring spout of the opening forming member 36. As depicted in FIG. 11, the lid body 31 is provided between the cap main body 30 and the ring member 33 in the vertical direction.

The lid body 31 is biased by a torsion spring (lid biasing part) 42, which will be described later, provided on the first hinge 32 in a direction that opens the liquid passage opening 37 of the opening forming member 36, or in other words, in an opening direction. The lid body 31 is rotatably connected to the cap main body 30 via the first hinge 32 while being biased in the opening direction around the hinge central axis A.

The lid body 31 includes a lid peripheral wall part 31a formed in a substantially cylindrical shape so as to be contiguous with the peripheral wall part 30a of the cap main body 30, a lid top wall part 31b connected to the upper end part of the lid peripheral wall part 31a, and a cylindrical inner wall part 31c protruding downward from the lid top wall part 31b.

A lid packing 40 is provided inside the lid body 31 to close the liquid passage opening 37 of the opening forming member 36. In other words, the lid body 31 has a lid packing 40. The lid packing 40 is a plug-like sealing member for sealing the liquid passage opening 37. The lid packing 40 is made of an elastic member, and can be made of the same material as the water blocking packing 39.

The lid packing 40 has a substantially cylindrical shape with a bottom, and is detachably attached to the inner wall part 31c with the inner wall part 31c fitted therein. The bottom surface (lower surface) of the lid packing 40 is formed in a dome shape that protrudes downward.

In the cap unit 3B, when the lid body 31 closes the upper part of the cap main body 30, the lid packing 40 is elastically deformed and comes into close contact with the periphery of the liquid passage opening 37. Thereby, the liquid passage opening 37 of the opening forming member 36 can be closed.

When the lid packing 40 is attached to the inner wall part 31c, the lid packing is elastically deformed so as to expand in diameter, and is tightly fitted to the inner wall part 31c by being inserted such that the lid packing is tightly fit to the inner wall part 31c. Therefore, even if the inside of the container main body 2B develops a negative pressure when the lid body 31 is in the closed position and a tensile force acts on the lid packing 40 toward the inside of the container main body 2B, the lid packing 40 will be prevented from separating from the inner wall part 31c when the lid body 31 is opened. Therefore, when the lid body 31 is opened, the liquid passage opening 37 can be stably opened.

The lid top wall part 31b has a recessed part 31d recessed downward from the upper surface of the lid top wall part 31b. A cover member 41 is attached to the recessed part 31d so as to cover the inner wall part 31c from above. In other words, the lid body 31 has a cover member 41. The cover member 41 is made of the same material as the lid body 31 and is formed in a substantially disc shape.

The cover member 41 is not limited to being made of the same material as the lid body 31, but may be made of a different material or have a different color, or may be made of a transparent material. Furthermore, a three-dimensional structure may be provided on the upper part of the cover member 41, or a stamp may be applied to the upper surface. Thereby, it is possible to provide the cap unit 3B with an excellent design.

As depicted in FIGS. 11 and 13, the lid top wall part 31b has a tapered surface 31e. The tapered surface 31e is provided on the outer peripheral part of the upper surface of the lid top wall part 31b. The tapered surface 31e has a tapered surface shape that slopes downward in the radially outward direction. The tapered surface 31e extends in the circumferential direction so as to surround the recessed part 31d from the outside in the radial direction, and has a substantially C shape opening rearward when viewed from above.

As depicted in FIG. 11, a lid locking mechanism 43 fixes the lid body 31 to the cap main body 30 against the biasing force of the torsion spring 42, which will be described later, at the position where the lid body 31 opposes the liquid passage opening 37, or in other words in the position where the lid body 31 is closed.

Specifically, the lid locking mechanism 43 includes: a locking member 45 rotatably attached to the cap main body 30 via a second hinge 44; and a ring stopper 46a rotatably attached to the cap main body 30 via the second hinge 44. Note that a hinge central axis (not depicted) of the second hinge 44 extends in the left-right direction.

The locking member 45 is rotatably supported by the second hinge 44 provided at the front end part of the peripheral wall part 30a of the cap main body 30. The locking member 45 has a first extending part 45a extending upward from the second hinge 44, and a second extending part 45b extending downward from the second hinge 44.

A hook part 47 is provided on the tip part of the first extending part 45a (upper end part of the locking member 45) so as to protrude rearward. An elastic member (rubber member or spring member) 48 is provided in a state of compression in the front-rear direction between the second extending part 45b and the peripheral wall part 30a. The elastic member 48 biases the second extending part 45b toward the front side.

As depicted in FIG. 10, the ring stopper 46 is a member that curves and extends in a substantially semicircular shape, and both ends of the ring stopper are rotatably supported by the second hinge 44. As a result, the ring stopper 46 is vertically rotatable around the second hinge 44.

Furthermore, as depicted in FIG. 11, the lid locking mechanism 43 has a lock receiving part 49 to which the hook part 47 of the locking member 45 is locked, and a stopper receiving part 50 to which the ring stopper 46 is locked. The lock receiving part 49 is formed of a claw part that protrudes forward from the lower part of the front end part of the lid peripheral wall part 31a of the lid body 31. The stopper receiving part 50 has a shape that fits into the inner peripheral part of the ring stopper 46, and includes a wall part that protrudes forward from a position surrounding the periphery of the lock receiving part (claw part) 49 in the front end part of the lid peripheral wall part 31a.

In the lid locking mechanism 43, when the lid body 31 closes the upper part of the cap main body 30, the hook part 47 of the locking member 45 is engaged with the lock receiving part 49, so that a state where the lid body 31 is locked to the upper part of the cap main body 30 is maintained. From this state, the locking member 45 rotates around the second hinge 44 by the user pushing the second extending part 45b of the locking member 45 rearward against the biasing force of the elastic member 48, while the first extending part 45a is displaced forward, and the locked state of the hook part 47 is released from the lock receiving part 49. As a result, the lid body 31 can be rotated in the opening direction as depicted in FIG. 12 by the biasing force of the torsion spring 42 in the first hinge 32. Note that by rotating the lid 31 in the opening direction, the ring member 33 is also rotated in the opening direction together with the lid body 31.

As depicted in FIG. 11, in the lid locking mechanism 43, when the lid 31 closes the upper part of the cap main body 30, the ring stopper 46 is hooked to the stopper receiving part 50, and thereby rotation in the opening direction of the lid body 31 is prevented. As a result, the lid locking mechanism 43 can prevent the lid body 31 from opening by an unnecessary (unintended) operation of the locking member 45 or the like.

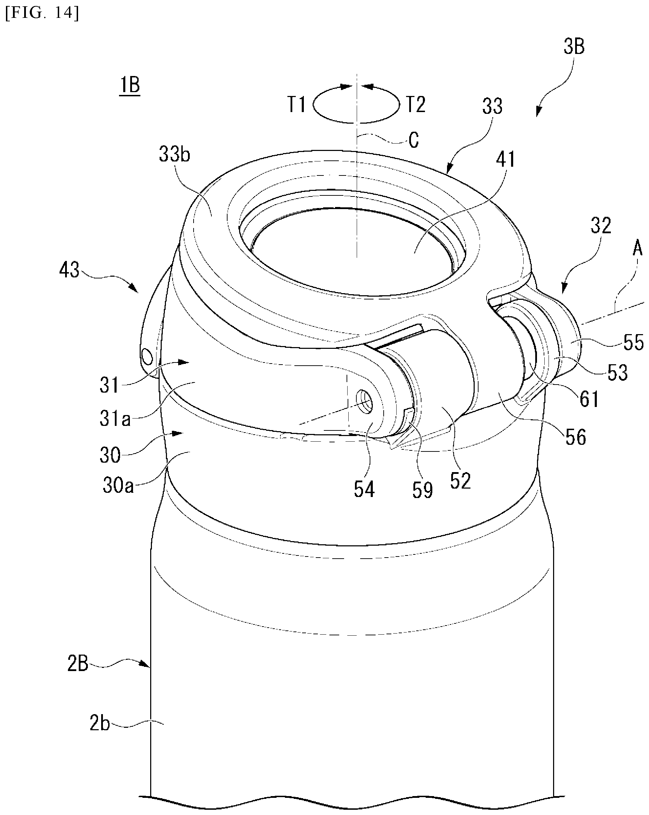

The ring member 33 is made of a heat resistant resin such as polypropylene (PP) or the like. As depicted in FIG. 14, the ring member 33 has an annular shape, and in this embodiment, has a substantially annular disc shape. As depicted in FIG. 11, the ring member 33 is provided above the cap main body 30 and the lid body 31. Specifically, in the stored state of the ring member 33 depicted in FIG. 11, the ring member 33 is provided on the lid top wall part 31b, and more specifically, is provided on the outer peripheral part of the lid top wall part 31b, or in other words, on the tapered surface 31e.

The lower surface 33a of the ring member 33 has a shape that conforms to the shape of the lid top wall part 31b of the lid body 31 that faces the lower surface 33a. In other words, the lower surface 33a of the ring member 33 has a tapered shape that follows the tapered shape of the tapered surface 31e, or in other words, has a reverse tapered surface shape that matches the tapered surface 31e. Specifically, the lower surface 33a of the ring member 33 has a tapered surface that slopes downward and radially outward.

The upper surface 33b of the ring member 33 has a tapered surface that slopes downward and radially outward. Therefore, when the ring member 33 is in a stored state, for example when the user rotates the cap unit 3B in the circumferential direction in order to attach/detach the cap unit 3B to/from the container main body 2B, the cap unit can easily be grasped and rotated by the palm of the hand together with the ring member 11.

The first hinge (hinge) 32 connects the rear part of the cap main body 30 and the rear part of the lid body 31, so as to be relatively rotatable in the hinge circumferential direction. Furthermore, the first hinge 32 connects the rear part of the cap main body 30 and the rear part of the ring member 33, so as to be relatively rotatable in the hinge circumferential direction. In other words, the first hinge 32 connects the cap main body 30, the lid body 31, and the ring member 33, so as to be relatively rotatable around the hinge central axis A. The first hinge 32 has a spring mechanism including a biasing part 60 and an enclosure part 61, which will be described later. The first hinge 32 is configured around the hinge central axis A and extends in the hinge axial direction.

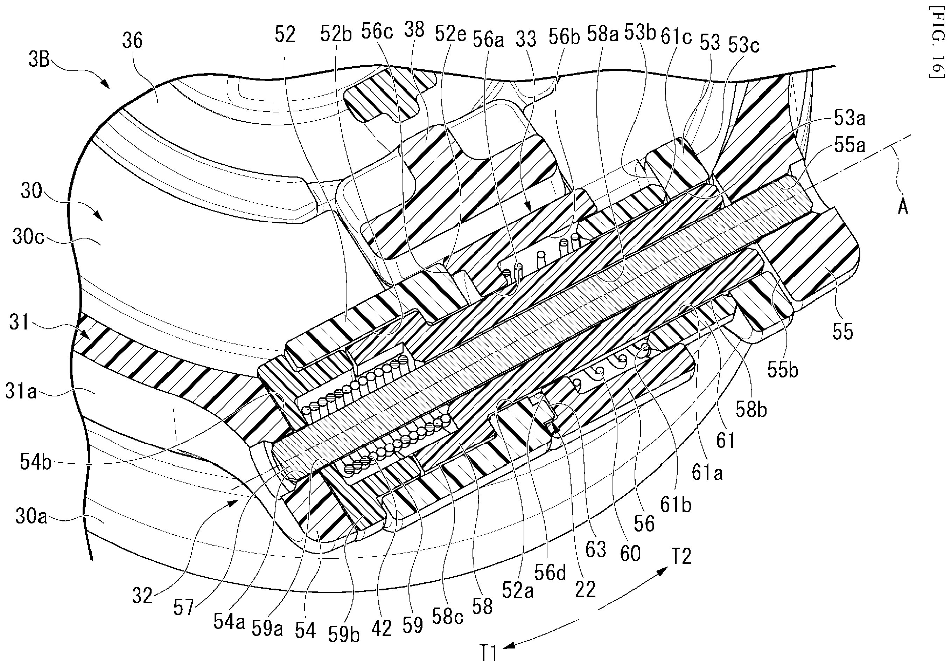

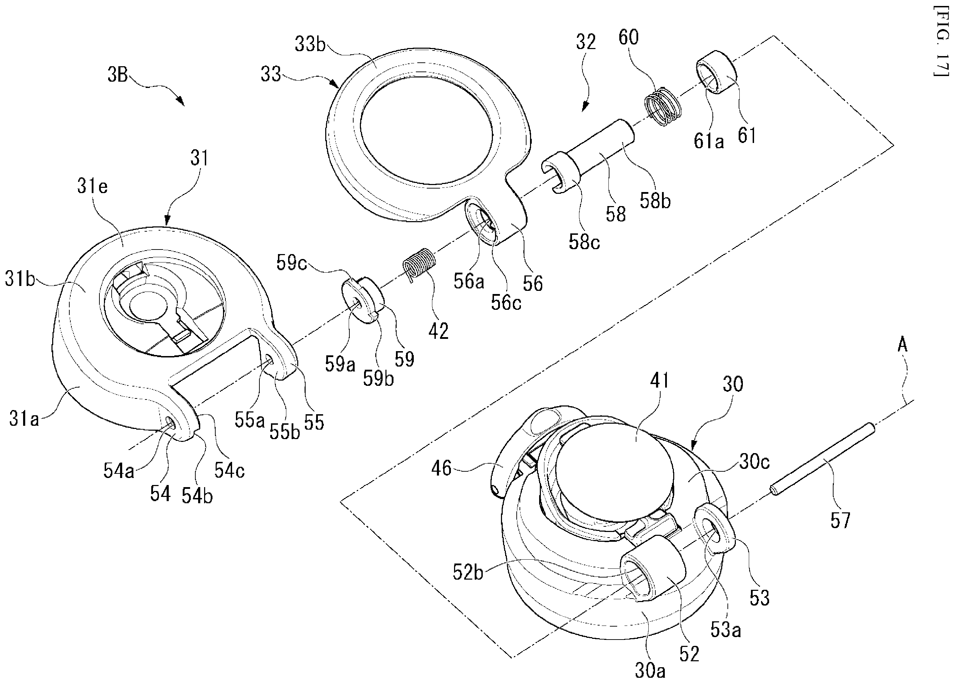

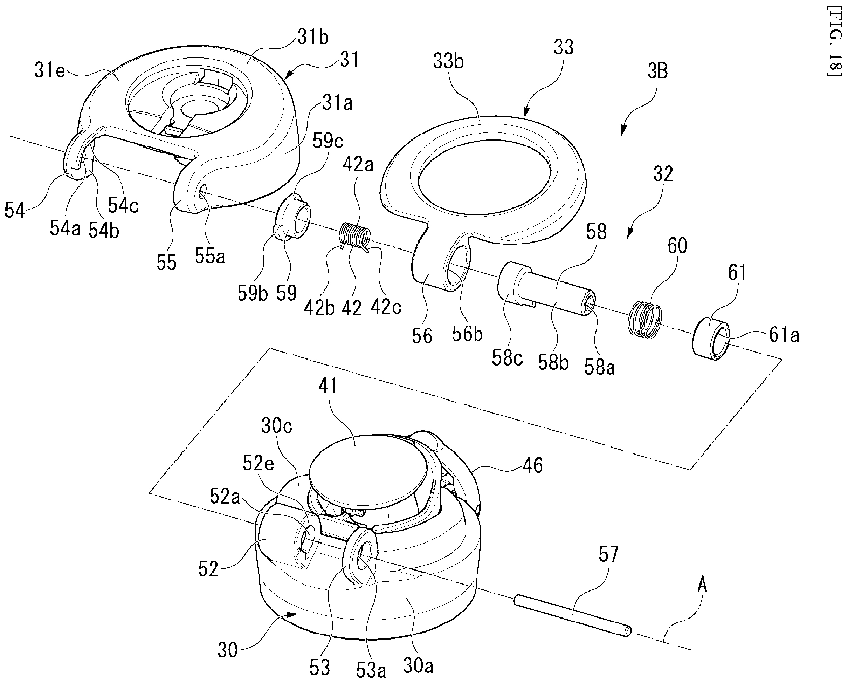

As depicted in FIGS. 14 to 22, the first hinge 32 includes cap bearing parts 52 and 53, lid bearing parts 54 and 55, a ring bearing part 56, a biasing part (ring member biasing part) 60, an enclosure part 61, a shaft cover 58, an opposing member 59, a torsion spring (lid body biasing part) 42, and a hinge shaft 57. Note that FIG. 15 shows a cross-section (longitudinal cross-section) of the first hinge 32 parallel to the central axis C of the cap unit 3B, and specifically depicts a longitudinal cross-sectional view of the first hinge 32 including the hinge central axis A. Furthermore, FIG. 16 shows a cross-section (lateral cross-section) of the first hinge 32 perpendicular to the central axis C of the cap unit 3B, and specifically depicts a lateral cross-sectional view of the first hinge 32 including the hinge central axis A. Furthermore, in the exploded perspective view of the cap unit 3B depicted in FIGS. 17 and 18, the arrangement order of the constituent members is partly different from the arrangement relationship of the constituent members after assembly (assembled state).

Two of either one of the cap bearing parts 52, 53 or the ring bearing part 56 are provided with an interval in the hinge axial direction, and one of the other of the cap bearing parts 52, 53 or the ring bearing part 56 are provided between the aforementioned two parts. Furthermore, in the present embodiment, of the cap bearing parts 52, 53 and the ring bearing part 56, the cap bearing parts 52, 53 are provided with a mutual interval provided in the hinge axial direction, and one ring bearing part 56 is provided between the two cap bearing parts 52, 53.

As depicted in FIGS. 17, 18, 20 and 21, the cap bearing parts 52 and 53 protrude rearward and upward from the rear end part of the top wall part 30c of the cap main body 30. In other words, the cap bearing parts 52, 53 is provided on the cap main body 30. The cap bearing parts 52, 53 are integrally formed with the cap main body 30 as a single member. The present embodiment has two cap bearing parts 52, 53.

The two cap bearing parts 52, 53 include a first cap bearing part 52 and a second cap bearing part 53. The first cap bearing part 52 is provided on a first side of the two cap bearing parts 52, 53 in the hinge axial direction. The second cap bearing part 53 is provided on a second side of the two cap bearing parts 52, 53 in the hinge axial direction.

The first cap bearing part 52 has a substantially cylindrical shape extending in the hinge axial direction. As depicted in FIGS. 15, 16, 20, and 21, the first cap bearing part 52 includes a storage hole part 52b, a cap end surface 52e, a shaft hole 52a, a groove part 52c, and a shaft protrusion locking part 52d.

The storage hole part 52b has a circular hole with a bottom shape centered on the central axis A of the hinge. The storage hole part 52b opens in an end surface of the first cap bearing part 52 facing the first side in the hinge axial direction, and extends from this end surface to the second side in the hinge axial direction.

The cap end surface 52e is an end surface of the first cap bearing part 52 facing the second side in the hinge axial direction. The cap end surface 52e has a planar shape extending in a direction perpendicular to the central axis A of the hinge.

The shaft hole 52a has a circular hole shape extending in the hinge axial direction. The shaft hole 52a has an inner diameter dimension smaller than that of the storage hole part 52b. A first side end part of the shaft hole 52a in the hinge axial direction opens to the bottom surface of the storage hole part 52b. The end part of the shaft hole 52a on the second side in the hinge axial direction opens to the cap end surface 52e.

The groove part 52c is recessed to the outside in the hinge radial direction from the inner peripheral surface of the storage hole part 52b, and has a groove shape extending in the hinge axial direction. The groove part 52c is provided over the entire length of the storage hole part 52b in the hinge axial direction. In this embodiment, the width dimension of the groove part 52c in the hinge circumferential direction decreases toward the outside in the hinge radial direction.

The shaft protrusion locking part 52d is recessed outward in the hinge radial direction from the inner peripheral surface of the shaft hole 52a, and has a groove shape extending in the hinge axial direction. The shaft protrusion locking part 52d is provided over the entire length of the shaft hole 52a in the hinge axial direction. A first side end part of the shaft protrusion locking part 52d in the hinge axial direction opens to the bottom surface of the storage hole part 52b. The end part of the shaft protrusion locking part 52d on the second side in the hinge axial direction opens to the cap end surface 52e. In this embodiment, the width dimension of the shaft protrusion locking part 52d in the hinge circumferential direction increases toward the outside in the hinge radial direction.

As depicted in FIGS. 15 to 18, the second cap bearing part 53 has a substantially annular plate shape centered on the central axis A of the hinge. The second cap bearing part 53 has an inner side surface 53b, an outer sliding contact surface 53c, and a shaft hole 53a.

The inner side surface 53b is provided on the end surface of the second cap bearing part 53 facing the first side in the hinge axial direction. The inner side surface 53b has a planar shape extending in a direction perpendicular to the central axis A of the hinge.

The outer sliding contact surface 53c is provided on the end surface of the second cap bearing part 53 facing the second side in the hinge axial direction. The outer sliding contact surface 53c has a planar shape extending in a direction perpendicular to the central axis A of the hinge.

The shaft hole 53a penetrates the second cap bearing part 53 in the hinge axial direction. The shaft hole 53a has a circular shape centered around the central axis A of the hinge. A first side end part of the shaft hole 53a in the hinge axial direction opens to the inner side surface 53b. A second side end part of the shaft hole 53a in the hinge axial direction opens to the outer sliding contact surface 53c.

The lid bearing parts 54, 55 protrude rearward from the lid peripheral wall part 31a of the lid body 31. In other words, the lid bearing parts 54, 55 are provided on the lid body 31. The lid bearing parts 54, 55 are formed integrally with the lid body 31 as a single member. In this embodiment, two lid bearing parts 54, 55 are provided spaced apart from each other in the hinge axial direction.

The two lid bearings parts 54, 55 include a first lid bearing part 54 and a second lid bearing part 55. The first lid bearing part 54 is provided on a first side of the two lid bearing parts 54, 55 in the hinge axial direction. The first lid bearing part 54 is provided adjacent to the first side of the first cap bearing part 52 in the hinge axial direction. The second lid bearing part 55 is provided on a second side of the two lid bearing parts 54, 55 in the hinge axial direction. The second lid bearing part 55 is provided adjacent to the second side of the second cap bearing part 53 in the hinge axial direction.

The first lid bearing part 54 has a substantially cylindrical shape extending in the hinge axial direction. As depicted in FIGS. 15 and 18, the first lid bearing part 54 has a mounting recessed part 54b, a rotation contact part 54c, and a shaft hole 54a.

The mounting recessed part 54b is recessed or notched toward the first side in the hinge axial direction from the end surface of the first lid bearing part 54 facing the second side in the hinge axial direction. The bottom surface of the mounting recessed part 54b faces the second side in the hinge axial direction. The bottom surface of the mounting recessed part 54b has a planar shape extending in a direction perpendicular to the central axis A of the hinge.

The rotation contact part 54c protrudes to the second side in the hinge axial direction from the bottom surface of the mounting recessed part 54b. The rotation contact part 54c is rib-shaped extending in the front-rear direction, and is provided above the mounting recessed part 54b. The rotation contact part 54c is provided so as to cover the mounting recessed part 54b from above. The rotation contact part 54c has a curved part extending in the circumferential direction of the hinge, and a linear part extending in the front-rear direction.

The shaft hole 54a has a substantially circular hole shape extending in the hinge axial direction. The end part of the shaft hole 54a on the first side in the hinge axial direction opens to the end surface of the first lid bearing part 54 facing the first side in the hinge axial direction. The second side end part of the shaft hole 54a in the hinge axial direction opens to the bottom surface of the mounting recessed part 54b.

The second lid bearing part 55 has a substantially cylindrical shape extending in the hinge axial direction. As depicted in FIGS. 15 to 17, the second lid bearing part 55 has an inner side surface 55b and a shaft hole 55a.

The inner side surface 55b is provided on the end surface of the second lid bearing part 55 facing the first side in the hinge axial direction. The inner side surface 55b has a planar shape extending in a direction perpendicular to the central axis A of the hinge. The inner side surface 55b contacts the outer sliding contact surface 53c of the second cap bearing part 53 in a slidable manner.

The shaft hole 55a has a substantially circular hole shape penetrating the second lid bearing part 55 in the hinge axial direction. A first side end part of the shaft hole 55a in the hinge axial direction opens to the inner side surface 55b. The end part of the shaft hole 55a on the second side in the hinge axial direction opens to the end surface of the second lid bearing part 55 facing the second side in the hinge axial direction.

As depicted in FIG. 11, the ring bearing part 56 protrudes rearward and downward from the rear end part of the ring member 33. In other words, the ring bearing part 56 is provided on the ring member 33. The ring bearing part 56 is integrally formed with the ring member 33 as a single member.

As depicted in FIGS. 14 to 16, the ring bearing part 56 has a substantially cylindrical shape extending in the hinge axial direction. The ring bearing part 56 is positioned substantially in the center part in the left-right direction of the rear end part of the ring member 33. The ring bearing part 56 is positioned at substantially the center part of the first hinge 32 in the hinge axial direction.

The ring bearing part 56 is provided adjacent to the cap bearing parts 52, 53 in the hinge axial direction. Specifically, the ring bearing part 56 is provided adjacent to the second side of the first cap bearing part 52 in the hinge axial direction, or is provided adjacent to the first side of the second cap bearing part 53 in the hinge axial direction. In other words, the ring bearing part 56 is provided between the pair of cap bearing parts 52, 53 in the hinge axial direction.

In other words, in this embodiment, the first hinge (hinge) 32 includes: cap bearing parts 52, 53 provided on the cap main body 30; lid bearing parts 54, 55 provided on the lid body 31; a ring bearing part 56 provided on the ring member 33 and arranged side by side with the cap bearing parts 52, 53 and the lid bearing parts 54, 55 in the hinge axial direction; and a hinge shaft 57 that supports the cap bearing parts 52, 53, the lid bearing parts 54, 55, and the ring bearing part 56, so as to be relatively rotatable around the hinge central axis A.

As depicted in FIGS. 15, 16 and 22, the ring bearing part 56 has a storage concave part 56b, a ring end surface 56c, and a shaft hole 56a. In other words, the first hinge 32 has a storage concave part 56b.

In this embodiment, the storage concave part 56b is recessed in the ring bearing part 56, and extends in the hinge axial direction. Specifically, the storage concave part 56b has a circular hole shape with bottom centered on the hinge central axis A, is opened at the end surface of the ring bearing part 56 facing a second side in the hinge axial direction, and extends from the end surface toward the first side in the hinge axial direction.

The ring end surface 56c is an end surface of the ring bearing part 56 facing the first side in the hinge axial direction. The outer peripheral part of the ring end surface 56c has a planar shape extending in a direction perpendicular to the central axis A of the hinge. The cap end surface 52e of the first cap bearing part (cap bearing part) 52 facing the second side in the hinge axial direction and the of the ring end surface 56c (outer peripheral part) of the ring bearing part 56 facing the first side in the hinge axial direction contact in a mutually sliding condition.

Furthermore, the ring end surface 56c has a concave surface 56d provided to the inside of the outer peripheral part of the ring end surface 56c in the hinge radial direction. The concave surface 56d is formed to be recessed to the second side in the hinge axial direction from the outer peripheral part of the ring end surface 56c.

The shaft hole 56a has a circular hole shape extending in the hinge axial direction. The shaft hole 56a has an inner diameter dimension smaller than that of the storage concave part 56b. The end part of the shaft hole 56a on the first side in the hinge axial direction opens to the concave surface 56d of the ring end surface 56c. The second side end part of the shaft hole 56a in the hinge axial direction opens to the bottom surface of the storage concave part 56b.

The biasing part 60 is elastically deformable. As depicted in FIGS. 15 to 18, the biasing part 60 of this embodiment is a metal compression coil spring that is elastically deformable in the hinge axial direction. The biasing part 60 is stored in the storage concave part 56b. The end part of the biasing part 60 on the first side in the hinge axial direction contacts the bottom surface of the storage concave part 56b facing the second side in the hinge axial direction. The end part to the second side in the hinge axial direction of the biasing part 60 contacts an end surface (an biasing part contacting surface 61b described later) facing the first side in the hinge axial direction of an enclosure part 61.

The biasing part 60 biases the ring bearing part 56 toward the first side in the hinge axial direction with respect to the second cap bearing part (cap bearing part) 53 via the enclosure part 61. In other words, the biasing part 60 biases the ring member 33 toward the first side in the hinge axial direction with respect to the cap main body 30. Furthermore, the biasing part 60 allows the ring member 33 to be displaced to the second side in the hinge axial direction with respect to the cap main body 30 by elastic deformation.

The enclosure part 61 has a cylindrical shape centered on the hinge central axis A and extends in the hinge axial direction. The enclosure part 61 is provided on the first side of the second cap bearing part 53 in the hinge axial direction, and is provided on the second side of the biasing part 60 in the hinge axial direction. The enclosure part 61 is interposed between the second cap bearing part 53 and the biasing part 60 in the hinge axial direction. At least a portion of the enclosure part 61 is inserted into the storage concave part 56b. As a result, the enclosure part 61 encloses the biasing part 60 in the storage concave part 56b. A portion of the enclosure part 61 other than the part inserted into the storage concave part 56b is exposed to the outside between the second cap bearing part 53 and the ring bearing part 56.

In the present embodiment, at least part of the enclosure part 61 (end part on the first side in the hinge axial direction) is inserted into the storage concave part 56b, such that the enclosure part 61 is not completely separated from the storage concave part 56b, and therefore the biasing part 60 sealed inside the storage concave part 56b is not exposed to the outside. Therefore, the biasing part 60 is not visible from the outside, and a favorable appearance can be obtained.

The enclosure part 61 is made of a material different from that of the second cap bearing part 53, such as polyacetal (POM) or acrylonitrile-butadiene-styrene (ABS), or the like, and a material with superior wear resistance over the second cap bearing part 53 is preferably used.

The enclosure part 61 has a biasing part contact surface 61b, an outer contact surface 61c, and a shaft hole 61a.

The biasing part contact surface 61b is provided on the end surface of the enclosure part 61 facing the first side in the hinge axial direction. The biasing part contact surface 61b contacts the end part of the biasing part 60 on the second side in the hinge axial direction.

The outer contact surface 61c is provided on the end surface of the enclosure part 61 facing the second side in the hinge axial direction. The outer contact surface 61c contacts the inner side surface 53b of the second cap bearing part 53 in a slidable manner.

The shaft hole 61a penetrates the enclosure part 61 in the hinge axial direction. The first side end part of the shaft hole 61a in the hinge axial direction opens to the biasing part contacting surface 61b. A second side end part of the shaft hole 61a in the hinge axial direction opens to the outer contact surface 61c. The shaft hole 61a has a circular hole shape extending in the hinge axial direction.

In the cap unit 3B of the present embodiment, the durability of the first hinge 32 can be improved by constructing the enclosure part 61 having excellent wear resistance separately from the second cap bearing part 53. Furthermore, by constructing the enclosure part 61 separately from the second cap bearing part 53, it is possible to improve moldability of the cap main body 30 and facilitate dimensional control. Note that if the effect on moldability and dimensions of the second cap bearing part 53 is not considered, the enclosure part 61 does not have to be formed separately. In other words, for example, a configuration where the second cap bearing part 53 and the enclosure part 61 are integrated may be used.

As depicted in FIGS. 15, 16 and 19, the shaft cover 58 has a substantially multistage cylindrical shape extending in the hinge axial direction. The shaft cover 58 is inserted into the first cap bearing part 52, the ring bearing part 56, the biasing part 60, the enclosure part 61, and the second cap bearing part 53 from the first side in the hinge axial direction.

The shaft cover 58 is made of a material different from that of the second cap bearing parts 52, 53, such as polyacetal (POM) or acrylonitrile-butadiene-styrene (ABS), or the like, and a material with superior wear resistance over the cap bearing parts 52, 53 is preferably used.

The shaft cover 58 has a small diameter cylindrical part 58b, a large diameter cylindrical part 58c, a shaft hole 58a, a protruding part 58d, and a shaft protruding part 58e.

The small diameter cylindrical part 58b has a cylindrical shape centered on the hinge central axis A and extends in the hinge axial direction. The small diameter cylindrical part 58b is inserted into each of the shaft hole 52a of the first cap bearing part 52, the shaft hole 56a and the storage concave part 56b of the ring bearing part 56, the biasing part 60, the shaft hole 61a of the enclosure part 61, and the shaft hole 53a of the second cap bearing part 53. Furthermore, the end surface of the small diameter cylindrical part 58b facing the second side in the hinge axial direction contacts the inner side surface 55b of the second lid bearing part 55 in a slidable manner.

The large diameter cylindrical part 58c is provided on the first side of the small diameter cylindrical part 58b in the hinge axial direction. The large diameter cylindrical part 58c has a substantially cylindrical shape with a larger diameter than the small diameter cylindrical part 58b, and is connected to the end of the small diameter cylindrical part 58b on the first side in the hinge axial direction. Specifically, the large diameter cylindrical part 58c has a substantially cylindrical shape with bottom having an opening on the end surface of the shaft cover 58 facing the first side in the hinge axial direction. The large diameter cylindrical part 58c is provided in the storage hole part 52b of the first cap bearing part 52.

The shaft hole 58a passes through the shaft cover part 58 in the hinge axial direction. The shaft hole 58a has a circular shape centered around the central axis A of the hinge. The end part of the shaft hole 58a on the first side in the hinge axial direction opens to the bottom wall part of the large diameter cylindrical part 58c. The end part of the shaft hole 58a on the second side in the hinge axial direction opens to the end surface of the small diameter cylindrical part 58b facing the second side in the hinge axial direction.

The protruding part 58d has a rib shape that protrudes outward in the hinge radial direction from the outer peripheral surface of the large diameter cylindrical part 58c and extends in the hinge axial direction. In this embodiment, the width dimension of the protruding part 58d in the hinge circumferential direction decreases toward the outside in the hinge radial direction. The protruding part 58d is locked in the groove part 52c of the first cap bearing part 52.

The shaft protruding part 58e has a rib shape that protrudes outward in the hinge radial direction from the outer peripheral surface of the small diameter cylindrical part 58b and extends in the hinge axial direction. The shaft convex part 58e is provided at the first end of the small diameter cylindrical part 58b in the hinge axial direction, and is connected to the second end of the protruding part 58d in the hinge axial direction. In this embodiment, the width dimension of the shaft protruding part 58e in the hinge circumferential direction increases toward the outside in the hinge radial direction. The shaft protruding part 58e is locked to the shaft protrusion locking part 52d of the first cap bearing part 52.

The shaft cover 58 is secured to the first cap bearing part 52 by locking the protruding part 58d and the groove part 52c, or by locking the shaft protruding part 58e and the shaft protrusion locking part 52d in a manner that is not rotatable in the hinge circumferential direction. In other words, the shaft cover 58 is attached to the cap main body 30 in a state in which rotation in the hinge circumferential direction is restricted.

As depicted in FIGS. 15 to 18, the opposing member 59 is a substantially cylindrical member centered on the central axis A of the hinge. Specifically, the opposing member 59 has a substantially cylindrical shape with bottom having an opening at the end on the second side in the hinge axial direction. The opposing member 59 is provided adjacent to the first side of the shaft cover 58 in the hinge axial direction. The opposing member 59 is provided across each of the interior parts of the storage hole part 52b of the first cap bearing part 52 and the mounting recessed part 54b of the first lid bearing part 54. The bottom wall part of the opposing member 59 contacts the bottom surface of the mounting recessed part 54b. The opposing member 59 and the large diameter cylindrical part 58c of the shaft cover 58 are provided adjacent to each other so that the openings face each other in the hinge axial direction.

The opposing member 59 is made of a material different from that of the first lid bearing part 54, such as polyacetal (POM) or acrylonitrile-butadiene-styrene (ABS), or the like, and a material with superior wear resistance over the first lid bearing part 54 is preferably used.

In the cap unit 3B of the present embodiment, the durability of the first hinge 32 can be improved by constructing the opposing member 59 having excellent wear resistance separately from the first lid bearing part 54. Note that the first lid bearing part 54 is not necessarily configured to be separate from the opposing member 59, and for example, a configuration where the opposing member 59 is integrated, and a configuration where a wear resistant coating is applied to the surface are both acceptable.

The opposing member 59 has a flange part 59b, a lid pressing part 59c, and a shaft hole 59a. The flange part 59b is provided at the end part of the opposing member 59 on the first side in the hinge axial direction, and has a flange shape protruding outward from the outer peripheral surface of the opposing member 59 in the hinge radial direction. The surface of the flange part 59b facing the first side in the hinge axial direction contacts the bottom surface of the mounting recessed part 54b. The surface of the flange part 59b facing the second side in the hinge axial direction slidably contacts the end surface of the first cap bearing part 52 facing the first side in the hinge axial direction.

The lid pressing part 59c is provided at the end of the opposing member 59 on the first side in the hinge axial direction. The lid pressing part 59c is formed in a planar shape by cutting out a portion of the flange part 59b in the hinge circumferential direction. The lid pressing part 59c contacts the rotation contact part 54c of the first lid bearing part 54 from below.

The shaft hole 59a penetrates the bottom wall part of the opposing member 59 in the hinge axial direction. The shaft hole 59a has a circular shape centered around the central axis A of the hinge.

The torsion spring 42 is provided inside both of the large diameter cylindrical part 58c of the shaft cover 58 and the opposing member 59. The torsion spring 42 is a metal torsion coil spring centered on the central axis A of the hinge. As depicted in FIG. 18, the torsion spring 42 includes a winding part 42a wound in a coil shape, a first protruding end 42b extending from the end of the winding part 42a on the first side in the hinge axial direction, and a second protruding end 42c extending from the end of the winding part 42a on the second side in the hinge axial direction.

Although not depicted, the torsion spring 42 is configured such that the first protruding end 42b is locked to the peripheral wall part of the opposing member 59, and the second protruding end 42c is provided in the first hinge 32 locked to the peripheral wall part of the large diameter cylindrical part 58c.

With the above configuration, when the user rotates the lid body 31 from the open position to the side opposite to the opening direction, or in other words, in the closing direction, the rotation contact part 54c of the first lid bearing part 54 contacts the lid pressing part 59c, and therefore the opposing member 59 is also rotated in the closing direction together with the lid body 31. As a result, elastic deformation occurs in the direction that the opening angle between the first protruding end 42b and the second protruding end 42c of the torsion spring 42 narrows, and biasing of the lid body 31 in the opening direction with regard to the cap main body 30 is possible due to the repulsive force (restoring deformation force) of the torsion spring. Furthermore, the ring member 33 is also indirectly biased in the opening direction by the lid body 31 being biased in the opening direction.

When the lid body 31 is rotated in the opening direction and the closing direction, the lid body 31 and the opposing member 59 rotate in the hinge circumferential direction, while the cap main body 30 and the shaft cover 58 do not rotate in the hinge circumferential direction. Therefore, the first lid bearing part 54 slides on the first cap bearing part 52, the opposing member 59 slides on the first cap bearing part 52 and the shaft cover 58, and the second lid bearing part 55 slides on the second cap bearing part 53 and the shaft cover 58.

As depicted in FIG. 15 and FIG. 16, the hinge shaft 57 has a cylindrical shape centered on the hinge central axis A and extends in the hinge axial direction. The hinge shaft 57 is made of metal. The hinge shaft 57 is provided so as to pass through the first lid bearing part 54, the opposing member 59, the torsion spring 42, the first cap bearing part 52, the shaft cover 58, the ring bearing part 56, the biasing part 60, the enclosure part 61, and the second cap bearing part 53, and the second lid bearing part 55 in the hinge axial direction. Furthermore, the hinge shaft 57 axially supports the cap bearing parts 52, 53 and the ring bearing part 56 via the shaft cover 58 in a manner that is rotatable relative to the central axis A of the hinge.

Furthermore, as depicted in FIGS. 16, 21 and 22, in the present embodiment, one of either the cap end surface 52e or the ring end surface 56c has a stepped part 63 as the click mechanism (storage state holding mechanism 22) of the first hinge 32. The other of the cap end surface 52e and the ring end surface 56c has a convex part 62 capable of riding up over the stepped part 63 around the hinge central axis A against the biasing force of the biasing part 60.

Specifically, in this embodiment, the cap end surface 52e has a protruding stepped part 63 that protrudes from the cap end surface 52e to the second side in the hinge axial direction. Furthermore, the ring end surface 56c has a convex part 62 that protrudes from the concave surface 56d to the first side in the hinge axial direction.

The cap unit 3B of the present embodiment includes a storage state holding mechanism 22 that holds the orientation of the ring member 33 when the ring member 33 is in the stored state. Furthermore, the storage state holding mechanism 22 includes a convex part (locked part) 62 provided on the ring member 33, and a stepped part (locking part) 63 locked to the convex part 62 of the ring member 33 in the stored state. In this embodiment, the storage state holding mechanism 22 is provided on the first hinge (hinge) 32 side (or in other words, on the rear side) of the cap central axis C in the front-rear direction.

When the ring member 33 is rotated toward the opening direction around the hinge central axis A by a torque exceeding a prescribed value by an operation of the user, the convex part 62 rides up on the stepped part 63 in the hinge circumferential direction.

More specifically, in the process of shifting from the stored state of the ring member 33 to the open state of the ring member 33, the convex part 62 rotates about the hinge central axis A together with the ring member 33, and the ring bearing part 56 that has been placed is pressed to the second side in the hinge axial direction against the biasing force of the biasing part 60 by rotating the ring member 33 by a torque that exceeds a prescribed value while the stepped part 63 is able to ride up around the hinge central axis A.

In other words, in the process of shifting from the stored state of the ring member 33 to the open state of the ring member 33, the convex part 62 can ride up on the stepped part 63 in the circumferential direction against the biasing force of the biasing part 60. Specifically, in the above process, a force that displaces the ring bearing part 56 (ring member 33) toward the second side in the hinge axial direction is generated by bringing the convex part 62 into contact with the stepped part 63, and the biasing part 60 is elastically deformed. The elastic deformation of the biasing part 60 displaces the ring bearing part 56 to the second side in the hinge axial direction, and the convex part 62 rides up over the stepped part 63 in the hinge circumferential direction.

Furthermore, contrary to the above, in the process of returning the ring member 33 from the open state to the stored state, the ring member 33 rotates forward, and immediately before entering the stored state, the convex part 62 rides up over the stepped part 63, and thereby the storage state holding mechanism 22 again maintains the orientation of the ring member 33 in the stored state. When the ride over occurs, the user can receive a click feeling and can feel that the operation is completed.

Note that when the ring member 33 in the stored state rotates rearward (opening direction), an operation resistance is generated when the convex part 62 rides up over the stepped part 63 to the opposite side in the hinge circumferential direction, and therefore it is possible to prevent unintentional rotation to the rear side. Furthermore, when the user rotates the ring member rearward, the user can receive a click feel due to the operation resistance of the riding over, and can feel that the rotation operation has started.

In the present embodiment, the convex part 62 is configured to ride up over the stepped part 63 immediately before the ring member 33 enters the stored state, but there is no limitation to this, and the riding up position may be freely set by appropriately adjusting the positions of the convex part 62 and the stepped part 63. For example, in the reference example of the present embodiment, the convex part 62 can be configured so as to ride up on the stepped part 63 immediately before the ring member 33 is rotated from the open state to the limit on the rearward side. In this case, the ring member 33 is held in the open state by locking the convex part 62 and the stepped part 63. Therefore, the convex part 62 and the stepped part 63 function as an open state holding mechanism that holds the orientation of the ring member 33, when the ring member 33 is in the open state.

Furthermore, as another example, the convex part 62 may be configured to ride up on the stepped part 63 at a position where the ring member 33 stands vertically in the open state. In this case, the user can feel a click feeling due to the operation resistance of riding up, and can feel that the ring member 33 is standing in the vertical direction.

Furthermore, in this embodiment, the biasing part 60 biases the ring member 33 toward the hinge axial direction with respect to the cap main body 30. Therefore, resistance to sliding is generated when the ring member 33 is rotated, and the ring member 33 can be stopped in a position that is standing vertically by adjusting the sliding resistance by the elastic force of the biasing member 60, for example. As a result, by providing the beverage container 1B in a state in which the ring member 33 stands vertically, the user can promptly hook the ring member 33 by a finger to carry the container. Note that the ring members 33 can be stopped (made stationary) at any position while being rotated around the central axis A of the hinge, not only at the position of standing vertical, due to the sliding resistance.

Furthermore, in the storage state holding mechanism 22 of the present embodiment, the convex part 62 is configured to ride up on the stepped part 63, but with reference to the storage state holding mechanism 21 of the first embodiment, the convex part 62 can be configured so as to stay up rather than just riding up on the step part 63. For example, one of either the convex part 62 or the stepped part 63 is made to be concave and recessed with respect to the other. A case where the stepped part 63 has a concave shape will be described, and herein, the concave stepped part is referred to as 63'.

In this case, by rotating the ring member 33 around the hinge central axis A from the state in which the convex part 62 is stored in the stepped part 63', the convex part 62 is rotated together with the ring member 33, the ring bearing part 56 (ring member 33) is pressed to the second side in the hinge axial direction, and the stepped part 63 can ride up around the hinge central axis A against the biasing force of the biasing part 60, by rotating the ring member 33 with a torque that exceeds a prescribed value. After riding up, the ring member 33 is rotated around the hinge central axis A while being in the riding state, and therefore the convex part 62 is in contact with the cap end surface 52e in a slide-able manner.

Even if there is no biasing by the biasing part 60 in the present embodiment, with this structure, if the convex part 62 is pressed against the cap end surface 52e after the convex part 62 rides up on the stepped part 63', the ring member 33 can be stopped (made stationary) at an arbitrary position while being rotated around the hinge central axis A by adjusting the sliding resistance using the degree of elastic deformation, friction due to the material and shape, and the like. In other words, when one side slides while riding up on the other side, high sliding resistance can be set for most of the sliding stroke, and the ring member 33 can be stopped at an arbitrary position along the hinge central axis A while rotating around the hinge central axis A. This is the same as the first embodiment where the biasing part 19 is not provided.

Furthermore, conversely to the above, the case will be described where the convex part 62 is returned from the state where the convex part rides up on the stepped part 63' around the hinge central axis A to the state where the convex part 62 is stored in the stepped part 63'. In this case, by rotating the ring member 33 about the hinge central axis A in the direction opposite to the above, when the convex part 62 rotates in the hinge circumferential direction with respect to the stepped part 63' and both parts are at mutually opposing positions in the hinge axial direction, the biasing part 60 is restored and deformed, the convex part 62 is displaced toward the first side in the hinge axial direction, and the convex part 62 is reinserted (locked) into the stepped part 63'.

Note that as described above, even if there is no biasing by the biasing part 60 in the present embodiment, the state in which the convex part 62 is stored in the stepped part 63' can be restored by adjusting the sliding resistance based on the degree of elastic deformation caused by the convex part 62 being pressed against the cap end surface 52e, the friction due to the material and shape, and the like.

Furthermore, as described above, the same effect can be obtained by exchanging the convex part 62 and the stepped part 63 so that the convex part 62 has a concave shape with respect to the stepped part 63.

On the other hand, a case will be described where the cap end surface 52e and the ring end surface 56c slide due to the convex shapes riding up on each other, such as the convex part 62 and the stepped part 63 of the present embodiment. In this case, the state of the ring member 33 is not maintained only by the convex part 62 and the stepped part 63, which are both convex shapes, but rather in the state in which the ring member is rotated to the limit in either the closing direction or the opening direction, and the function of either the storage state holding mechanism or the open state holding mechanism is performed by providing the convex part 62 and the stepped part 63 immediately before the rotation limit. In other words, there is a position where the ring member 33 cannot rotate any further, and when the ring member 33 is rotated so as to escape that state, the sliding resistance is temporarily increased so that riding up occurs. After riding up occurs, the sliding resistance will be low so the ring member 33 can be rotated smoothly. In other words, when one part rides up over the other, it is possible to establish a high sliding resistance only temporarily when riding up occurs.

Therefore, if there is no mechanism that provides sliding resistance, such as biasing of the ring member 33 with respect to the cap main body 30 in the hinge axial direction by the biasing part 60, it will be difficult to stop (make stationary) the ring member 33 in a standing position in the vertical direction or in an arbitrary position during rotation (or in other words, a position where sliding resistance is low) simply by having one set of convex shapes riding up on each other. Naturally, it is possible to stop at an arbitrary position by providing two sets of convex shapes that ride up on each other, and creating a pseudo concave shape therebetween.

Note that when the ring member 33 is stopped at an arbitrary position during rotation about the hinge central axis A by the sliding resistance of the biasing part 60, there is no problem regardless of whether the biasing direction is to the tightening side T1, which is the first side in the hinge axial direction, or to the loosening side T2, which is the second side in the hinge axial direction.

In this embodiment, the first hinge 32 has a storage state holding mechanism 22 as a click mechanism including the stepped part 63 and the convex part 62, and the click mechanism provides a click feel when the ring member 33 is rotated in the opening direction or in the closing direction around the hinge central axis A. Furthermore, in this embodiment, the sliding resistance of the biasing part 60 allows the ring member 33 to stop (become stationary) at an arbitrary position while being rotated around the hinge central axis A.

The same effects as the previous embodiment can be obtained by the cap unit 3B and the beverage container 1B of the present embodiment.

Specifically, as in the present embodiment, even with the configuration having the lid body 31 for opening and closing the liquid passage opening 37 of the opening forming member 36 and the lid locking mechanism 43 for fixing the lid 31 in the closed position, as with the first embodiment, the ring member 33 can be set in an open state or in a stored state, and the orientation of the ring member 33 can be suitably selected, which is highly convenient. In addition, the storage state holding mechanism 22 is provided to hold the ring member 33 in the orientation of the stored state, and therefore it is possible to prevent the ring member 33 in the stored state from being unintentionally opened, which is convenient and easy to operate. Moreover, the threaded condition between the cap unit 3B and the container main body 2B can be maintained well.

Specifically, with the first hinge 32 of the present embodiment, the direction in which the ring bearing part 56 (ring member 33) is biased by the biasing part 60 is the first side of the hinge axial direction, or in other words, the ring member 33 is generally biased toward the tightening side T1 in the circumferential direction. Furthermore, the ring bearing part 56 is slid and moved to the second side in the hinge axial direction by pushing the ring member 33 against the biasing force of the biasing part 60. The direction of this sliding movement is generally to the loosening side T2 in the circumferential direction. In other words, the rotational force applied to the ring member 33 toward the loosening side T2 in the circumferential direction can be absorbed by the elastic deformation of the biasing part 60, and transmission of this rotational force to the cap main body 30 can be prevented.

More specifically, conventionally, for example, when a user carries a beverage container by a finger being passed through the ring member, depending on how the user holds the beverage container, there is a risk that the weight or the like of the container main body causes the cap unit to rotate toward the loosening side in the circumferential direction. Furthermore, similarly, even if the beverage container is dropped in an inverted position (with the cap unit facing vertically downward), depending on how the container contacts the drop surface, there is a risk that the cap unit may be rotated to the loosening side in the circumferential direction. In these cases, if the cap unit rotates toward the loosening side in the circumferential direction, the sealing by the water blocking packing between the protruding part and the opening forming member may be released, and the beverage (content) stored in the container main body may leak out of the container.

On the other hand, with the present embodiment, the rotational force toward the loosening side T2 in the circumferential direction of the ring member 33 can be absorbed by the elastic deformation of the biasing part 60, thereby preventing rotation of the cap main body 30. Therefore, unscrewing between the cap unit 3B and the container main body 2B will not occur, and the beverage stored in the container main body 2B will not leak out. Note that when a beverage is stored in the container main body 2B, or when the container main body 2B and the cap unit 3B are to be disassembled and washed, the user can remove the cap unit 3B regardless of the biasing by the biasing part 60 by grasping the entire cap unit 3B or the peripheral wall part 30a of the cap main body 30, or the like, and rotating the cap unit 3B to the loosening side T2 in the circumferential direction. Furthermore, naturally, the cap unit 3B can easily be rotated to the tightening side T1 in the circumferential direction by grasping the entire cap unit 3B or the peripheral wall part 30a of the cap main body 30.

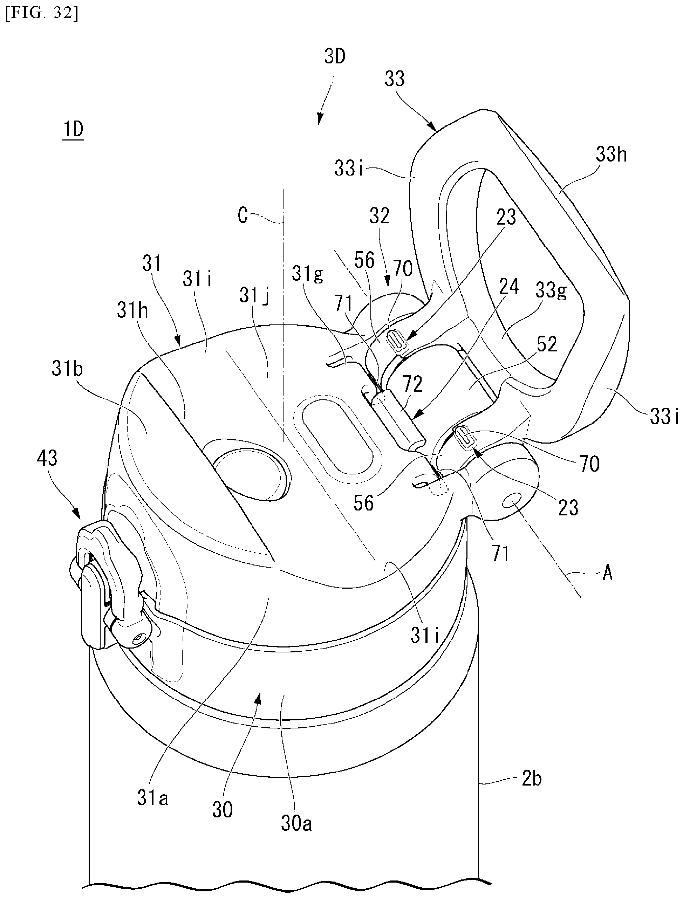

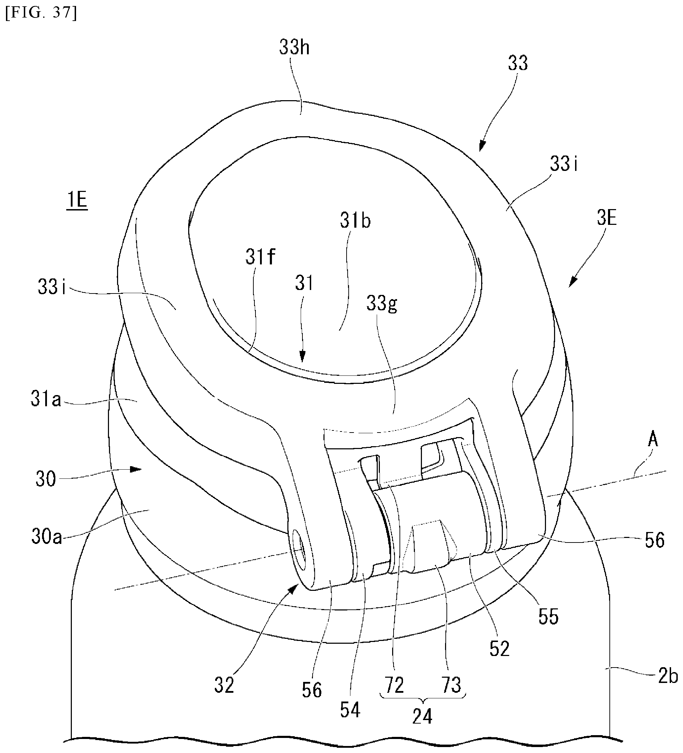

Note that this embodiment is configured such that two cap bearing parts 52, 53 are provided on the cap main body 30 side, two lid bearing parts 54, 55 are provided on the lid body 31 side, and one ring bearing part 56 is provided on the ring member 33 side, but the same effect can be obtained even if these numbers and arrangements thereof are interchanged. In other words, for example, one cap bearing part may be provided on the cap main body 30 side, and two ring bearing parts may be provided on the ring member 33 side so as to sandwich the one cap bearing part from both sides in the hinge axial direction. Furthermore, it is possible to adopt a configuration in which two lid bearing parts are provided on the lid body 31 side so as to sandwich the lid body from both outer sides in the hinge axial direction (see FIG. 32 of the fourth embodiment). Alternatively, it is also possible to adopt a configuration in which one cap bearing part may be provided on the cap main body 30 side, two lid bearing parts may be provided on the lid body 31 side so as to sandwich the single cap bearing part from both sides in the hinge axial direction, and two ring bearing parts are provided on the ring member 33 sides so as to sandwich from both outer sides (see FIG. 37 of the fifth embodiment). Alternatively, it is also possible to adopt a configuration in which one lid bearing part is provided on the lid body 31 side, two ring bearing parts are provided on the ring member 33 sides so as to sandwich the single lid bearing part from both sides in the hinge axial direction, and two cap bearing parts are provided on the cap main body 30 side so as to sandwich from both outer sides. Alternatively, it is also possible to adopt a configuration in which one ring bearing part is provided on the ring member 33 side, two lid bearing parts are provided on the lid body 31 side so as to sandwich the single ring bearing part from both sides in the hinge axial direction, and two cap bearing parts are provided on the cap main body 30 side so as to sandwich from both outer sides. In other words, the order in which the cap bearing part, the lid bearing part, and the ring bearing part are arranged in the hinge axial direction can be appropriately selected, but it is important that the ring bearing part is biased to the tightening side T1 which is the first side in the hinge axial direction with respect to the cap bearing part or the lid bearing part.

Furthermore, in this embodiment, the first hinge 32 has the storage state holding mechanism 22 as a click mechanism, so when the ring member 33 is in the stored state, and the ring member 33 is rotated in the opening direction, the convex part 62 rides up over the stepped part 63 such that a click feeling can be obtained, and the start of the rotation operation can be recognized using the senses. Furthermore, when the ring member 33 in the stored state rotates in the opening direction, resistance due to the biasing force is generated when the convex part 62 rides up on the stepped part 63, and therefore unintentional rotation of the ring member 33 in the opening direction can be prevented.

Furthermore, with the embodiment, the lower surface 33a of the ring member 33 has a shape that conforms to the shape of the lid top wall part 31b of the lid body 31 that faces the lower surface 33a. Specifically, in the present embodiment, the outer peripheral part of the lid top wall part 31b facing the lower surface 33a of the ring member 33 is a tapered surface 31e, and the lower surface 33a of the ring member 33 is a reverse tapered surface following the tapered surface 31e.

In this case, the lower surface 33a of the ring member 33 can be provided so as to be in close contact with the outer peripheral part of the lid top wall part 31b of the lid body 31. In other words, when the ring member 33 is in the stored state, the ring member fits well on the lid body 31. Therefore, the orientation of the ring member 33 in the stored state can easily be stabilized. Furthermore, by bringing the ring member 33 into close contact with the outer peripheral part of the lid top wall part 31b, the bulkiness in the vertical dimension of the cap unit 3B can be suppressed as a whole, and the size can be easily reduced. Furthermore, in this case, by placing the ring member 33 in the stored state, the cap unit 3B will have excellent aesthetic appearance.

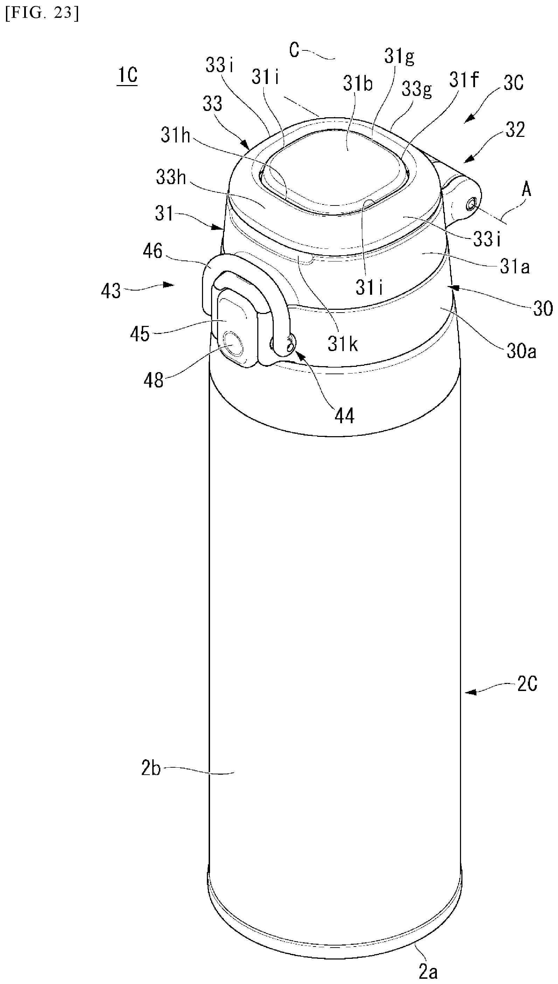

<Third Embodiment> Next, a cap unit 3C according to a third embodiment of the present invention and a beverage container 1C including the cap unit will be described with reference to FIG. 23 to FIG. 27. Note that, in this embodiment, the same configurations as those in the above-described embodiment may be assigned the same names and symbols, and a description thereof may be omitted.

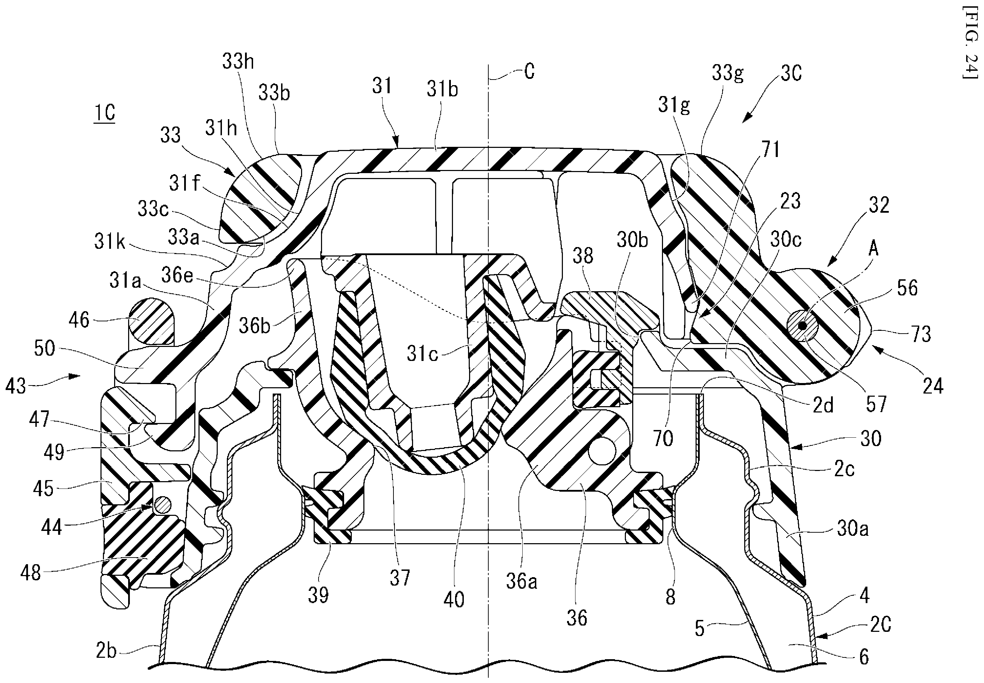

As depicted in FIG. 23 and FIG. 24, the beverage container 1C of the present embodiment includes a cap unit 3C and a cylindrical container main body with bottom 2C to which the cap unit 3C is attached. The cap unit 3C is detachably attached by screwing to the mouth/neck part 2c of the container main body 2C having an open upper part.

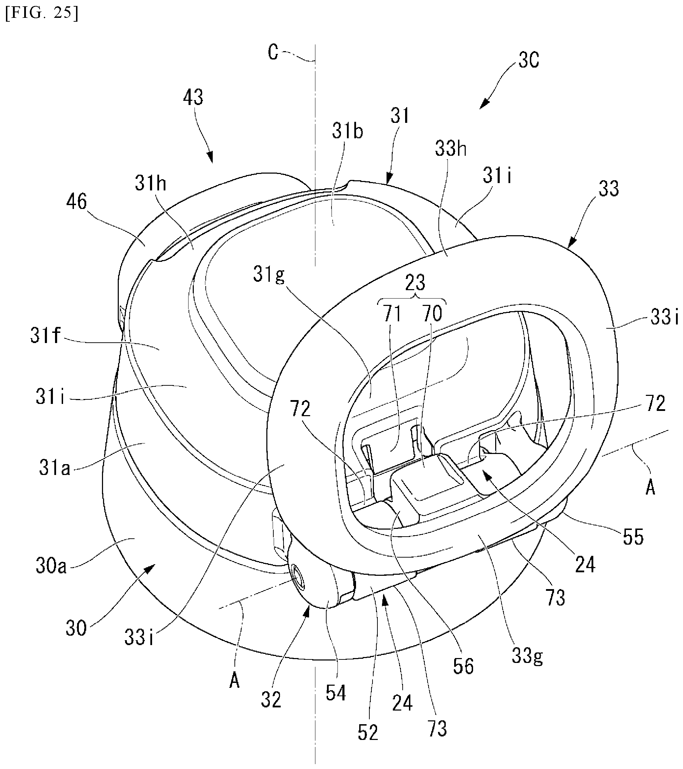

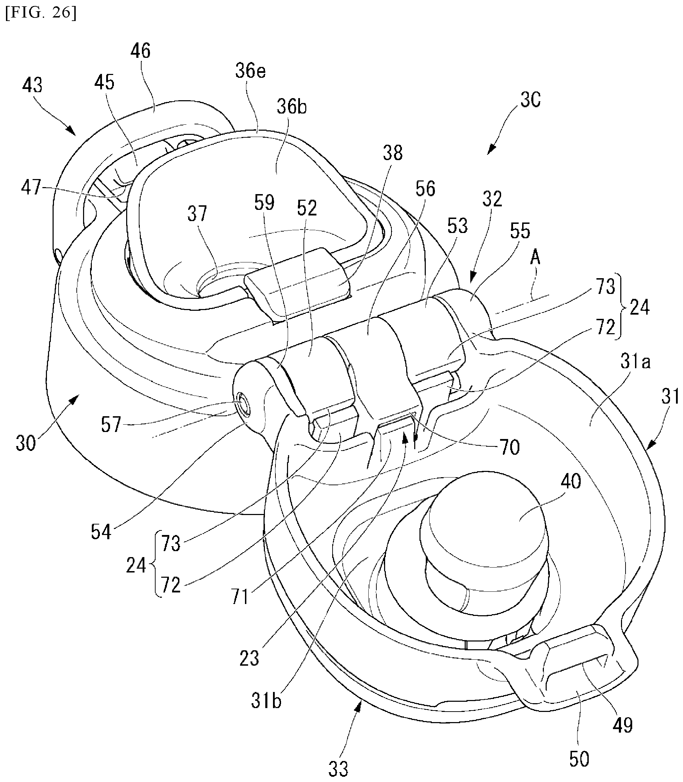

In this embodiment, the longitudinal cross-sectional view of the cap unit 3C depicted in FIG. 24 shows the closed state (closed position) of the lid body 31 and the stored state of the ring member 33. The perspective view of the cap unit 3C depicted in FIG. 25 shows the closed state (closed position) of the lid body 31 and the open state of the ring member 33. The perspective view of the cap unit 3C depicted in FIG. 26 shows the open state (open position) of the lid body 31 and the stored state of the ring member 33.

As depicted in FIGS. 23 to 25, the lid body 31 of the cap unit 3C has a concave or groove shaped storage concave part from the lid top wall part 31b of the lid body 31, but in the present embodiment, the storage concave part is the outer peripheral groove 31f. In other words, the lid top wall part 31b of the lid body 31 has an outer peripheral groove (storage concave part) 31f.

The outer peripheral groove 31f is provided on the outer peripheral part of the lid top wall part 31b. The outer peripheral groove 31f is recessed below a portion of the lid top wall part 31b other than the outer peripheral groove 31f and extends in the circumferential direction. The outer peripheral groove 31f has an annular shape centered around the central axis C. The outer peripheral groove 31f has a substantially polygonal shape when viewed from above, and has a substantially quadrangular shape in the present embodiment. However, there is no limitation to this, and although not depicted, the outer peripheral groove 31f may have a substantially circular shape when viewed from above. The outer peripheral groove 31f is located at the outer peripheral part of the upper end of the lid body 31 and opens upward and radially outward.

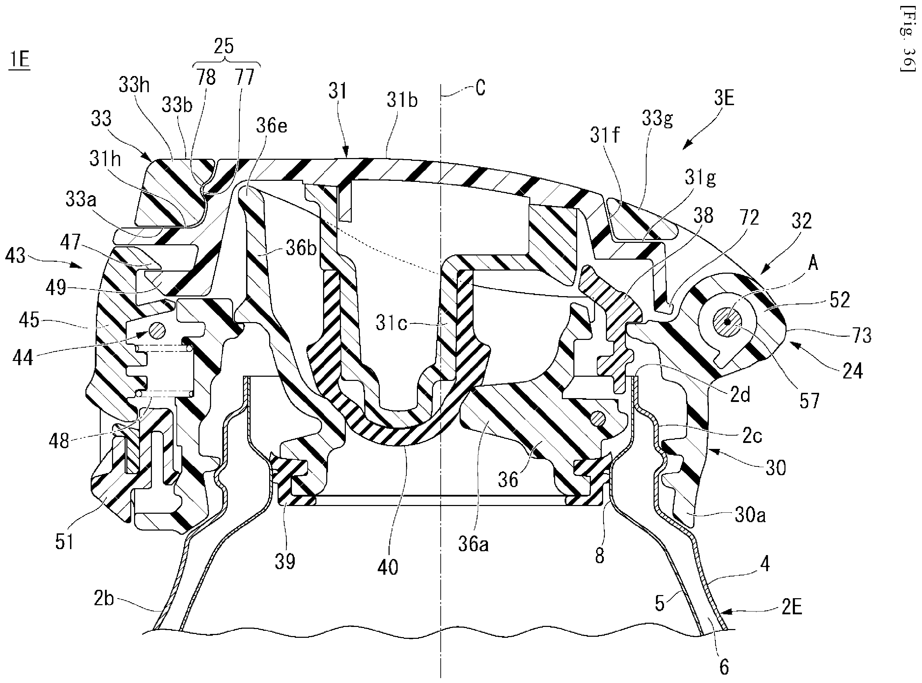

As depicted in FIG. 24, in a vertical cross-sectional view parallel to the central axis C, the wall surface of the outer peripheral groove 31f (inner wall of the groove) extends downward and radially outward. Specifically, in this embodiment, the outer peripheral groove 31f has a concave curved shape in the vertical cross-sectional view. In other words, the wall surface of the outer peripheral groove 31f is concavely curved. However, without being limited to this configuration, (the wall surface of) the outer peripheral groove 31f may have a side wall facing radially outward and a substantially planar bottom wall facing substantially upward (see, for example, FIG. 36).

The ring member 33 is provided above the cap main body 30 and above the lid body 31. In this embodiment, the ring member 33 has a substantially polygonal shape, specifically a substantially square shape. However, there is no limitation to this, and although not depicted, the ring member 33 may have a substantially circular shape.

In the stored state of the ring member 33 depicted in FIG. 24, the ring member 33 is provided on the lid top wall part 31b, and more specifically, is provided on the outer peripheral part of the lid top wall part 31b, or in other words, on the outer peripheral groove 31f. When the ring member 33 is stored, at least a portion of the ring member 33 is stored in the outer peripheral groove (storage concave part) 31f.

The lower surface 33a of the ring member 33 has an annular shape centered around the central axis C. The lower surface 33a of the ring member 33 has a shape that conforms to the shape of the lid top wall part 31b of the lid body 31 that faces the lower surface 33a. In other words, the lower surface 33a of the ring member 33 has a shape that conforms to the groove shape of the outer peripheral groove 31f that faces the lower surface 33a. Specifically, in the vertical cross-sectional view depicted in FIG. 24, the lower surface 33a of the ring member 33 extends downward moving outward in the radial direction. With this embodiment, the lower surface 33a of the ring member 33 has a convex curved shape when viewed on the vertical cross section. In other words, the lower surface 33a of the ring member 33 is convexly curved. However, the present invention is not limited to this configuration, and the ring member 33 may have a substantially planar lower surface facing downward and an inner side surface facing radially inward (see FIG. 36, for example).

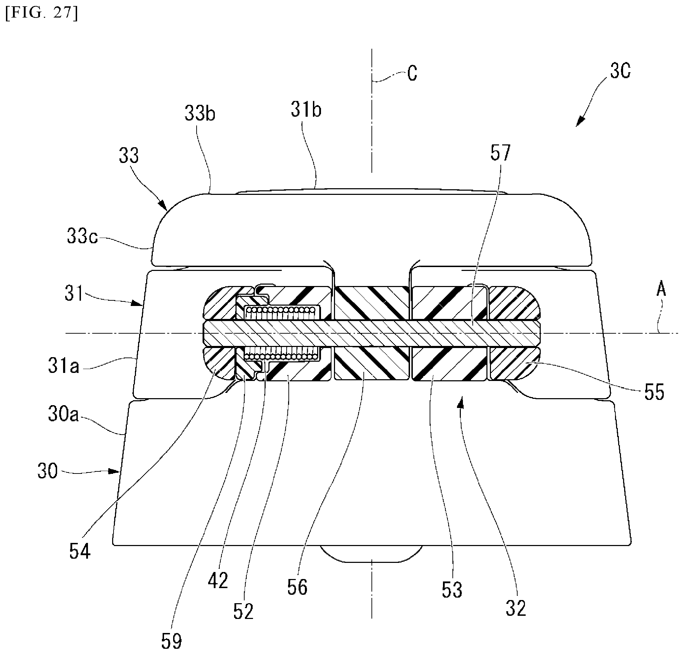

As depicted in FIG. 27, the outer peripheral surface 33c of the ring member 33 extends inward in the radial direction toward the upper side. In other words, the outer peripheral surface 33c of the ring member 33 has a tapered surface with a diameter that decreases toward the upper side. In this embodiment, if the ring member 33 is in the stored state depicted in FIG. 27, the outer peripheral surface 33c of the ring member 33 is provided substantially flush with the lid peripheral wall part 31a, so as to be contiguous with the lid peripheral wall part 31a of the lid body 31 (so as to form one contiguous surface). In other words, the outer peripheral surface 33c of the ring member 33 is provided so as to be contiguous with the lid peripheral wall part 31a of the lid body 31.

Furthermore, in this embodiment, as depicted in FIGS. 24 and 27, when the ring member 33 is in the stored state, the upper surface 33b of the ring member 33 is provided so as to be contiguous with the lid top wall part 31b of the lid body 31. Specifically, the upper surface 33b of the ring member 33 and the upper surface of the lid top wall part 31b of the lid body 31 are provided substantially flush so as to form one contiguous surface.

Furthermore, in this embodiment, as depicted in FIGS. 23 and 25, the ring member 33 has a ring rear end part 33g connected to the first hinge (hinge) 32, a ring front end part 33h located to the frontmost side when the ring member 33 is in the stored state, and a pair of ring side end parts 33i that connect the ring rear end part 33g and the ring front end part 33h.

Furthermore, at least one or more of the ring rear end part 33g, ring front end part 33h, and the pair of ring side end parts 33i are provided in the outer peripheral groove (storage concave part) 31f. Specifically, the outer peripheral groove 31f has a rear end placement part 31g where the ring rear end part 33g is provided, a front end placement part 31h where the ring front end part 33h is provided, and a pair of side end placement parts 31i where the pair of ring side end parts 33i are provided. In other words, in the present embodiment, the ring rear end part 33g, the ring front end part 33h, and the pair of ring side end parts 33i are all provided in the outer peripheral groove (storage concave part) 31f.

Furthermore, a groove part 31k that is recessed one step on the lid peripheral wall part 31a is provided on the lid body 31 further forward than the front end placement part 31h. Due to the presence of the groove part 31k, a gap is provided between the front end of the lower surface 33a of the ring member 33 and the lid peripheral wall part 31a when the ring member 33 is in the stored state. Therefore, the user can easily shift the ring member 33 from the stored state to the open state by inserting a finger into the groove part 31k and hooking the ring member 33.

In addition, as depicted in FIG. 24, with the cap unit 3C of the present embodiment, the storage state holding mechanism 23 is provided for holding the orientation of the ring member 33 in a stored state of the ring member 33 facing the lower surface 33a of the ring member 33 and the lid top wall part 31b of the lid body 31. Furthermore, the storage state holding mechanism 23 includes a protrusion (locked part) 70 provided on the ring member 33, and an elastic piece (locking part) 71 locked to the protrusion 70 of the ring member 33 in the stored state.

The protrusion 70 is provided so as to protrude forward from the ring bearing part 56 of the ring member 33. The elastic piece 71 has an elastically deformable plate shape and extends downward from the rear end part of the lid top wall part 31b of the lid body 31. When the ring member 33 is in the stored state, the elastic piece 71 faces or contacts the protrusion 70 with a gap formed from the opening direction side in the hinge circumferential direction.

The dimension along the hinge radial direction between the tip end (lower end) of the elastic piece 71 and the hinge central axis A is equal to or less than the dimension along the hinge radial direction between the tip end (front end) of the protrusion 70 and the hinge central axis A.

When the ring member 33 is rotated toward the opening direction around the hinge central axis A by a torque exceeding a prescribed value by an operation of the user, the protrusion 70 rides up on the elastic piece 71 in the hinge circumferential direction. Specifically, in the process of shifting from the stored state of the ring member 33 to the open state of the ring member 33 depicted in FIG. 25, the protrusion 70 rotates around the hinge central axis A together with the ring member 33. The protrusion 70 elastically deforms the elastic piece 71 to the outward in the hinge radial direction while slidingly contacting the elastic piece 71 by rotating the ring member 33 with a torque that exceeds a prescribed value, and thereby the elastic piece 71 can ride up on the hinge central axis A. During this ride over, the user can receive a click feel, and can recognize by the senses that the ring member 33 is released from the stored state.

Furthermore, contrary to the foregoing, in the process of returning the ring member 33 from the open state to the stored state, the ring member 33 is rotated to the closing direction side in the hinge circumferential direction, and immediately before reaching the stored state, the protrusion 70 is moved by the elastic piece 71 while the elastic piece 71 is elastically deformed outward in the hinge radial direction, and the elastic piece 71 rides up around the central axis A of the hinge. As a result, the storage state holding mechanism 23 again holds the ring member 33 in the orientation of the stored state. Furthermore, when the ride over occurs, the user can receive a click feeling and can feel that the operation is completed. Furthermore, in this embodiment, the storage state holding mechanism 23 is provided on the first hinge (hinge) 32 side (or in other words, on the rear side) of the cap central axis C in the front-rear direction.

Furthermore, as another example (reference example of the present embodiment), the protrusion 70 may be configured to ride over the elastic piece 71 around the hinge central axis A at the position where the ring member 33 stands up in the vertical direction in the open state. In this case, the user can feel a click feeling due to the operation resistance of riding up, and can feel that the ring member 33 is standing in the vertical direction.

Furthermore, in the present embodiment, the protrusion 70 will ride up at an arbitrary position on the elastic piece 71, and a sliding motion is possible while remaining in the riding up position by adjusting the shape of the protrusions 70, the shape of the elastic piece 71, and the manner of contact between the protrusions 70 and the elastic piece 71. Specifically, in addition to the respective shapes of the elastic piece 71 and the protrusion 70, the sliding distance, contact angle, sliding resistance, and the like are adjusted. The user feels a sudden resistance when the protrusion 70 rides on the elastic piece 71, and therefore the user can obtain an operational feel similar to a click feel. In the process of shifting from the stored state of the ring member 33 to the open state of the ring member 33, the arbitrary position for riding up can be any one of the position where the ring member 33 stands up in the vertical direction in the open state, immediately prior to rotation to the limit to the rear side when the ring member 33 is in the open state, or the like.

Furthermore, in the present embodiment, similarly, it is also possible to stop (make stationary) the ring member 33 while the protrusion 70 is riding up on the elastic piece 71, by adjusting the shape of the protrusion 70, the shape of the elastic piece 71, and the manner in which the protrusion 70 and the elastic piece 71 come into contact with each other, at an arbitrary position around the hinge central axis A. Specifically, in addition to the respective shapes of the elastic piece 71 and the protrusion 70, the sliding distance, contact angle, sliding resistance, and the like are adjusted. In particular, smooth stopping can be achieved by adjusting the sliding resistance so as to increase stepwise according to the rotation of the ring member 33 about the central axis A of the hinge. An arbitrary position of stopping while riding up is conceivably a position where the ring member 33 is in an open state and stands upward in the vertical direction. For example, when the ring member 33 is in an open state and is stopped at a position standing upward in the vertical direction, the user can carry the beverage container 1C by inserting a finger into the ring member 33 and placing the beverage container in a state where the ring member 33 stands upward in the vertical direction.

Furthermore, as depicted in FIG. 26, the cap unit 3C of the present embodiment also includes an open position holding mechanism 24 that holds the orientation of the lid body 31 at the open position where the lid 31 is rotated in the opening direction around the hinge central axis A. Furthermore, the open position holding mechanism 24 includes a lid elastic piece (lid lockable part) 72 provided on the lid body 31, and a lid protrusion (lid locking part) 73 that is locked to the lid elastic piece 72 of the lid body 31 in the open position. Note that in the present embodiment, the open position holding mechanism 24, or in other words, the set including the lid elastic piece 72 and the lid protrusion 73 is provided side by side in the hinge axial direction so as to sandwich the ring bearing part 56 of the ring member 33 therebetween.

The lid protrusion 73 is provided to protrude rearward from the cap bearing parts 52, 53 of the cap main body 30. The lid elastic piece 72 has an elastically deformable plate shape and extends downward from the rear end part of the lid top wall part 31b of the lid body 31 (See FIG. 25). As depicted in FIG. 26, when the lid body 31 is in the open position, the lid elastic piece 72 faces or contacts the lid protrusion 73 with a gap provided from the opening direction side in the hinge circumferential direction.

The dimension along the hinge radial direction between the tip end (lower end) of the lid elastic piece 72 and the hinge central axis A is equal to or less than the dimension along the hinge radial direction between the tip end (rear end) of the lid protrusion 73 and the hinge central axis A.

When the lid body 31 is rotated toward the closing direction around the hinge central axis A by a torque exceeding a prescribed value by an operation of the user, the lid elastic piece 72 rides up on the lid protrusion 73 in the hinge circumferential direction.

Specifically, in the process of moving the lid body 31 from the open position of the lid body 31 to the closed position depicted in FIG. 24, the lid elastic piece 72 is rotated around the hinge central axis A together with the lid body 31. When the lid body 31 is rotated by a torque that exceeds a prescribed torque, the lid elastic piece 72 is elastically deformed outward in the hinge radial direction while slidingly contacting the lid protrusion 73, and thereby the lid protrusion 73 can ride up around the hinge central axis A. During this ride over, the user can receive a click feel, and can recognize by the senses that the lid body 31 is released from the open position.

Furthermore, contrary to the above, in the process of opening the lid body 31 from the closed position to the open position, the lid body 31 is rotated to the opening direction side in the hinge circumferential direction, and immediately before reaching the open position, the lid elastic piece 72 slides on the lid protrusion 73 while being elastically deformed toward the outside in the hinge radial direction, and thereby the lid protrusion 73 will ride up around the hinge central axis A. As a result, the open position holding mechanism 24 holds the orientation of the lid body 31 in the open position. Furthermore, when the ride over occurs, the user can receive a click feeling and can feel that the operation is completed. Furthermore, the opening position holding mechanism 24 is provided on the first hinge (hinge) 32 side (or in other words, on the rear side) of the cap central axis C in the front-rear direction.

The cap unit 3C and the beverage container 1C of the present invention are provided with the storage state holding mechanism 23 that holds the ring member 33 in the stored state. Therefore, when the beverage container 1C is in an inverted orientation or when a centrifuga force acts on the beverage container 1C, the ring member 33 in the stored state can be prevented from being unintentionally moved to the open state. Therefore, the bulkiness of the ring member 33 is suppressed more stably, and the ring member 33 is less likely to get in the way when the beverage container 1C is stored in a bag or the like, or when the cap is opened and closed, which improves usability.

Furthermore, in the present embodiment, the storage state holding mechanism 23 includes a protrusion (locked part) 70 provided on the ring member 33 and an elastic piece (locked part) 71 locked to the protrusion 70 of the ring member 33 in the stored state, and the protrusion 70 rides up on the elastic piece 71 when the ring member 33 is rotated toward the opening direction about the hinge central axis A using a torque that exceeds a prescribed value.

In this case, by locking the protrusion (locked part) 70 and the elastic piece (locking part) 71, the ring member 33 in the stored state is stably prevented from being unintentionally moved to the open state. Furthermore, when the ring member 33 is used, the user rotates the ring member 33 in the opening direction using a torque that exceeds a prescribed value, and thereby the ring member 33 can easily be placed in the open state without requiring a difficult operation. Therefore, the operability is good.

Furthermore, when the user rotates the ring member 33 in the stored state in the opening direction around the hinge central axis A, the protrusion (locked part) 70 rides up on the elastic piece (locking part) 71, and thus the user can receive a click feel. The click feel allows the user to intuitively recognize that the ring member 33 has been released from the stored state.

Furthermore, when returning the ring member 33 from the open state to the stored state, the protrusion (locked part) 70 rides up on the elastic piece (locking part) 71 in the opposite direction to the above, and as a result, the user can still receive a click feel. The click feel allows the user to intuitively recognize that the ring member 33 has again been returned to the stored state.

Furthermore, in this embodiment, the storage state holding mechanism 23 is provided on the first hinge 32 side of the cap central axis C in the front-rear direction. In this case, the distance between the storage state holding mechanism 23 and the hinge central axis A is kept small, and thus the turning radius of the storage state holding mechanism 23 is kept small. As a result, the storage state holding mechanism 23 is less likely to be affected by molding errors, component deformation, and the like during manufacturing, and thus the function of the storage state holding mechanism 23 is maintained satisfactorily. In addition, the storage state holding mechanism 23 is provided at a position that is difficult to see from the front side, and thus the exterior design is favorable.

Furthermore, in this embodiment, the open position holding mechanism 24 is provided to hold the lid body 31 in the open position. Therefore, for example, even if the user tilts the container vigorously when drinking a beverage, it is possible to prevent a problem such as the lid body 31 in the open position being unintentionally closed and hitting the face.

Furthermore, in the present embodiment, the open position holding mechanism 24 is engaged with the lid elastic piece (lid lockable part) 72 provided on the lid body 31, and the lid protrusion (lid locking part) 73 that locks the lid elastic piece 72 of the lid body 31 in the open position. The lid elastic piece 72 rides up on the lid protrusion 73 when the lid body 31 is rotated in the closing direction around the hinge central axis A with a torque that exceeds a prescribed value. In this case, when the user drinks a beverage, the lid elastic piece (lid lockable part) 72 and the lid protrusion (lid locking part) 73 are locked, so that the lid body 31 in the open position can stably prevent unintentional rotation to the closed position. Furthermore, after the user has finished drinking the beverage, the user can easily return the lid body 31 to the closed position by rotating the lid body 31 in the closed direction with a rotational force above a prescribed value (prescribed torque or higher). Therefore, the operability is good.

Furthermore, when the user rotates the lid body 31 in the open position to the closing direction around the hinge central axis A, the user can receive a click feel if the lid elastic piece (lid lockable part) 72 rides up on the lid protrusion (lid locking part) 73. The click feel allows the user to recognize by senses that the lid body 31 has been released from the open position.

Furthermore, when the lid body 31 in the closed position is opened and moved to the open position, the user can still receive a click feeling by causing the lid elastic piece (lid lockable part) 72 to ride up in the opposite direction on the lid protrusion (lid locking part) 73. The click feel allows the user to recognize by senses that the lid body 31 is in the open position.

Furthermore, in the cap unit 3C and the beverage container 1C of the present embodiment, an outer peripheral groove (storage concave part) 31f is provided for storing at least a portion of the ring member 33 in the stored state. For this reason, when the ring member 33 is in the stored state, the amount of protrusion of the ring member 33 above the cap unit 3C is reduced, and the bulkiness is suppressed due to providing the ring member 33. Accordingly, the ring member 33 can be prevented from affecting the external design of the cap unit 3C. As in this embodiment, it is also possible to substantially integrate the ring member 33 in the stored state with the outer shape of the cap unit 3C.

Specifically, at least one or more of the ring rear end part 33g, ring front end part 33h, and pair of ring side end parts 33i, which are structural elements of the ring member 33, are provided in the outer peripheral groove (storage concave part) 31f, and in this embodiment, all these structural elements are provided in the outer peripheral groove 31f. It is possible to more stably suppress the ring member 33 from protruding from the cap unit 3C.

In this embodiment, if the ring member 33 is in the stored state as depicted in FIG. 27, the upper surface 33b of the ring member 33 is provided substantially contiguous with the lid top wall part 31b of the lid body 31, and the outer peripheral wall 33c of the ring member 33 is contiguous with the lid peripheral wall part 31a of the lid body 31.

In this case, the ring member 33 does not protrude from the upper surface or the outer peripheral surface of the cap unit 3C when the ring member 33 is in the stored state. Therefore, the ring member 33 in the stored state can be more integrated with the external shape of the cap unit 3C, and the external design of the cap unit 3C is more favorable.

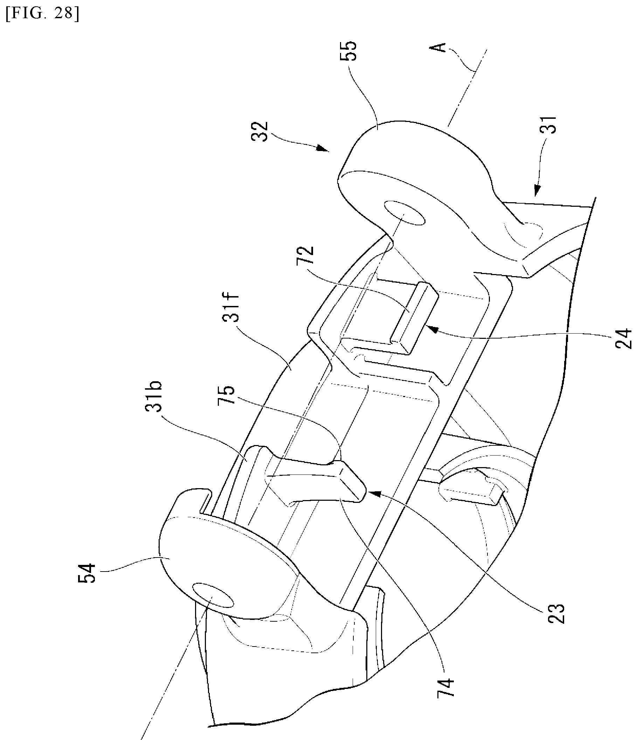

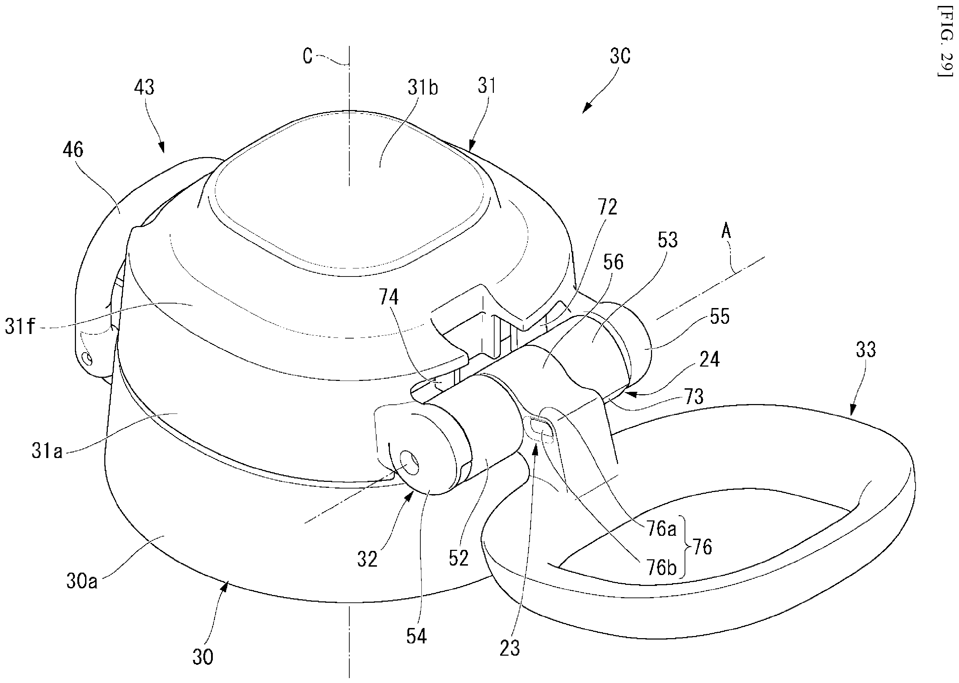

Herein, a modified example of the cap unit 3C of the third embodiment will be described with reference to FIGS. 28 and 29. FIG. 28 is a perspective view depicting a portion of the lid body 31 of the cap unit 3C of the modified example of the third embodiment, and FIG. 29 is a perspective view depicting the cap unit 3C of the modified example of the third embodiment.

As depicted in FIGS. 28 and 29, in this modified example, the storage state holding mechanism 23 has a ring end part 76 provided on the ring member 33, and the ring end part 76 has a locking end part 76a and a locking concave part (lockable part) 76b. Furthermore, with this modified example, the storage state holding mechanism 23 has an elastic protrusion (locking part) 74 that is locked to the locking concave part 76b of the ring member 33 in the stored state after riding up on the locking end part 76a.

The locking end part 76a forms an angle part that connects between an end surface of the ring bearing part 56 of the ring member 33 facing the first side in the hinge axial direction (surface perpendicular to the hinge central axis A), and the surface that connects between the end surface of the ring bearing part 56 that faces the first side in the into axial direction and the end surface that faces the second side (surface parallel to the in central axis A). The locking concave part 76b is formed to be recessed toward the second side in the hinge axial direction from the end surface of the ring bearing part 56 of the ring member 33 facing the first side in the hinge axial direction. The elastic protrusion 74 has an elastically deformable plate shape and extends downward from the rear end part of the lid top wall part 31b of the lid body 31. In the aforementioned third embodiment, a pair of plate surfaces of the elastic piece 71 face the front-rear direction, whereas in this modified example, the pair of plate surfaces of the elastic protrusion 74 face the hinge axial direction (left-right direction).

The elastic protrusion 74 has a protruding part 75 provided at the lower end part of the elastic protrusion 74 and protruding in the hinge axial direction. Specifically, the protruding part 75 protrudes from the lower end part of the elastic protrusion 74 toward the second side in the hinge axial direction. When the ring member 33 is in the stored state, the protruding part 75 is locked to the locking concave part 76b.

When the ring member 33 is rotated by a torque exceeding a prescribed value in the opening direction around the hinge central axis A by an operation of the user or the like from the stored state of the ring member 33, the locking concave part 76b rides up on the protruding part 75 of the elastic protrusion 74 in the hinge circumferential direction. Specifically, in the process of shifting from the stored state of the ring member 33 to the open state of the ring member 33 depicted in FIG. 29, the locking concave part 76b rotates around the hinge central axis A together with the ring member 33. When the ring member 33 is rotated with a torque exceeding a prescribed torque, the locking concave part 76b slides in contact with the protruding part 75 of the elastic protrusion 74 while elastically deforming the elastic protrusion 74 to the first side in the hinge axial direction, so as to ride up on the protruding part 75 around the central axis A of the hinge. Furthermore, the ring member 33 is rotated in the opening direction, and thereby the protruding part 75 of the elastic protrusion 74 slides in contact with the end surface of the ring bearing part 56 of the ring member 33 facing the first side in the hinge axial direction, while the riding up condition of the protruding part 75 and the ring end part 76 is released by riding over the locking end part 76a.

Furthermore, contrary to the above, in the process of returning the ring member 33 from the open state to the stored state, the ring member 33 is rotated to the closing direction side in the hinge circumferential direction, and the protruding part 75 of the elastic protrusion 74 first rides up on the locking end part 76a. Furthermore, when the ring member 33 is rotated to the closing direction, the protruding part 75 of the elastic protrusion 74 will slide in contact with the end surface of the ring bearing part 56 of the ring member 33 facing the first side in the hinge axial direction, and the protruding part 75 is locked so as to be pulled into the locking concave part (locked part) 76b. As a result, the storage state holding mechanism 23 again holds the ring member 33 in the orientation of the stored state. Furthermore, when the protruding part 75 rides up over the locking end part 76a and when the protruding part 75 is locked so as to be pulled into the locking concave part 76b, the user can obtain a sudden resistance feel, and it is possible to recognize the state of the rotation operation or the like by the senses.

In the first embodiment described above, the convex part 20e with a convex shape was inserted into the concave stepped part 16c only at one point. In contrast, in this modified example, the protruding part 75 with a convex shape that has ridden up on the locking end part 76a or the locking concave part 76b will be locked to the locking end part 76a at an interval larger than the locking end part, if the ring member 33 is rotated in the opening direction, or will be locked to the locking concave part 76b if the ring member 33 is rotated to the opening direction. In practice, when the protruding part 75 exceeds the locking end part 76a in the opening direction, the protruding part 75 does not abut against anything and will be exposed to the interval, but this can be restated as being locked to a broad interval. In other words, the position at which the user can obtain a sudden resistance feel and the locked position differ, depending on whether the ring member 33 is rotated in the opening direction or rotated in the closing direction.

Providing the locking end part 76a and the space therebeyond on the end surface of the ring bearing part 56 facing the first side in the hinge axial direction corresponds to providing a plurality of locking concave parts 76b. In other words, by providing the locking concave part 76b at a plurality of positions corresponding to the sliding positions of the end surface of the ring bearing part 56 facing the first side in the hinge axial direction, the locking concave part 76b can be locked with the protruding part 75 at an arbitrary position around the hinge central axis A, and the ring member 33 can be stopped (made stationary). The arbitrary position is conceivably a position where the ring member 33 is in an open state and stands upward in the vertical direction. For example, when the ring member 33 is in an open state and is stopped at a position standing upward in the vertical direction, the user can carry the beverage container 1C by inserting a finger into the ring member 33 and placing the beverage container in a state where the ring member 33 stands upward in the vertical direction.

Furthermore, when the ring member 33 is rotated in the opening direction or the closing direction of the hinge circumferential direction and the protruding part 75 of the elastic protrusion 74 rides up on the locking end part 76a or the locking concave part 76b, the protruding part 75 can be stopped while sliding in contact with the end surface of the ring bearing part 56 that is facing the first side in the hinge axial direction, thus maintaining the riding condition. Specifically, in addition to adjusting the shapes of the end surfaces of the protruding part 75 and the ring bearing part 56 facing the first side in the hinge axial direction, the sliding distance, contact angle, sliding resistance, and the like are adjusted. In particular, smooth stopping can be achieved by adjusting the sliding resistance so as to increase stepwise according to the rotation of the ring member 33 about the central axis A of the hinge.

An arbitrary position of stopping while riding up is conceivably a position where the ring member 33 is in an open state and stands upward in the vertical direction.

As described above in the first to third embodiments and this modified example, when the ring member 33 (11) is rotated in the opening direction or the closing direction side of the hinge circumferential direction, it is possible to appropriately select whether to ride over or to insert (lock) using the convex shape and the concave shape. In the case of the latter, it is possible to appropriately select the position and number of locking positions, whether to slide after riding up, or whether to slide while riding up, or the like. In other words, the shape of the product, the placement space of the structure, the position where the ring member 33 (11) should be stopped, the position where the user should receive the sudden resistance or click, and the like, should be appropriately selected based on the desired function and mutual compatibility. Therefore, for example, it is also possible to apply the structure for riding up as in the Third Embodiment to the First Embodiment. It should be noted that the same applies to the Fourth and Fifth Embodiments as well as the modified examples thereof, which will be described later.

In this modified example as well, the storage state holding mechanism 23 has a click mechanism, and provides a click feeling when the ring member 33 rotates around the hinge central axis A in the opening direction or the closing direction. Furthermore, in this modified example, there is only one set of the open position holding mechanism 24, or in other words, one set of the lid elastic piece (lid lockable part) 72 and the lid protrusion (lid locking part) 73.

The cap unit 3C of the modified example described above can provide the same effects as those of the above-described embodiments.

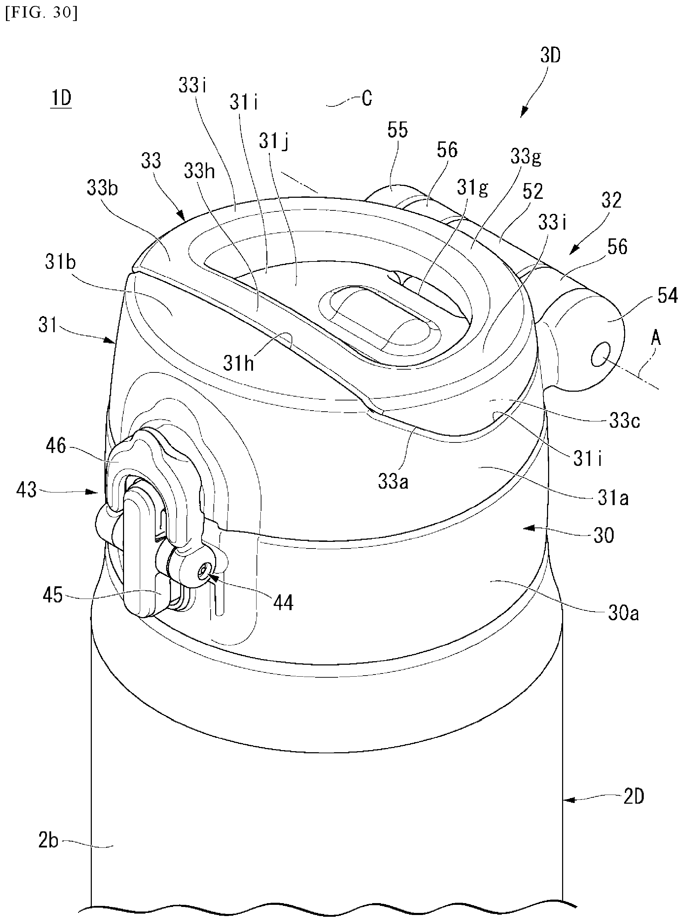

<Fourth Embodiment> Next, a cap unit 3D according to a fourth embodiment of the present invention and a beverage container 1D including the cap unit will be described with reference to FIG. 30 to FIG. 34. Note that, in this embodiment, the same configurations as those in the above-described embodiment may be assigned the same names and symbols, and a description thereof may be omitted.

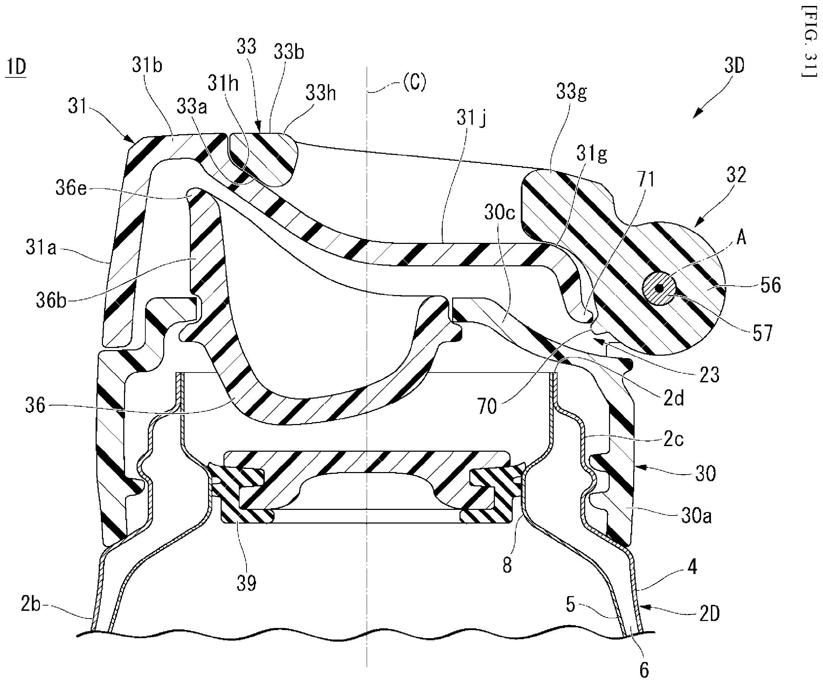

As depicted in FIG. 30 and FIG. 31, the beverage container 1D of the present embodiment includes a cap unit 3D and a cylindrical container main body with bottom 2D to which the cap unit 3D is attached. The cap unit 3D is detachably attached by screwing to the mouth/neck part 2c of the container main body 2D having an open upper part.

FIGS. 30, 31 and 34 show a portion of the cap unit 3D and the beverage container 1D, depicting the closed state (closed position) of the lid body 31 and the stored state of the ring member 33. Note that FIG. 31 shows a longitudinal cross-sectional view parallel to the central axis C at a position shifted to the left from the central axis C. More specifically, FIG. 31 depicts a longitudinal cross-sectional view passing through the ring bearing part 56 located on the second side in the hinge axial direction on the pair of ring bearing parts 56 provided on the ring members 33.

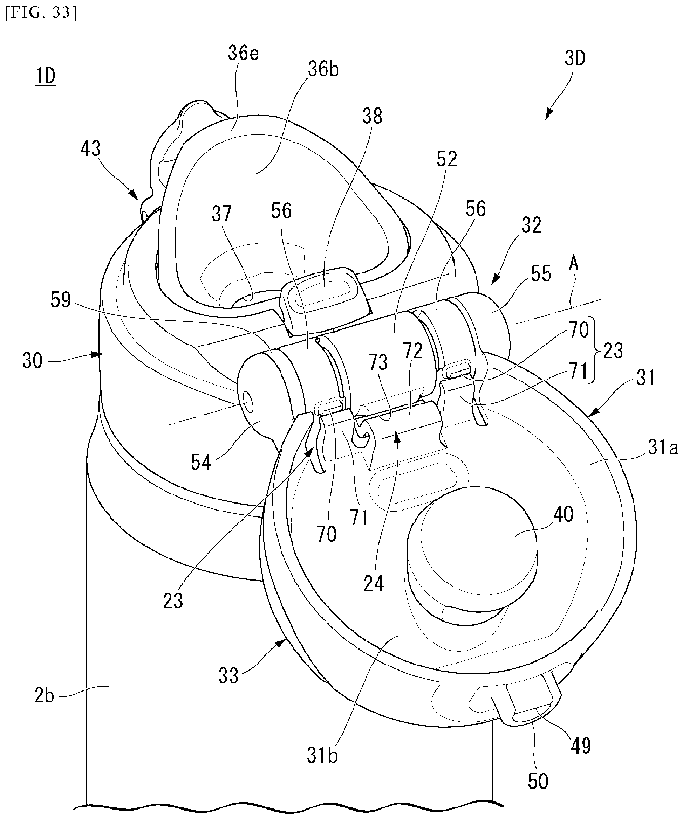

Furthermore, FIG. 32 is a perspective view depicting a portion of the cap unit 3D and the beverage container 1D, depicting the closed state (closed position) of the lid body 31 and the open state of the ring member 33. FIG. 33 is a perspective view depicting a portion of the cap unit 3D and the beverage container 1D, depicting the open state (open position) of the lid body 31 and the stored state of the ring member 33.

As depicted in FIGS. 30 to 32, the lid body 31 of the cap unit 3D has a concave or groove shaped storage concave part from the lid top wall part 31b of the lid body 31, but in the present embodiment, the storage concave part is a recessed part 31j. In other words, the lid top wall part 31b of the lid body 31 has a recessed part (storage concave part) 31j.

The recessed part 31j is provided in a portion other than the front end part of the lid top wall part 31b. The recessed part 31j is concave and recessed below a portion of the lid top wall part 31b other than the recessed part 31j (or in other words, the front end part of the lid top wall part 31b). The recessed part 31j is formed in a notch shape that opens to the upper side, left side, right side and rear side of the lid body 31.

The ring member 33 is provided above the cap main body 30 and above the lid body 31. In this embodiment, the ring member 33 has a substantially semicircular shape. In the stored state of the ring member 33 depicted in FIG. 30, the ring member 33 is provided on the lid top wall part 31b, and more specifically, is provided on the recessed part 31j of the lid top wall part 31. When the ring member 33 is stored, at least a portion of the ring member 33 is stored in the recessed part (storage concave part) 31j.

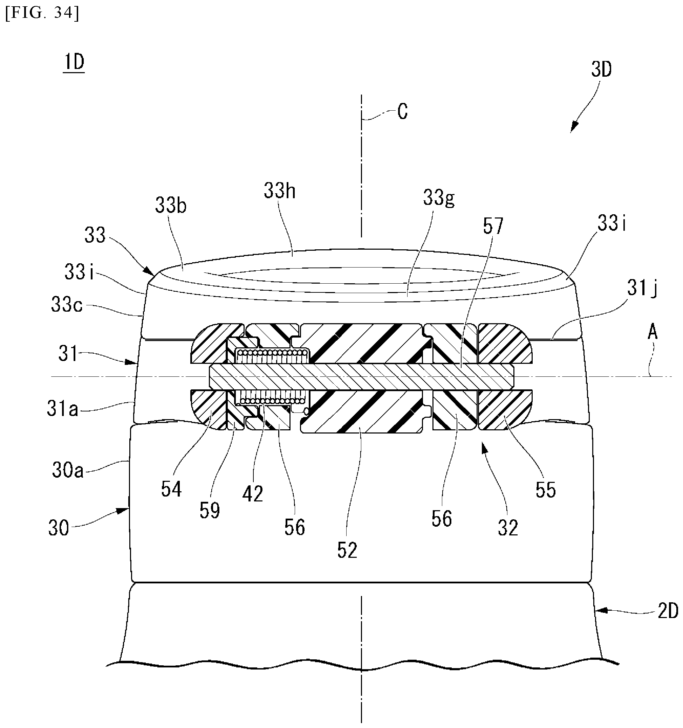

As depicted in FIGS. 30 and 34, when the ring member 33 is in the stored state, the outer peripheral surface 33c of the ring member 33 forms a convex curved surface extending along the circumferential direction facing the left side, the right side and the rear side. The outer peripheral surface 33c of the ring member 33 is provided substantially flush with the lid peripheral wall part 31a so as to be contiguous with the outer peripheral surface of the lid peripheral wall part 31a of the lid body 31 (so as to form one contiguous surface). In other words, the outer peripheral surface 33c of the ring member 33 is provided so as to be contiguous with the lid peripheral wall part 31a of the lid body 31.

Furthermore, as depicted in FIGS. 30 and 31, when the ring member 33 is in the stored state, the upper surface 33b of the ring member 33 is provided so as to be contiguous with the (front end part) of the lid top wall part 31b. Specifically, the upper surface 33b of the ring member 33 and the upper surface of the front end part of the lid top wall part 31b are provided substantially flush so as to form one contiguous surface.

As depicted in FIGS. 30 and 32, the ring member 33 has a ring rear end part 33g connected to the first hinge (hinge) 32, a ring front end part 33h located to the frontmost side when the ring member 33 is in the stored state, and a pair of ring side end parts 33i that connect the ring rear end part 33g and the ring front end part 33h.

Furthermore, at least one or more of the ring rear end part 33g, ring front end part 33h, and the pair of ring side end parts 33i are provided in the recessed part (storage concave part) 31j. Specifically, the recessed part 31j has a rear end placement part 31g where the ring rear end part 33g is provided, a front end placement part 31h where the ring front end part 33h is provided, and a pair of side end placement parts 31i where the pair of ring side end parts 33i are provided. In other words, in the present embodiment, the ring rear end part 33g, the ring front end part 33h, and the pair of ring side end parts 33i are all provided in the recessed part (storage concave part) 31f.

As depicted in FIG. 31, in the present embodiment, the front end part of the peripheral wall part 36b of the opening forming member 36 and the front end placement part 31h of the recessed part (storage concave part) 31j are arranged side by side in the front-rear direction. In other words, the front end part of the peripheral wall part 36b and the front end placement part 31h are arranged so as not to line up in the vertical direction (do not overlap when viewed in the vertical direction). Therefore, the front end part of the drinking opening part 36e located at the upper end opening edge of the peripheral wall part 36b and the ring front end part 33h of the ring member 33 in the stored state are also arranged side by side in the front-rear direction.

Specifically, in the present embodiment, the ring front end part 33h and the front end placement part 31h of the ring member 33 in the stored state are provided rearward of the front end parts of the peripheral wall part 36b and the drinking opening part 36e.

In addition, as depicted in FIG. 31, with the cap unit 3D of the present embodiment, the storage state holding mechanism 23 is provided for holding the orientation of the ring member 33 in a stored state of the ring member 33 facing the lower surface 33a of the ring member 33 and the lid top wall part 31b of the lid body 31. Furthermore, the storage state holding mechanism 23 includes a protrusion (locked part) 70 provided on the ring member 33, and an elastic piece (locking part) 71 locked to the protrusion 70 of the ring member 33 in the stored state. In the present embodiment, a set of storage state holding mechanisms 23, or in other words, a set including the protrusion 70 and the elastic piece 71 are arranged side by side in the hinge axial direction so as to sandwich the cap bearing part 52 of the cap main body 30.

The configuration other than the storage state holding mechanism 23 is the same as that of the above-described third embodiment, so a detailed description thereof will be omitted.

Furthermore, as depicted in FIG. 33, the cap unit 3D of the present embodiment also includes an open position holding mechanism 24 that holds the orientation of the lid body 31 at the open position where the lid 31 is rotated in the opening direction around the hinge central axis A. Furthermore, the open position holding mechanism 24 includes a lid elastic piece (lid lockable part) 72 provided on the lid body 31, and a lid protrusion (lid locking part) 73 that is locked to the lid elastic piece 72 of the lid body 31 in the open position. Note that in this embodiment, only one set of the open position holding mechanism 24, or in other words, the lid elastic piece 72 and the lid protrusion 73 is provided.

The lid protrusion 73 is provided to protrude rearward from the cap bearing parts 52 of the cap main body 30. The lid elastic piece 72 has an elastically deformable substantially U-plate shape, extends downward from the rear end part of the lid top wall part 31b of the lid body 31, and then folds over and faces upward from the rear side. As depicted in FIG. 33, when the lid body 31 is in the open position, the lid elastic piece 72 faces or contacts the lid protrusion 73 with a gap provided from the opening direction side in the hinge circumferential direction.

The dimension along the hinge radial direction between the tip end facing the first hinge 32 side of the lid elastic piece 72 and the hinge central axis A is equal to or less than the dimension along the hinge radial direction between the tip end (rear end) of the lid protrusion 73 and the hinge central axis A.

The configuration other than the open position holding mechanism 24 is the same as that of the above-described third embodiment, so a detailed description thereof will be omitted.

The same effects as the previous embodiment can be obtained by the cap unit 3D and the beverage container 1D of the present embodiment. Furthermore, in the present embodiment, the uppermost front end part of the peripheral wall part 36b of the opening forming member 36 and the front end part 31h of the recessed part (storage concave part) 31j are arranged side by side in the front-rear direction, and in other words, the front end part of the peripheral wall part 36b and the front end placement part 31h are provided so as not to line up in the vertical direction (do not overlap when viewed from the vertical direction). Therefore, the vertical dimension of the entire cap unit 3D is kept small while ensuring the ease of drinking the beverage by securing a large amount of upward protrusion of the front end part of the peripheral wall part 36b (drinking opening part 36e), and therefore compactness can be achieved.

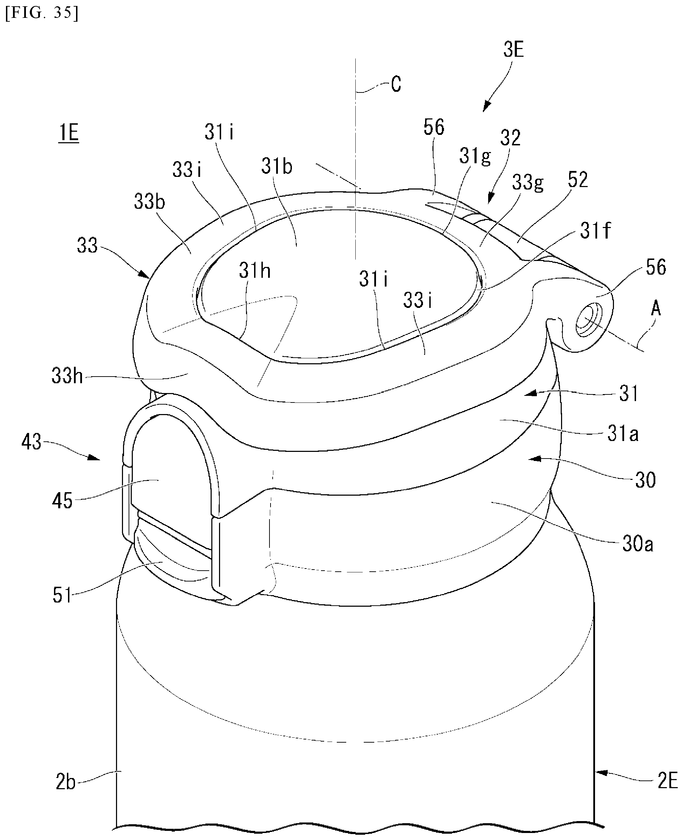

<Fifth Embodiment> Next, a cap unit 3E according to a fifth embodiment of the present invention and a beverage container 1E including the cap unit will be described with reference to FIG. 35 to FIG. 37. Note that, in this embodiment, the same configurations as those in the above-described embodiment may be assigned the same names and symbols, and a description thereof may be omitted.

As depicted in FIG. 35 and FIG. 36, the beverage container 1E of the present embodiment includes a cap unit 3E and a cylindrical container main body with bottom 2E to which the cap unit 3E is attached. The cap unit 3E is detachably attached by screwing to the mouth/neck part 2c of the container main body 2E having an open upper part.

FIGS. 35 to 37 show a portion of the cap unit 3E and the beverage container 1E, depicting the closed state (closed position) of the lid body 31 and the stored state of the ring member 33.

As depicted in FIGS. 35 and 36, the lid body 31 of the cap unit 3E has a concave or groove shaped storage concave part from the lid top wall part 31b of the lid body 31, but in the present embodiment, the storage concave part is the outer peripheral groove 31f. The outer peripheral groove 31f is provided on the outer peripheral part of the lid top wall part 31b and extends in the circumferential direction.

As depicted in FIG. 36, in the present embodiment, the front end part of the peripheral wall part 36b of the opening forming member 36 and the front end placement part 31h of the outer peripheral groove (storage concave part) 31f are arranged side by side in the front-rear direction. In other words, the front end part of the peripheral wall part 36b and the front end placement part 31h are arranged so as not to line up in the vertical direction (do not overlap when viewed in the vertical direction). Therefore, the front end part of the drinking opening part 36e located at the upper end opening edge of the peripheral wall part 36b and the ring front end part 33h of the ring member 33 in the stored state are also arranged side by side in the front-rear direction. In this embodiment, the front end surfaces of the peripheral wall part 36b and the drinking opening part 36e and the ring front end part 33h are arranged to overlap, when viewed from the front-rear direction.

Furthermore, in the present embodiment, the ring front end part 33h and the front end placement part 31h of the ring member 33 in the stored state are provided to the front side of the front end parts of the peripheral wall part 36b and the drinking opening part 36e.

In addition, as depicted in FIG. 36, with the cap unit 3E of the present embodiment, the storage state holding mechanism 25 is provided for holding the orientation of the ring member 33 in a stored state of the ring member 33 facing the lower surface 33a of the ring member 33 and the lid top wall part 31b of the lid body 31. Furthermore, the storage state holding mechanism 25 includes a locking concave part (locked part) 77 provided on the ring member 33, and a locking convex part (locking part) 78 locked to the locking concave part 77 of the ring member 33 in the stored state.

The locking concave part 77 is provided at the ring front end part 33h of the ring member 33. The locking concave part 77 is recessed radially outward (frontward) from the radially inner (rearward) surface of the ring front end part 33h.

The locking convex part 78 is provided on the front end placement part 31h of the outer peripheral groove 31f. The locking convex part 78 is formed to protrude radially outward (frontward) from a side wall of the front end placement part 31h facing radially outward (frontward). When the ring member 33 is in the stored state, the locking concave part 77 and the locking convex part 78 are locked together.

When the ring member 33 is rotated toward the opening direction around the hinge central axis A by a torque exceeding a prescribed value by an operation of the user, the locking concave part 77 rides up on the locking convex part 78 in the hinge circumferential direction.

Specifically, in the process of shifting from the stored state of the ring member 33 to the open state of the ring member 33, the locking concave part 77 rotates around the hinge central axis A together with the ring member 33. When the ring member 33 is rotated by a torque that exceeds a prescribed value, (the lower part of) the locking concave part 77 slides on the locking convex part 78 and can ride up on the locking convex part 78 around the hinge central axis A. During this ride over, the user can receive a click feel, and can recognize by the senses that the ring member 33 is released from the stored state.

Furthermore, in this embodiment, the storage state holding mechanism 25 is provided on the opposite side as the first hinge (hinge) 32 of the cap central axis C in the front-rear direction. In this case, the distance between the storage state holding mechanism 25 and the hinge central axis A is increased. As a result, the storage state holding mechanism 25 has a large distance from the hinge central axis A, which is the fulcrum, to the storage state holding mechanism 25, which is the point of action, and therefore the function of the storage state holding mechanism 25 is maintained to be much more favorable.

Furthermore, contrary to the above, in the process of returning the ring member 33 from the open state to the stored state, the ring member 33 is rotated to the closing direction side in the hinge circumferential direction, and the locking concave part 77 slides in contact with the locking convex part 78, and is locked so as to be pulled into the locking convex part 78. As a result, the storage state holding mechanism 25 again holds the ring member 33 in the orientation of the stored state. Furthermore, when locking occurs, the user can receive a click feeling and can feel that the operation is completed.

It should be noted that instead of the storage state holding mechanisms 21, 23 used in the aforementioned first, third, and fourth embodiments, it is also possible to use a configuration in which the storage state holding mechanism 25 including the locking concave part 77 and the locking convex part 78 is provided. In other words, in the first embodiment, the front end placement part 9f and the ring front end part 11f, and in the third and fourth embodiments, the front end placement part 31h and the ring front end part 33h are provided with the locking concave part 77 and the locking convex part 78, respectively, and thereby a similar effect is demonstrated. Of course, the same effects can be demonstrated by providing the locking concave part 77 and the locking convex part 78 on either the front end placement part (9f, 31h) or the ring front end part (11f, 33h).

As depicted in FIG. 37, the cap unit 3E of this embodiment also includes an open position holding mechanism 24. The open position holding mechanism 24 holds the orientation of the lid body 31 at the open position where the lid body 31 is rotated around the hinge central axis A in the opening direction. The open position holding mechanism 24 includes a lid elastic piece (lid lockable part) 72 provided on the lid body 31, and a lid protrusion (lid locking part) 73 that is locked to the lid elastic piece 72 of the lid body 31 in the open position. Note that in this embodiment, only one set of the open position holding mechanism 24, or in other words, the lid elastic piece 72 and the lid protrusion 73 is provided.

The configuration of the open position holding mechanism 24 is the same as that of the aforementioned third embodiment, so a detailed description thereof will be omitted.

As depicted in FIGS. 35 and 36, in the cap unit 3E of this embodiment, the lid locking mechanism 43 has a slide stopper 51 instead of the ring stopper 46. The slide stopper 51 is provided at the front end part of the peripheral wall part 30a of the cap main body 30. The slide stopper 51 is vertically slidable with respect to the peripheral wall part 30a and held by the peripheral wall part 30a.

By moving the slide stopper 51 downward as depicted in FIG. 36, the locking member 45 can be rotated around the second hinge 44, and the lid body 31 at the closed position can be opened. Furthermore, by moving the slide stopper 51 upward, the rotation of the locking member 45 around the second hinge 44 is restricted, and the lid body 31 is locked at the closed position.

The same effects as the previous embodiment can be obtained by the cap unit 3E and the beverage container 1E of the present embodiment.

Furthermore, in the present embodiment, the uppermost front end part of the peripheral wall part 36b of the opening forming member 36 and the front end part 31h of the outer peripheral groove (storage concave part) 31f are arranged side by side in the front-rear direction, and in other words, the front end part of the peripheral wall part 36b and the front end placement part 31h are provided so as not to line up in the vertical direction (do not overlap when viewed from the vertical direction). Therefore, the vertical dimension of the entire cap unit 3E is kept small while ensuring the ease of drinking the beverage by securing a large amount of upward protrusion of the front end part of the peripheral wall part 36b (drinking opening part 36e), and therefore compactness can be achieved.

In the first and second embodiments described above, the first side in the hinge axial direction corresponds to the tightening side T1 in the circumferential direction, and the second side in the hinge axial direction corresponds to the loosening side T2 in the circumferential direction, but this is not a limitation. The first side in the hinge axial direction can correspond to the loosening side T2 in the circumferential direction, and the second side in the hinge axial direction can correspond to the tightening side T1 in the circumferential direction.

In this case, when a force directed toward the tightening side T1 (the second side in the hinge axial direction) in the circumferential direction in which the cap unit 3A, 3B and the container main body 2A, 2B are screwed together acts on the ring member 11, 33, the force can be absorbed by the elastic deformation of the biasing part 19, 60 to suppress over-tightening of the screwed engagement. Therefore, when the cap unit 3A, 3B is subsequently removed from the container main body 2A, 2B, it is possible to prevent problems such as the screwed state being too tight, affecting operability (cannot be removed).

Furthermore, the biasing parts 19, 60 can bias the ring member 11, 33 toward the first side in the hinge axial direction with respect to the cap main body 9, 30, and toward the second side in the hinge axial direction.

Furthermore, the biasing part 19, 60 may be an elastically deformable member, and for example, elastic members such as silicone rubbers, elastomers, and the like may be used.

In the first embodiment, the first ring bearing part 16 and the enclosure part 20 may be integrally formed without being separated from each other, so long as the effect on the appearance of the biasing part 19 is not taken into consideration. Alternatively, the surface of the first ring bearing part 16 (at least the end surface facing the second side in the hinge axial direction) may be coated with a wear-resistant coating, and the first ring bearing part 16 and the biasing part 19 may be in direct contact with each other.

Furthermore, in the first embodiment, one of the cap bearing part 15 and the first ring bearing part (ring bearing part) 16 (the cap bearing part 15) is provided with the storage concave part 15b, and the other (the first ring bearing part 16) is provided with a bearing sliding surface 16b, and the enclosure sliding surface 20c of the enclosure part 20 slides on the bearing sliding surface 16b. In other words, one may be the first ring bearing part 16, and the other may be the cap bearing part 15.

Furthermore, the first embodiment presented an example where one of the bearing sliding surface 16b and the enclosure sliding surface 20c (the bearing sliding surface 16b) has a concave stepped part 16c, and one of the bearing sliding surface 16b and the enclosure sliding surface 20c (the enclosure sliding surface 20c) has the convex part 20e, but a configuration where these are switched is also acceptable. In other words, one may be the enclosure sliding surface 20c and the other may be the bearing sliding surface 16b.

In addition, the second to fifth embodiments presented an example where the locking member 45 of the lid locking mechanism 43 is rotatable around the second hinge 44, but the invention is not limited to this case. Although not depicted, the locking member may be configured to be slidable in the front-rear direction.

Further, although not particularly depicted, the second embodiment may have a configuration in which the lid bearing part and the ring bearing part of the first hinge (hinge) 32 were arranged adjacent to each other in the hinge axial direction, wherein the first hinge 32 is recessed in one of the lid bearing part and the ring bearing part, extends in the hinge axial direction, and includes a storage concave part for storing the biasing part, and an enclosure part for enclosing the biasing part in the storage concave part.

In this case, the biasing part can be enclosed in the storage concave part by the enclosure part, and thus the biasing part is prevented from being exposed to the outside, and the appearance design of the cap unit 3B and the beverage container 1B can have an attractive appearance. In addition, by enclosing the biasing part, it is possible to prevent the function of the biasing part from deteriorating or becoming unstable due to adhesion of grime, for example.

The aforementioned first to fifth embodiments presented examples where the beverage container 1A, 1B, 1C, 1D, 1E was provided with heat and cold insulating functions by the container main body 2A, 2B, 2C, 2D, 2E having a vacuum insulation structure, but this is not a limitation. In other words, the present invention can be widely applied to a capped container in which the cap unit is detachably attached to the mouth/neck part of the container main body.

The present invention may combine any of the configurations described in the above embodiments and modified examples without departing from the scope of the present invention which is defined by the appended claims.

### DESCRIPTION OF CODES

1A, 1B, 1C, 1D, 1E ... Beverage container, 2c... Mouth/neck part, 2d ... Upper opening part, 2A, 2B, 2C, 2D, 2E... Container main body, 3A, 3B, 3C, 3D, 3E... Cap unit 9, 30 ...Cap main body 9b, 30c ...Top wall part 11, 33 ...Ring member 11a, 33a ...Lower surface 12 ...Hinge 15, 52, 53 ...Cap bearing part 15b, 56b ...Storage concave part 16, 17, 56... Ring bearing part, 16c... Stepped part (lockable part), 18, 57... Hinge shaft, 19, 60... Biasing part 20, 61... Enclosure part, 20e... Convex part (locking part), 21, 22, 23, 25... Storage state holding mechanism, 24... Open position holding mechanism, 31... Lid body, 31b... Lid top wall part, 32... First hinge (hinge), 37... Liquid passage opening, 54, 55... Lid bearing part, 62... Convex part (lockable part), 63... Stepped part (locking part), 70... Protrusion (lockable part), 71... Elastic piece (locking part), 72... Lid elastic piece (lid lockable part), 73... Lid protrusion (lid locking part), 74... Elastic protrusion (locking part), 76b, 77... Locking concave part (locking part), 78... Locking convex part (locking part), A... Hinge central axis, C... Central axis (cap central axis), T1... First side in the circumferential direction (tightening side), T2... Second side in the circumferential direction (loosening side)

## Claims

1. A cap unit (3B-E) attached to a mouth/neck part (2c) of a container main body (2A-E) open on a top part, said cap unit (3B-E) comprising:
a cap main body (30) that closes an upper opening part of the container main body (2B-E) and has a liquid passage opening (37) that communicates with an inner part of the container main body (2BE);
an annular ring member (33) provided above the cap main body (30);
a hinge (12) that connects the ring member to the cap main body ( 30) so as to be freely rotatable around a hinge central axis (A);
a lid body (31) that covers the liquid passage opening (37) provided between the cap main body (30) and the ring member ( 33) in a vertical direction, rotatably connected to the cap main body ( 30) via the hinge (12), in a state of being biased in an opening direction around the hinge central axis (A); and
an open position holding mechanism (24) for holding the orientation of the lid part (31) in an open position where the lid body (31) freely rotates in the opening direction around the hinge central axis (A), the cap unit (3B-E) being **characterised in that** it further comprises a storage state holding mechanism (22) that holds the orientation of the ring member (33) in a storage state of the ring member (33) in which the lower surface (33a) of the ring member (33) and a lid top wall part (31b) of the lid body (31) face each other, even when the container main body (3B-E) is placed in an inverted position.

2. The cap unit (3B-E) according to Claim 1, the open position holding mechanism (24) comprising:
a lid lockable part (72) provided on the lid body (31); and
a lid locking part (73) that is locked to the lid lockable part (72) of the lid body (31) in the open position;
wherein the lid lockable part (72) rides up on the lid locking part (73) when the lid body (31) is rotated toward the closing direction about the hinge central axis (A) at a prescribed torque or higher.

3. The cap unit (3B-E) according to Claim 1 or Claim 2, wherein the storage state holding mechanism (22) comprises a stepped part (63) provided by an end surface of either the cap main body (30) or the ring member ( 33) and a convex part (62) capable of riding up over the stepped part (63) around the hinge central axis (A), such that the ring member (33) can be stopped at any position around the hinge central axis (A).

4. The cap unit (3B-E) according to Claim 1 or Claim 2, wherein the storage state holding mechanism (22) is provided on the side opposite to the hinge (12) with respect to the central axis of the cap in the front-rear direction.

5. The cap unit (3B-E) according to Claim 1 or Claim 2, wherein the lower surface (33a) of the ring member (33) has a shape that follows the shape of the lid top wall part (31b) of the lid body (31) that faces the lower surface (33a).

6. The cap unit (3B-E) according to Claim 5, wherein when the ring member ( 33) is in the storage state, the upper surface (33b) of the ring member ( 33) is provided so as to be contiguous with the lid top wall part (31b) of the lid body (31), and an outer peripheral surface (33c) of the ring member ( 33) is contiguous with the lid peripheral wall part (31a) of the lid body (31).

7. A beverage container (1B-E) comprising:
the cap unit (3B-E) according to Claim 1 or Claim 2; and
the container main body (2B-E) to which the cap unit (3B-E) is attached.

## Patentansprüche

1. Kappeneinheit (3B-E), die an einem Mund-/Halsteil (2c) eines Behälterhauptkörpers (2A-E) verbunden ist, der an einem oberen Teil offen ist, wobei die Kappeneinheit (3B-E) Folgendes umfasst:
einen Kappenhauptkörper (30), der ein oberes Öffnungsteil des Behälterhauptkörpers (2B-E) verschließt und eine Flüssigkeitsdurchgangsöffnung (37) aufweist, die mit einem inneren Teil des Behälterhauptkörpers (2B-E) kommuniziert;
ein ringförmiges Element (33), das über dem Kappenhauptkörper (30) bereitgestellt ist;
ein Scharnier (12), das das Ringelement mit dem Kappenhauptkörper (30) so verbindet, dass dieses frei um eine Zentralachse (A) des Scharniers drehbar ist;
einen Deckelkörper (31), der die Flüssigkeitsdurchgangsöffnung (37) bedeckt, die zwischen dem Kappenhauptkörper (30) und dem Ringelement (33) in vertikaler Richtung bereitgestellt ist, drehbar mit dem Kappenhauptkörper (30) über das Scharnier (12), in einem Zustand, in dem er in eine Öffnungsrichtung um die Zentralachse (A) des Scharniers vorgespannt ist, verbunden ist; und
einen Öffnungsposition-Haltemechanismus (24) zum Halten der Ausrichtung des Deckelteils (31) in einer Position mit offener Achse (A), bei der der Deckelkörper (31) sich frei in der Öffnungsrichtung um die Zentralachse (A) des Scharniers dreht, wobei die Kappeneinheit (3B-E) **dadurch gekennzeichnet ist, dass** sie weiter einen Lagerzustand-Haltemechanismus (22) umfasst, der die Ausrichtung des Ringelements (33) in einem Lagerzustand des Ringelements (33) hält, bei dem die untere Fläche (33a) des Ringelements (33) und ein oberes Deckelwandteil (31b) des Deckelkörpers (31) einander zugewandt sind, selbst, wenn der Behälterhauptkörper (3B-E) in einer umgedrehten Position platziert ist.

2. Kappeneinheit (3B-E) nach Anspruch 1, wobei der Öffnungsposition-Haltemechanismus (24) umfasst:
ein verriegelbares Deckelteil (72), das am Deckelkörper (31) bereitgestellt ist; und
ein Deckelverriegelungsteil (73), das am verriegelbaren Deckelteil (72) des Deckelkörpers (31) in der offenen Position verriegelt ist;
wobei das verriegelbare Deckelteil (72) auf dem Deckelverriegelungsteil (73) aufsitzt, wenn der Deckelkörper (31) um die Zentralachse des Scharniers (A) mit einem vorgegebenen Drehmoment oder höher in die Verschlussrichtung gedreht wird.

3. Kappeneinheit (3B-E) nach Anspruch 1 oder Anspruch 2, wobei der Lagerzustand-Haltemechanismus (22) ein gestuftes Teil (63) umfasst, das an einer Endfläche entweder des Kappenhauptkörpers (30) oder des Ringelements (33) bereitgestellt ist, und ein konvexes Teil (62), das imstande ist, über dem gestuften Teil (63) um die Zentralachse des Scharniers (A) herum aufzusitzen, sodass das Ringelement (33) in jeder Position um die Zentralachse des Scharniers (A) gestoppt werden kann.

4. Kappeneinheit (3B-E) nach Anspruch 1 oder Anspruch 2, wobei der Lagerzustand-Haltmechanismus (22) in Bezug auf die Zentralachse der Kappe in der Vorwärts-Rückwärts-Richtung an der Seite gegenüber dem Scharnier (12) bereitgestellt ist.

5. Kappeneinheit (3B-E) nach Anspruch 1 oder Anspruch 2, wobei die untere Fläche (33a) des Ringelements (33) eine Form aufweist, die der Form des oberen Deckelwandteils (31b) des Deckelkörpers (31) folgt, das der unteren Fläche (33a) zugewandt ist.

6. Kappeneinheit (3B-E) nach Anspruch 5, wobei, wenn das Ringelement (33) im Lagerzustand ist, die obere Fläche (33b) des Ringelements (33) so bereitgestellt ist, dass sie an das obere Deckelwandteil (31b) des Deckelkörpers (31) angrenzt, und eine äußere Umfangsfläche (33c) des Ringelements (33c) an das Deckelumfangswandteil (31a) des Deckelkörpers (31) angrenzt.

7. Getränkebehälter (1B-E), umfassend:
die Kappeneinheit (3B-E) nach Anspruch 1 oder Anspruch 2; und
den Behälterhauptkörper (2B-E), an den die Kappeneinheit (3B-E) befestigt ist.

## Revendications

1. Capuchon (3B-E)
fixé à une partie embouchure/col (2c) d'un corps principal (2A-E) de récipient ouvert sur une partie supérieure, ledit capuchon (3B-E) comprenant :
un corps principal (30) de capuchon, qui ferme une partie d'ouverture supérieure du corps principal (2B-E) de récipient et présente une ouverture (37) de passage de liquide qui communique avec une partie interne du corps principal (2B-E) de récipient;
un élément annulaire (33) étant placé au-dessus du corps principal (30) de capuchon ;
une charnière (12) qui raccorde l'élément annulaire au corps principal (30) de capuchon de manière à pouvoir tourner librement
autour d'un axe central de charnière (A) ;
un corps de couvercle (31) qui couvre l'ouverture (37) de passage de liquide aménagée entre le corps principal (30) de capuchon et l'élément annulaire (33) dans une direction verticale, raccordé de manière rotative au corps principal (30) de capuchon par l'intermédiaire de la charnière (12), dans un état où il est précontraint dans une direction d'ouverture autour de l'axe central de charnière (A) ;
et
un mécanisme (24) de maintien de position ouverte destiné à maintenir l'orientation de la partie couvercle (31) dans une position d'axe A ouverte dans laquelle le corps de couvercle (31) tourne librement dans la direction d'ouverture autour de l'axe central de charnière (A), le capuchon (3B-E) étant **caractérisé en ce qu'**il comprend en outre un mécanisme (22) de maintien d'état de stockage qui maintient l'orientation de l'élément annulaire (33) dans un état de stockage de l'élément annulaire (33) dans lequel la surface inférieure (33a) de l'élément annulaire (33) et une partie (31b) formant paroi supérieure de couvercle du corps de couvercle (31) sont en face l'une de l'autre, même lorsque le corps principal (3B-E) de récipient est placé dans une position inversée.

2. Capuchon (3B-E)
selon la revendication 1, le mécanisme (24) de maintien de position ouverte comprenant :
une partie verrouillable (72) de couvercle, prévue sur le corps de couvercle (31) ; et
une partie (73) de verrouillage de couvercle, qui est verrouillée à la partie verrouillable (72) de couvercle du corps de couvercle (31) dans la position ouverte ;
dans lequel la partie verrouillable (72) de couvercle remonte sur la partie (73) de verrouillage de couvercle lorsque le corps de couvercle (31) est tourné vers la direction de fermeture autour de l'axe central de charnière (A) selon un couple prescrit ou supérieur.

3. Capuchon (3B-E)
selon la revendication 1 ou la revendication 2, dans lequel le mécanisme (22) de maintien d'état de stockage comprend une partie étagée (63) aménagée par une surface d'extrémité du corps principal (30) de capuchon ou de l'élément annulaire (33) et une partie convexe (62) apte à remonter sur la partie étagée (63) autour de l'axe central de charnière (A), de telle sorte que l'élément annulaire (33) puisse être arrêté au niveau de toute position quelconque autour de l'axe central de charnière (A).

4. Capuchon (3B-E)
selon la revendication 1 ou la revendication 2, dans lequel le mécanisme (22) de retenue d'état de stockage est aménagé sur le côté opposé à la charnière (12) par rapport à l'axe central du capuchon dans la direction avant-arrière.

5. Capuchon (3B-E) selon la revendication 1 ou la revendication 2, dans lequel la surface inférieure (33a) de l'élément annulaire (33) présente une forme qui suit la forme de la partie (31b) formant paroi supérieure de couvercle du corps de couvercle (31) qui est en face de la surface inférieure (33a).

6. Capuchon (3B-E) selon la revendication 5, dans lequel l'élément annulaire (33) est dans l'état de stockage, la surface supérieure (33b) de l'élément annulaire (33) est fournie de manière à être contigüe avec la partie (31b) formant paroi supérieure de couvercle du corps de couvercle (31), et une surface périphérique externe (33c) de l'élément annulaire (33) est contigüe à la partie (31a) formant paroi périphérique de couvercle du corps de couvercle (31).

7. Récipient de boisson (1B-E) comprenant : le capuchon (3B-E) selon la revendication 1 ou la revendication 2 ; et le corps principal (2B-E) de récipient auquel le capuchon (3B-E) est fixé.
